# EUROPEAN PATENT APPLICATION

(11) **EP 4 842 110 A1**
(43) Date of publication of application: **18.11.2026**
(21) Application number: 25755182.0
(22) Date of filing: 14.02.2025
(51) Int. Cl.: H04W 72/1268, H04W 74/0833, H04W 74/00, H04W 72/0453, H04L 5/14, H04L 5/00

(54) **METHOD AND APPARATUS FOR TRANSMITTING MSG3 PUSCH IN WIRELESS COMMUNICATION SYSTEM**

(30) Priority: 15.02.2024 KR 20240021970
(71) Applicant: Samsung Electronics Co., Ltd., Suwon-si, Gyeonggi-do 16677 (KR)
(72) Inventor: CHOI, Kyungjun, Suwon-si, Gyeonggi-do 16677 (KR); JI, Hyoungju, Suwon-si, Gyeonggi-do 16677 (KR)
(74) Representative: Gulde & Partner
(86) International application number: PCT/KR2025/099365
(87) International publication number: WO 2025/174185

(57) **Abstract**

The present disclosure provides a random access method in a wireless communication system. Specifically, a method performed by a terminal in a wireless communication system comprises the steps of: transmitting a random access preamble; receiving a random access response (RAR) in response to the random access preamble, wherein the RAR includes an uplink (UL) grant for scheduling physical uplink shared channel (PUSCH) transmission; determining frequency domain resource allocation for the PUSCH transmission on the basis of the UL grant; and transmitting a message 3 (Msg3) on a PUSCH on the basis of the frequency domain resource allocation, wherein if the PUSCH transmission is scheduled in a UL frequency subband within a downlink symbol, resource block (RB) numbering starts from the first RB of the UL frequency subband, and the maximum number of RBs for the frequency domain resource allocation may be determined on the basis of the number of RBs in an initial UL bandwidth part (BWP).

## Description

### Technical Field

The present disclosure relates to an operation of a terminal and a base station in a wireless communication system. Specifically, the present disclosure relates to a method and apparatus for performing message 3 (Msg3) physical uplink shared channel (PUSCH) transmission.

### Background Art

5th generation (5G) mobile communication technologies define broad frequency bands such that high transmission rates and new services are possible, and can be implemented not only in "Sub 6GHz" bands such as 3.5 GHz, but also in "Above 6 GHz" bands referred to as mmWave including 28 GHz and 39 GHz. In addition, it has been considered to implement 6th generation (6G) mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

With the development of wireless communication systems as described above, various services can be provided, and accordingly, solutions are required to provide these services smoothly.

### Disclosure

### Technical Problem

Embodiments of the present disclosure are intended to provide an apparatus and a method capable of effectively providing services in a mobile communication system.

Specifically, embodiments of the present disclosure are intended to provide a method for performing a random access procedure in subband non-overlapping full duplex (SBFD) and an apparatus therefor.

In addition, embodiments of the present disclosure are intended to provide a method for determining resources for physical uplink control channel (PUCCH) transmission in an SBFD uplink (UL) subband and an apparatus therefor.

### Technical Solution

A method performed by a terminal in a wireless communication system according to an aspect of the present disclosure may comprise: transmitting a random access preamble; receiving a random access response (RAR) in response to the random access preamble, wherein the RAR comprises an uplink (UL) grant for scheduling physical uplink shared channel (PUSCH) transmission; determining frequency domain resource allocation for the PUSCH transmission based on the UL grant; and transmitting message 3 (Msg3) in a PUSCH based on the frequency domain resource allocation, and in case that the PUSCH transmission is scheduled in a UL frequency subband within downlink symbols, resource block (RB) numbering may start from a first RB of the UL frequency subband, and a maximum number of RBs for the frequency domain resource allocation may be determined based on a number of RBs within an initial UL bandwidth part (BWP).

A method performed by a base station in a wireless communication system according to another aspect of the present disclosure may comprise: receiving, from a terminal, a random access preamble; transmitting, to the terminal, a random access response (RAR) in response to the random access preamble, wherein the RAR comprises an uplink (UL) grant for scheduling physical uplink shared channel (PUSCH) transmission; and receiving, from the terminal, message 3 (Msg3) in a PUSCH, wherein frequency domain resource allocation for the PUSCH may be based on the UL grant, and in case that the PUSCH transmission is scheduled in a UL frequency subband within downlink symbols, resource block (RB) numbering may start from a first RB of the UL frequency subband, and a maximum number of RBs for the frequency domain resource allocation may be determined based on a number of RBs within an initial UL bandwidth part (BWP).

In a wireless communication system according to another aspect of the present disclosure, a terminal may comprise a transceiver and a processor operatably connected to the transceiver, and the processor may be configured to: transmit a random access preamble, receive a random access response (RAR) in response to the random access preamble, wherein the RAR comprises an uplink (UL) grant for scheduling physical uplink shared channel (PUSCH) transmission; determine frequency domain resource allocation for the PUSCH transmission based on the UL grant; and transmit message 3 (Msg3) in a PUSCH based on the frequency domain resource allocation, and in case that the PUSCH transmission is scheduled in a UL frequency subband within downlink symbols, resource block (RB) numbering may start from a first RB of the UL frequency subband, and a maximum number of RBs for the frequency domain resource allocation may be determined based on a number of RBs within an initial UL bandwidth part (BWP).

In a wireless communication system according to another aspect of the present disclosure, a base station may comprise a transceiver and a processor operatably connected to the transceiver, and the processor may be configured to: receive, from a terminal, a random access preamble; transmit, to the terminal, a random access response (RAR) in response to the random access preamble, wherein the RAR comprises an uplink (UL) grant for scheduling physical uplink shared channel (PUSCH) transmission; and receive, from the terminal, message 3 (Msg3) in a PUSCH, wherein frequency domain resource allocation for the PUSCH may be based on the UL grant, and in case that the PUSCH transmission is scheduled in a UL frequency subband within downlink symbols, resource block (RB) numbering may start from a first RB of the UL frequency subband, and a maximum number of RBs for the frequency domain resource allocation may be determined based on a number of RBs within an initial UL bandwidth part (BWP).

### Advantageous Effects

According to an embodiment of the present disclosure, services may be effectively provided in a mobile communication system.

In addition, according to an embodiment of the present disclosure, resources for performing a random access procedure in SBFD are determined and the random access procedure may be performed according to the determined resources.

In addition, according to an embodiment of the present disclosure, resources for PUCCH transmission in a UL subband of SBFD may be determined.

### Description of Drawings

FIG. 1 is a diagram illustrating a basic structure of a time-frequency domain, which is a radio resource area where data or a control channel is transmitted in a wireless communication system according to an embodiment of the present disclosure.
FIG. 2 is a diagram illustrating a structure of a frame, a subframe, and a slot in a wireless communication system according to an embodiment of the present disclosure.
FIG. 3 is a diagram illustrating an example of bandwidth part configuration in a wireless communication system according to an embodiment of the present disclosure.
FIG. 4 is a diagram illustrating an example for a control resource set where a downlink control channel is transmitted in a wireless communication system according to an embodiment of the present disclosure.
FIG. 5 is a diagram showing an example of basic units of time and frequency resources configuring a downlink control channel in a wireless communication system according to an embodiment of the present disclosure.
FIG. 6 is a diagram for explaining a method in which a base station and a UE transmit and receive data considering a downlink data channel and rate matching resources in a wireless communication system according to an embodiment of the present disclosure.
FIG. 7 is a diagram illustrating an example of frequency domain resource allocation of PDSCH in a wireless communication system according to an embodiment of the present disclosure.
FIG. 8 is a diagram illustrating an example of time domain resource allocation of PDSCH in a wireless communication system according to an embodiment of the present disclosure.
FIG. 9 is a diagram illustrating an example of time domain resource allocation according to subcarrier spacing of a data channel and a control channel in a wireless communication system according to an embodiment of the present disclosure.
FIG. 10 is a diagram illustrating a radio protocol structure of a base station and a UE in single cell, carrier aggregation, and dual connectivity situations in a wireless communication system according to an embodiment of the present disclosure.
FIG. 11 illustrates a random access procedure in a wireless communication system according to an embodiment of the present disclosure.
FIG. 12 is a diagram illustrating an example in which SBFD is operated in a TDD band of a wireless communication system according to an embodiment of the present disclosure.
FIG. 13 is a diagram illustrating valid RACH occasions in TDD configuration and SBFD configuration according to an embodiment of the present disclosure.
FIG. 14 is a diagram illustrating a reference UL BWP according to an embodiment of the present disclosure.
FIG. 15 illustrates a case where SBFD resources or a UL subband are not included in a reference UL BWP according to an embodiment of the present disclosure.
FIG. 16 is a diagram illustrating an operation flowchart of a UE according to an embodiment of the present disclosure.
FIG. 17 is a diagram illustrating an operation flowchart of a UE according to an embodiment of the present disclosure.
FIG. 18 is a diagram illustrating a structure of a terminal in a wireless communication system according to an embodiment of the present disclosure.
FIG. 19 is a diagram illustrating a structure of a base station in a wireless communication system according to an embodiment of the present disclosure.

### Mode for Disclosure

Hereinafter, embodiments of the disclosure will be described in detail with reference to the accompanying drawings.

When describing the embodiments, a description of technical contents, which are well known in the technical field to which the present disclosure pertains but are not directly related to the present disclosure, will be omitted. This is to more clearly describe the subject matter of the present disclosure without obscuring the subject matter by omitting any unnecessary description.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

Advantages and features of the present disclosure and methods of achieving the advantages and features will be clear with reference to exemplary embodiments described in detail below together with the accompanying drawings. However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Throughout the specification, the same reference numerals denote the same components. In addition, in the description of the present disclosure, the specific descriptions of related functions or configurations will be omitted when it is determined that the specific descriptions may unnecessarily obscure the subject matter of the present disclosure. In addition, the terms used herein are defined considering the functions in the present disclosure and may vary depending on the intention or usual practice of a user or an operator. Therefore, the definitions should be made based on the entire contents of the present specification.

Hereinafter, a base station is an entity that performs resource allocation of UEs, and may be at least one of gNode B, eNode B, Node B, a base station (BS), a radio access unit, a base station controller, or a node on the network. A terminal may include user equipment (UE), a mobile station (MS), a cellular phone, a smartphone, a computer, or a multimedia system capable of performing communication functions. In the present disclosure, a downlink (DL) is a wireless transmission path of a signal transmitted by a base station to a UE, and an uplink (UL) is a wireless transmission path of a signal transmitted by a UE to a base station. Hereinafter, embodiments of the present disclosure are described using a 5G system as an example, but the embodiments of the present disclosure may be applied to other communication systems having a similar technical background or a channel form. For example, LTE or LTE-A mobile communication and mobile communication technologies developed after 5G may be included therein. In addition, the present disclosure may be applied to other communication systems with some modifications without substantially departing from the scope of the present disclosure as determined by those skilled in the art. Contents in the present disclosure are applicable in frequency division duplex (FDD) and time division duplex (TDD) systems.

Herein, it will be understood that each block of flowchart illustrations, and combinations of blocks in the flowchart illustrations, may be performed by computer program instructions. These computer program instructions may be loaded onto a processor of a general purpose computer, special purpose computer, or other programmable data processing apparatus to produce a machine, such that the instructions, which perform through the processor of the computer or other programmable data processing apparatus, create means for performing the functions specified in the flowchart block(s). These computer program instructions may also be stored in a non-transitory computer usable or computer-readable memory that may direct a computer or other programmable data processing apparatus to function in a particular manner, such that the instructions stored in the computer usable or computer-readable memory produce an article of manufacture including instruction means that perform the function specified in the flowchart block(s). The computer program instructions may also be loaded onto a computer or other programmable data processing apparatus to cause a series of operational steps to be performed on the computer or other programmable data processing apparatus to produce a computer executed process such that the instructions that perform on the computer or other programmable data processing apparatus provide steps for executing the functions specified in the flowchart block(s).

Further, each block may represent a module, segment, or portion of code, which includes one or more executable instructions for executing the specified logical function(s). It should also be noted that in some alternative implementations, the functions noted in the blocks may occur out of the order. For example, two blocks shown in succession may in fact be performed substantially concurrently or the blocks may sometimes be performed in the reverse order, depending upon the functionality involved.

As used in embodiments of the disclosure, a "~unit" may refer to a software element or a hardware element, such as a field programmable gate array (FPGA) or an application specific integrated circuit (ASIC), which performs a predetermined function. However, the term including the word "~unit" does not always have a meaning limited to software or hardware. The "~unit" may be constructed either to be stored in an addressable storage medium or to execute one or more processors. Therefore, the "~unit" includes, for example, software elements, object-oriented software elements, components such as class elements and task elements, processes, functions, properties, procedures, sub-routines, segments of a program code, drivers, firmware, micro-codes, circuits, data, database, data structures, tables, arrays, and parameters. The components and functions provided by the "~unit" may be either combined into a smaller number of components and a "~unit," or divided into additional components and a "~unit." Moreover, the components and "~units" may be implemented to reproduce one or more central processing units (CPUs) within a device or a security multimedia card. Further, in the embodiments, the "~unit" may include one or more processors.

Wireless communication systems are evolving from providing early voice-oriented services into broadband wireless communication systems that provide high-speed, high-quality packet data services, such as communication standards including high speed packet access (HSPA), LTE (long term evolution or evolved universal terrestrial radio access (E-UTRA)), LTE-advanced (LTE-A), and LTE-Pro of 3GPP, high rate packet data (HRPD) and ultra mobile broadband (UMB) of 3GPP2, and 802.16e of IEEE.

As a representative example of the broadband wireless communication systems, an LTE system employs an orthogonal frequency division multiplexing (OFDM) scheme in downlink (DL), and employs a single carrier frequency division multiple access (SC-FDMA) scheme in uplink (UL). Uplink means a radio link through which a terminal (user equipment (UE) or mobile station (MS)) transmits data or a control signal to a base station (eNode B or base station (BS)), and downlink means a radio link through which the base station transmits data or a control signal to the UE. The multiple access schemes as described above may distinguish data or control information of each user by allocating and operating time-frequency resources for carrying the data or control information for each user so as not to overlap with each other, that is, so that orthogonality is established.

As a future communication system after LTE, that is, a 5G communication system should be able to freely reflect various requirements of users and service providers, and thus services satisfying various requirements simultaneously should be supported. Services considered for the 5G communication system include enhanced mobile broadband (eMBB), massive machine type communication (mMTC), ultra reliability low latency communication (URLLC), and the like.

eMBB aims to provide a data transmission rate further improved than a data transmission rate supported by existing LTE, LTE-A, or LTE-Pro. For example, in the 5G communication system, eMBB should be able to provide a peak data rate of 20Gbps in downlink and a peak data rate of 10Gbps in uplink from a perspective of one base station. In addition, the 5G communication system should provide an increased user perceived data rate of a UE while providing the peak data rate. In order to satisfy such requirements, improvements of various transmission and reception technologies including a further improved multi input multi output (MIMO) transmission technology are required. In addition, while LTE transmits a signal using a maximum 20MHz transmission bandwidth in a 2GHz band, the 5G communication system may satisfy a data transmission rate required in the 5G communication system by using a frequency bandwidth wider than 20MHz in a frequency band of 3 to 6GHz or 6GHz or higher.

Simultaneously, mMTC is being considered to support application services such as internet of thing (IoT) in the 5G communication system. mMTC requires support for access of large-scale UEs within a cell, improvement of coverage of a UE, improved battery time, reduction of cost of a UE, and the like in order to efficiently provide the internet of thing. Since the Internet of Things will be attached to various sensors and devices to provide communication functions, a large number of UEs (e.g., 1,000,000 UEs/km²) need to be supported within a cell. In addition, as a UE supporting mMTC is highly likely to be located in a shadow area that a cell does not cover, such as a basement of a building, due to characteristics of a service, the UE may require wider coverage compared to other services provided in the 5G communication system. A UE supporting mMTC should be configured as a low-cost UE, and since it is difficult to frequently exchange a battery of the UE, a very long battery life time such as 10 to 15 years may be required.

Finally, in a case of URLLC, it is a cellular-based wireless communication service used for a specific purpose (mission-critical). For example, services used for remote control for a robot or machinery, industrial automation, an unmaned aerial vehicle, remote health care, emergency alert, and the like may be considered. Therefore, communication provided by URLLC should provide very low latency and very high reliability. For example, a service supporting URLLC should satisfy an air interface latency smaller than 0.5 milliseconds, and simultaneously has requirements of a packet error rate of 10⁻⁵ or less. Therefore, for the service supporting URLLC, the 5G system should provide a transmit time interval (TTI) smaller than other services, and simultaneously design requirements for allocating wide resources in a frequency band may be required to secure reliability of a communication link.

Three services of 5G, that is, eMBB, URLLC, and mMTC, may be multiplexed and transmitted in one system. In this case, in order to satisfy different requirements of each of the services, different transmission and reception techniques and transmission and reception parameters may be used between the services. Of course, 5G is not limited to the aforementioned three services.

### [NR Time-Frequency Resource]

Hereinafter, a frame structure of a 5G system will be described more specifically with reference to the drawings.

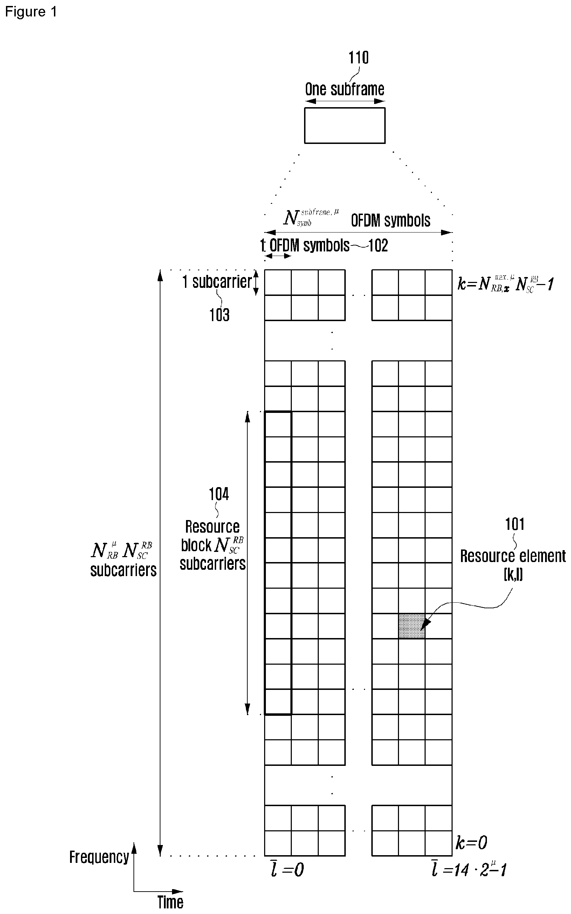

FIG. 1 is a diagram illustrating a basic structure of a time-frequency domain, which is a radio resource area where data or a control channel is transmitted in a wireless communication system according to an embodiment of the present disclosure.

With reference to FIG. 1, a horizontal axis represents a time domain, and a vertical axis represents a frequency domain. A basic unit of resources in time and frequency domains is a resource element (RE) 101, and may be defined as one orthogonal frequency division multiplexing (OFDM) symbol 102 on a time axis and one subcarrier 103 on a frequency axis. In the frequency domain, ${N}_{SC}^{RB}$ (for example, 12) consecutive REs may configure one resource block (RB) 104. In the time domain, one subframe 110 may be configured with one or a plurality of slots.

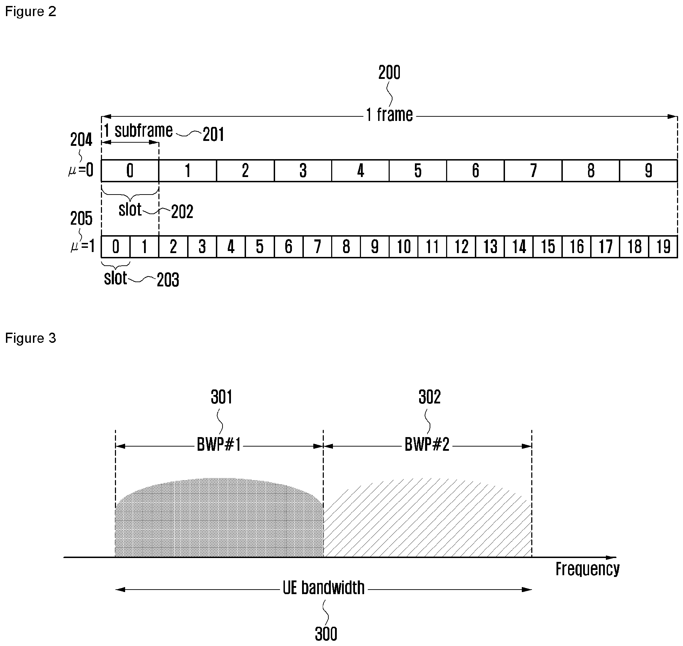

FIG. 2 is a diagram illustrating a structure of a frame, a subframe, and a slot in a wireless communication system according to an embodiment of the present disclosure.

In FIG. 2, an example of structures of a frame 200, a subframe 201, and slots 202 and 203 is illustrated. One frame 200 may be defined as 10ms. One subframe 201 may be defined as 1ms, and therefore, one frame 200 may be configured with a total of 10 subframes 201. One slot 202 or 203 may be defined as 14 OFDM symbols (that is, a number of symbols per slot ( ${N}_{symb}^{slot}$ ) = 14). One subframe 201 may be configured with one or a plurality of slots 202 and 203, and a number of slots 202 and 203 per one subframe 201 may be different according to a configuration value µ 204 and 205 for subcarrier spacing. In the example of FIG. 2, cases where subcarrier spacing configuration values are µ=0 204 and µ=1 205 are illustrated. In a case where µ=0 204, one subframe 201 may be configured with one slot 202, and in a case where µ=1 205, one subframe 201 may be configured with two slots 203. That is, a number of slots per one subframe ( ${N}_{slot}^{subframe , μ}$) may change according to the configuration value µ for the subcarrier spacing, and accordingly, a number of slots per one frame ( ${N}_{slot}^{frame , μ}$) may change. ${N}_{slot}^{subframe , μ}$ and ${N}_{slot}^{frame , μ}$ according to each subcarrier spacing configuration µ may be defined as Table 1 below.

**Table 1**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

### [Bandwidth Part (BWP)]

Next, configuration of a bandwidth part (BWP) in a 5G communication system will be described in detail with reference to the drawings.

FIG. 3 is a diagram illustrating an example of bandwidth part configuration in a wireless communication system according to an embodiment of the present disclosure.

FIG. 3 shows an example in which UE bandwidth 300 is configured with two bandwidth parts, that is, bandwidth part #1 (BWP#1) 301 and bandwidth part #2 (BWP#2) 302. A base station may configure one or a plurality of bandwidth parts for a UE, and may configure information such as Table 2 below for each bandwidth part.

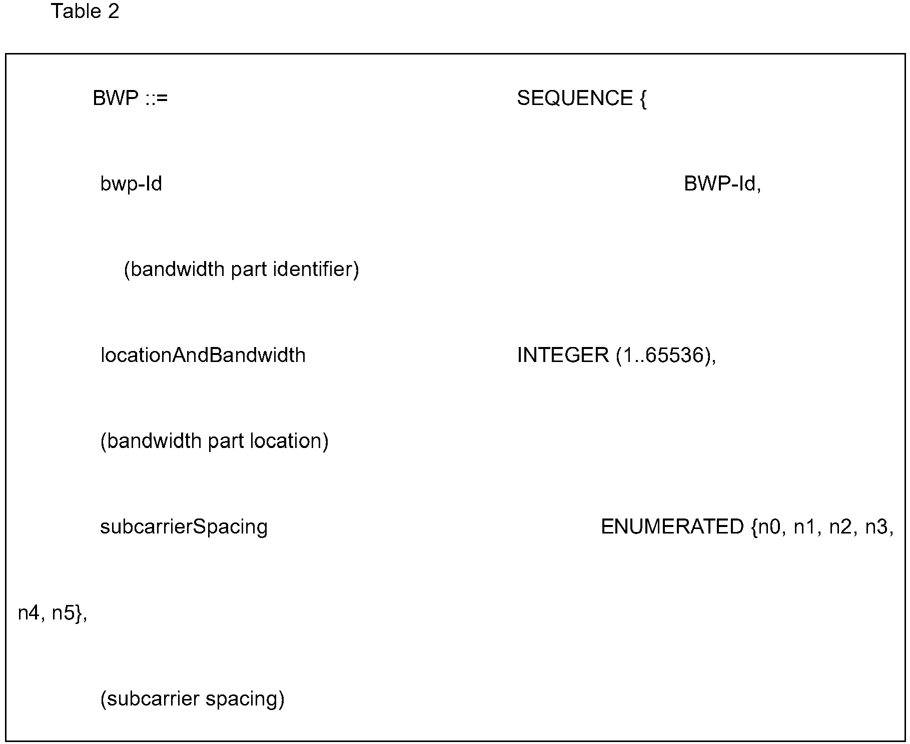

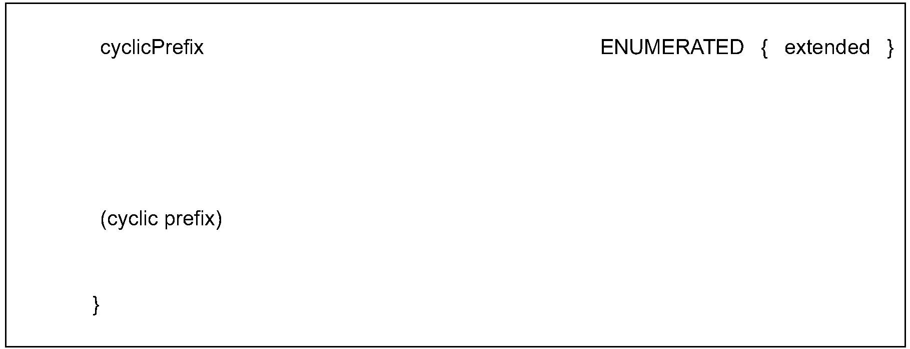

Of course, the present disclosure is not limited to the above example, and various parameters related to a bandwidth part besides the configuration information may be configured for the UE. The base station may deliver the information to the UE through higher layer signaling, for example, radio resource control (RRC) signaling. At least one bandwidth part among the configured one or plurality of bandwidth parts may be activated. Whether to activate the configured bandwidth part may be semi-statically delivered from the base station to the UE through RRC signaling or may be dynamically delivered through downlink control information (DCI).

According to some embodiments, a UE before an RRC connection may be configured with an initial bandwidth part (Initial BWP) for initial access from a base station through a master information block (MIB). More specifically, in an initial access stage, the UE may receive configuration information for a control resource set (CORESET) and a search space where PDCCH for receiving system information (which may correspond to remaining system information (RMSI) or system information block 1 (SIB1)) required for initial access may be transmitted through the MIB. The control resource set and the search space configured by the MIB may be considered as identifier (identity, ID) of 0, respectively. The base station may notify the UE of configuration information such as frequency allocation information, time allocation information, and numerology for control resource set #0 through the MIB. In addition, the base station may notify the UE of configuration information for a monitoring periodicity and an occasion for control resource set #0, that is, configuration information for search space #0, through the MIB. The UE may consider a frequency domain configured as control resource set #0 acquired from the MIB as an initial bandwidth part for initial access. In this case, an identifier (ID) of the initial bandwidth part may be considered as 0.

The configuration for the bandwidth part supported in the 5G may be used for various purposes.

According to some embodiments, in a case where a bandwidth supported by a UE is smaller than a system bandwidth, this may be supported through the bandwidth part configuration. For example, the base station may enable a UE to transmit and receive data at a specific frequency location within the system bandwidth by configuring a frequency location (configuration information 2) of a bandwidth part for the UE.

In addition, according to some embodiments, the base station may configure a plurality of bandwidth parts for the UE for a purpose of supporting different numerologies. For example, in order to support both data transmission and reception using subcarrier spacing of 15kHz and subcarrier spacing of 30kHz for a certain UE, two bandwidth parts may be configured with subcarrier spacing of 15kHz and 30kHz, respectively. Different bandwidth parts may be frequency division multiplexed, and in a case where it is intended to transmit and receive data with a specific subcarrier spacing, a bandwidth part configured with the corresponding subcarrier spacing may be activated.

In addition, according to some embodiments, the base station may configure bandwidth parts having bandwidths of different sizes for the UE for a purpose of reduction of power consumption of the UE. For example, in a case where the UE supports a very large bandwidth, for example, a bandwidth of 100MHz, and always transmits and receives data with the corresponding bandwidth, very large power consumption may occur. Particularly, in a situation where there is no traffic, performing monitoring for an unnecessary downlink control channel with the large bandwidth of 100MHz may be very inefficient from a perspective of power consumption. For a purpose of reducing power consumption of the UE, the base station may configure a bandwidth part of a relatively small bandwidth, for example, a bandwidth part of 20MHz, for the UE. In a situation where there is no traffic, the UE may perform a monitoring operation in the 20MHz bandwidth part, and in a case where data occurs, the UE may transmit and receive data with the 100MHz bandwidth part according to an instruction of the base station.

In a method for configuring the bandwidth part, UEs before an RRC connection may receive configuration information for an initial bandwidth part through a master information block (MIB) in an initial access stage. More specifically, the UE may be configured with a control resource set (CORESET) for a downlink control channel where downlink control information (DCI) scheduling a system information block (SIB) may be transmitted from the MIB of a physical broadcast channel (PBCH). A bandwidth of the control resource set configured by the MIB may be considered as an initial bandwidth part, and through the configured initial bandwidth part, the UE may receive a physical downlink shared channel (PDSCH) through which the SIB is transmitted. The initial bandwidth part may be utilized for other system information (OSI), paging, and random access, besides a usage of receiving the SIB.

### [Bandwidth Part (BWP) Switching]

In a case where one or more bandwidth parts are configured for a UE, a base station may instruct switching (or change, transition) for a bandwidth part for the UE using a bandwidth part indicator field within DCI. As an example, in FIG. 3, in a case where a currently activated bandwidth part of the UE is bandwidth part #1 301, the base station may indicate bandwidth part #2 302 with a bandwidth part indicator within DCI to the UE, and the UE may perform a bandwidth part switching to the bandwidth part #2 302 indicated by the bandwidth part indicator within the received DCI.

As described above, since DCI-based bandwidth part switching may be indicated by DCI scheduling PDSCH or PUSCH, in a case where the UE receives a bandwidth part switching request, the UE should be able to perform reception or transmission for the PDSCH or the PUSCH scheduled by the corresponding DCI in the switched bandwidth part without difficulty. To this end, requirements for a delay time (T_{BWP}) required upon bandwidth part switching are stipulated in standards, and for example, may be defined as Table 3.

**Table 3**

| *µ* | **NR Slot length (ms)** | **BWP switch delay T_{BWP} (slots)** | |
|---|---|---|---|
| | | **Type 1^{Note 1}** | **Type 2^{Note 1}** |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the smaller SCS between the SCS before BWP switch and the SCS after BWP switch. | | | |

Requirements for a bandwidth part switch delay time support type 1 or type 2 depending on UE capability. The UE may report a supportable bandwidth part delay time type to a base station.

According to the aforementioned requirements for the bandwidth part switch delay time, in a case where the UE receives DCI including a bandwidth part switch indicator in slot n, the UE may complete switching to a new bandwidth part indicated by the bandwidth part switch indicator at a time point not later than slot n+T_{BWP}, and may perform transmission and reception for a data channel scheduled by the corresponding DCI in the switched new bandwidth part. In a case where the base station intends to schedule a data channel with the new bandwidth part, the base station may determine time domain resource allocation for the data channel in consideration of the bandwidth part switch delay time (T_{BWP}) of the UE. That is, in a method for determining the time domain resource allocation for the data channel when scheduling the data channel with the new bandwidth part, the base station may schedule the corresponding data channel after the bandwidth part switch delay time. Accordingly, the UE may not expect that DCI indicating a bandwidth part switching indicates a slot offset (K0 or K2) value smaller than the bandwidth part switch delay time (T_{BWP}).

If the UE receives DCI (for example, DCI format 1_1 or 0_1) indicating a bandwidth part switching, the UE may not perform any transmission or reception during a time interval corresponding from a third symbol of a slot where PDCCH including the corresponding DCI is received to a start point of a slot indicated by a slot offset (K0 or K2) value indicated by a time domain resource allocation indicator field within the corresponding DCI. For example, if the UE receives DCI indicating a bandwidth part switching in slot n, and a slot offset value indicated by the corresponding DCI is K, the UE may not perform any transmission or reception from the third symbol of slot n to a symbol before slot n + K (that is, a last symbol of slot n + K - 1).

### [SS/PBCH Block]

Next, SS (Synchronization Signal)/PBCH blocks in 5G will be described.

The SS/PBCH block may mean a physical layer channel block that is constituted of a primary SS (PSS), a secondary SS (SSS), and a PBCH. Specifically, the detailed description is as follows.
- PSS: As a signal that is a reference for downlink time/frequency synchronization, it provides some information of a cell ID.
- SSS: It becomes a reference for downlink time/frequency synchronization and provides remaining cell ID information that the PSS does not provide. Additionally, it may serve as a reference signal for demodulation of the PBCH.
- PBCH: It provides essential system information required for data channel and control channel transmission and reception of a UE. Essential system information may include search space-related control information representing radio resource mapping information of a control channel, scheduling control information for a separate data channel transmitting system information, and the like.
- SS/PBCH block: An SS/PBCH block is composed of a combination of PSS, SSS, and PBCH. One or a plurality of SS/PBCH blocks may be transmitted within a time of 5ms, and each transmitted SS/PBCH block may be distinguished by an index.

A UE may detect PSS and SSS in an initial access stage, and may decode PBCH. A MIB may be acquired from the PBCH, and control resource set (CORESET) #0 (which may correspond to a control resource set with a control resource set index of 0) may be configured therefrom. The UE may perform monitoring for the control resource set #0 after assuming that the selected SS/PBCH block and demodulation reference signal (DMRS) transmitted in the control resource set #0 are quasi co-located (QCL). The UE may receive system information as downlink control information transmitted in the control resource set #0. The UE may acquire random access channel (RACH)-related configuration information required for initial access from the received system information. The UE may transmit physical RACH (PRACH) to a base station in consideration of the selected SS/PBCH index, and the base station that received the PRACH may acquire information for an SS/PBCH block index selected by the UE. The base station may know the fact that the UE selected which block among each of the SS/PBCH blocks and monitors the control resource set #0 associated therewith.

### [PDCCH: DCI Related]

Next, downlink control information (DCI) in a 5G system will be described in detail.

In the 5G system, scheduling information for uplink data (or physical uplink shared channel (PUSCH)) or downlink data (or physical downlink shared channel (PDSCH)) is delivered from a base station to a UE through DCI. The UE may monitor a fallback DCI format and a non-fallback DCI format for the PUSCH or the PDSCH. The fallback DCI format may be configured with fixed fields pre-defined between the base station and the UE, and the non-fallback DCI format may include configurable fields.

DCI may be transmitted through physical downlink control channel (PDCCH), which is a physical downlink control channel, through channel coding and modulation processes. Cyclic redundancy check (CRC) is attached to a DCI message payload, and the CRC may be scrambled with radio network temporary identifier (RNTI) corresponding to an identity of the UE. Different RNTIs may be used according to a purpose of the DCI message, for example, UE-specific data transmission, a power control command, or a random access response, and the like. That is, the RNTI is not explicitly transmitted but is transmitted by being included in a CRC calculation process. Upon receiving the DCI message transmitted on the PDCCH, the UE checks the CRC using the allocated RNTI, and if a CRC check result is correct, the UE may know that the corresponding message is transmitted to the UE.

For example, DCI scheduling PDSCH for system information (SI) may be scrambled with SI-RNTI. DCI scheduling PDSCH for a random access response (RAR) message may be scrambled with RA-RNTI. DCI scheduling PDSCH for a paging message may be scrambled with P-RNTI. DCI notifying a slot format indicator (SFI) may be scrambled with SFI-RNTI. DCI notifying transmit power control (TPC) may be scrambled with TPC-RNTI. DCI scheduling UE-specific PDSCH or PUSCH may be scrambled with cell RNTI (C-RNTI).

DCI format 0_0 may be used as fallback DCI scheduling PUSCH, and in this case, CRC may be scrambled with C-RNTI. DCI format 0_0 whose CRC is scrambled with C-RNTI may include, for example, information of Table 4.

**Table 4**

| |
|---|
| - Identifier for DCI formats - [1] bit |
| $Frequency domain resource assignment - \left[\left⌈{log}_{2}\left({N}_{RB}^{UL , BWP}\left({N}_{RB}^{UL , BWP}+1\right)/2\right)\right⌉\right] bits$ |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - UL / supplementary UL (SUL) indicator - 0 or 1 bit |

DCI format 0_1 may be used as non-fallback DCI scheduling PUSCH, and in this case, CRC may be scrambled with C-RNTI. DCI format 0_1 whose CRC is scrambled with C-RNTI may include, for example, information of Table 5.

**Table 5**

| | | |
|---|---|---|
| - Carrier indicator - 0 or 3 bits | | |
| - UL/SUL indicator - 0 or 1 bit | | |
| - Identifier for DCI formats - [1] bits | | |
| - Bandwidth part indicator - 0, 1 or 2 bits | | |
| - Frequency domain resource assignment | | |
| | For resource allocation type 0, $\left⌈{N}_{RB}^{UL , BWP}/P\right⌉ bits$ | |
| | For resource allocation type 1, $\left⌈{log}_{2}\left({N}_{RB}^{UL , BWP}\left({N}_{RB}^{UL , BWP}+1\right)/2\right)\right⌉ bits$ | |
| - Time domain resource assignment -1, 2, 3, or 4 bits | | |
| - Virtual resource block (VRB)-to-physical resource block (PRB) mapping - 0 or 1 bit, only for resource allocation type 1. | | |
| | 0 bit if only resource allocation type 0 is configured; | |
| | 1 bit otherwise. | |
| - Frequency hopping flag - 0 or 1 bit, only for resource allocation type 1. | | |
| | 0 bit if only resource allocation type 0 is configured; | |
| | | 1 bit otherwise. |
| - Modulation and coding scheme - 5 bits | | |
| - New data indicator - 1 bit | | |
| - Redundancy version - 2 bits | | |
| - HARQ process number - 4 bits | | |
| - 1st downlink assignment index - 1 or 2 bits | | |
| | | 1 bit for semi-static HARQ-ACK codebook; |
| | | 2 bits for dynamic HARQ-ACK codebook with single HARQ-ACK codebook. |
| - 2nd downlink assignment index - 0 or 2 bits | | |
| | | 2 bits for dynamic HARQ-ACK codebook with two HARQ-ACK sub-codebooks; |
| | | 0 bit otherwise. |
| - TPC command for scheduled PUSCH - 2 bits | | |
| $SRS resource indicator \left⌈{log}_{2}\left({\sum }_{k = 1}^{{L}_{max}} \left(\begin{matrix}{N}_{SRS} \\ k\end{matrix}\right)\right)\right⌉ or \left⌈{log}_{2}\left({N}_{SRS}\right)\right⌉ bits$ | | |
| | $\left⌈{log}_{2}\left({\sum }_{k = 1}^{{L}_{max}} \left(\begin{matrix}{N}_{SRS} \\ k\end{matrix}\right)\right)\right⌉ bits for non - codebook based PUSCH transmission ;$ | |
| | $\left⌈{log}_{2}\left({N}_{SRS}\right)\right⌉ bits for codebook based PUSCH transmission .$ | |
| - Precoding information and number of layers -up to 6 bits | | |
| - Antenna ports - up to 5 bits | | |
| - SRS request - 2 bits | | |
| - Channel state information (CSI) request - 0, 1, 2, 3, 4, 5, or 6 bits | | |
| - Code block group (CBG) transmission information - 0, 2, 4, 6, or 8 bits | | |
| - Phase tracking reference signal (PTRS)-DMRS association - 0 or 2 bits. | | |
| - beta_offset indicator - 0 or 2 bits | | |
| - DMRS sequence initialization - 0 or 1 bit | | |

DCI format 1_0 may be used as fallback DCI scheduling PDSCH, and in this case, CRC may be scrambled with C-RNTI. DCI format 1_0 whose CRC is scrambled with C-RNTI may include, for example, information of Table 6.

**Table 6**

| |
|---|
| - Identifier for DCI formats - [1] bit |
| $Frequency domain resource assignment - \left[\left⌈{log}_{2}\left({N}_{RB}^{DL , BWP}\left({N}_{RB}^{DL , BWP}+1\right)/2\right)\right⌉\right] bits$ |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Physical uplink control channel (PUCCH) resource indicator - 3 bits |
| - PDSCH-to-HARQ feedback timing indicator - [3] bits |

DCI format 1_1 may be used as non-fallback DCI scheduling PDSCH, and in this case, CRC may be scrambled with C-RNTI. DCI format 1_1 whose CRC is scrambled with C-RNTI may include, for example, information of Table 7.

**Table 7**

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
| For resource allocation type 0, $\left⌈{N}_{RB}^{DL , BWP}/P\right⌉ bits$ |
| For resource allocation type 1, $\left⌈{log}_{2}\left({N}_{RB}^{DL , BWP}\left({N}_{RB}^{DL , BWP}+1\right)/2\right)\right⌉ bits$ |
| - Time domain resource assignment -1, 2, 3, or 4 bits |
| - VRB-to-PRB mapping - 0 or 1 bit, only for resource allocation type 1. |
| 0 bit if only resource allocation type 0 is configured; |
| 1 bit otherwise. |
| - PRB bundling size indicator - 0 or 1 bit |
| - Rate matching indicator - 0, 1, or 2 bits |
| - Zero power (ZP) CSI-reference signal (RS) trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - Code block group (CBG) transmission information - 0, 2, 4, 6, or 8 bits |
| - CBG flushing out information - 0 or 1 bit |
| - DMRS sequence initialization - 1 bit |

### [PDCCH: CORESET, REG, CCE, Search Space]

Hereinafter, a downlink control channel in a 5G communication system will be described more specifically with reference to the drawings.

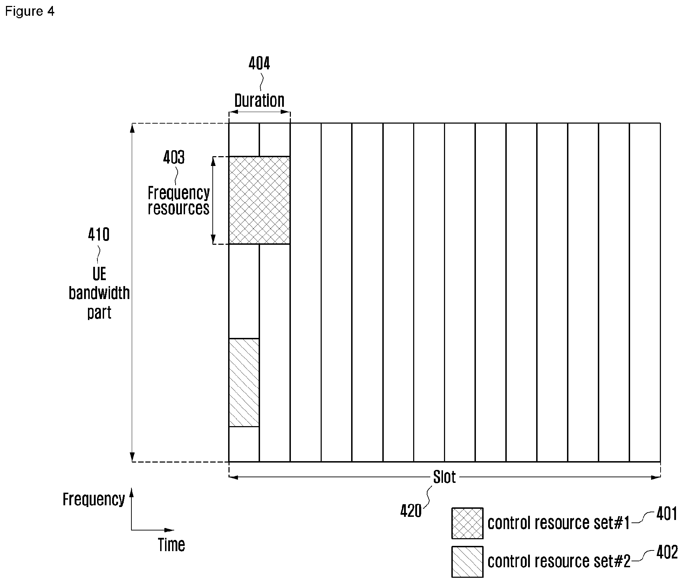

FIG. 4 is a diagram illustrating an example for a control resource set (CORESET) where a downlink control channel is transmitted in a wireless communication system according to an embodiment of the present disclosure.

FIG. 4 illustrates an example in which two control resource sets (control resource set #1 401 and control resource set #2 402) are configured within one slot 420 on a time axis and UE bandwidth part 410 on a frequency axis. The control resource sets 401 and 402 may be configured in specific frequency resources 403 within the total UE bandwidth part 410 on the frequency axis. On the time axis, it may be configured with one or a plurality of OFDM symbols, and this may be defined as control resource set duration 404. With reference to the illustrated example of FIG. 4, control resource set #1 401 is configured with control resource set duration of 2 symbols, and control resource set #2 402 is configured with control resource set duration of 1 symbol.

The control resource set in the aforementioned 5G may be configured from a base station to a UE through higher layer signaling (for example, system information, master information block (MIB), or radio resource control (RRC) signaling). Configuring a control resource set for the UE means providing information such as control resource set identifier (identity), a frequency location of the control resource set, and a symbol length of the control resource set. For example, the information of Table 8 may be included.

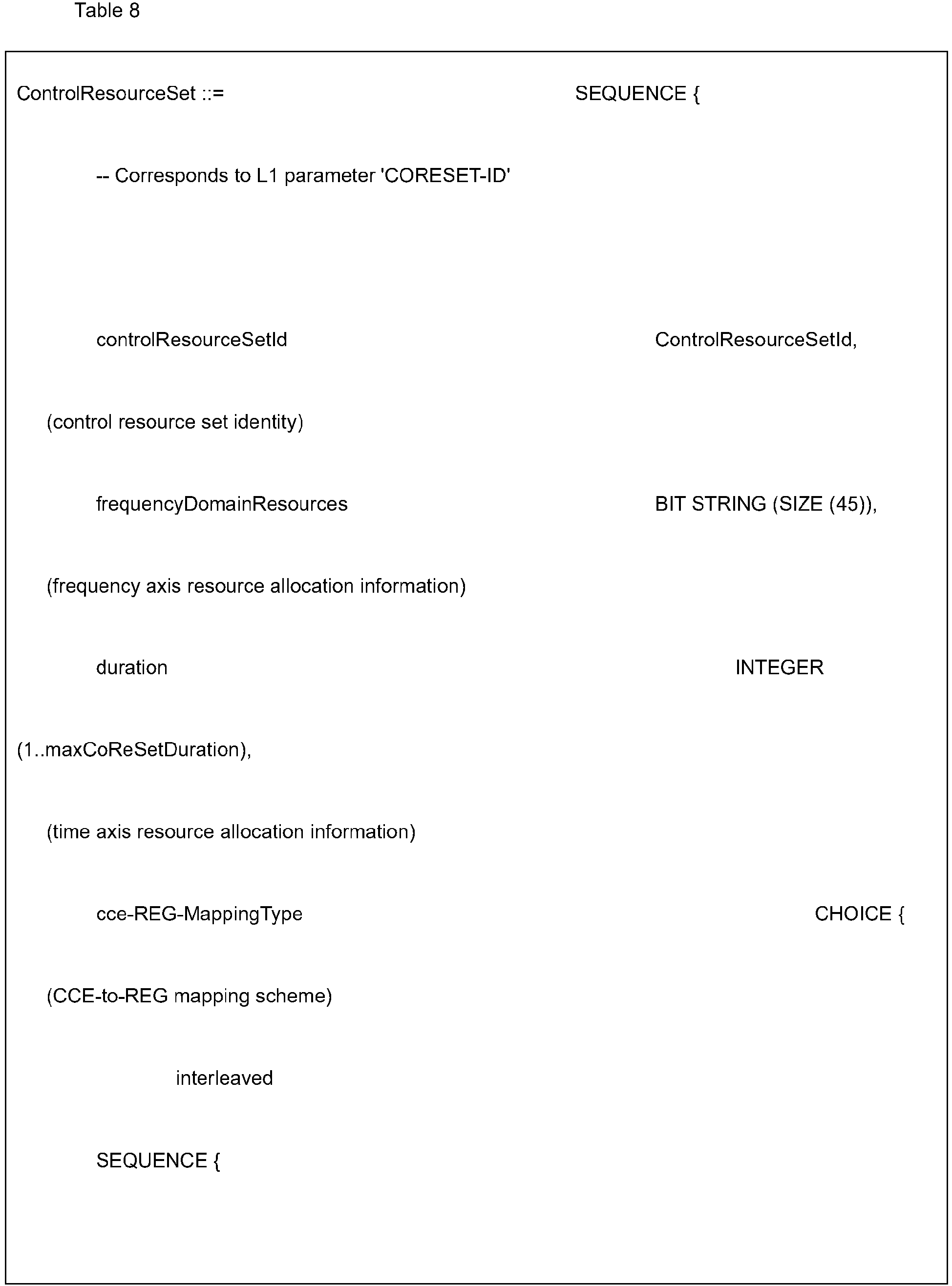

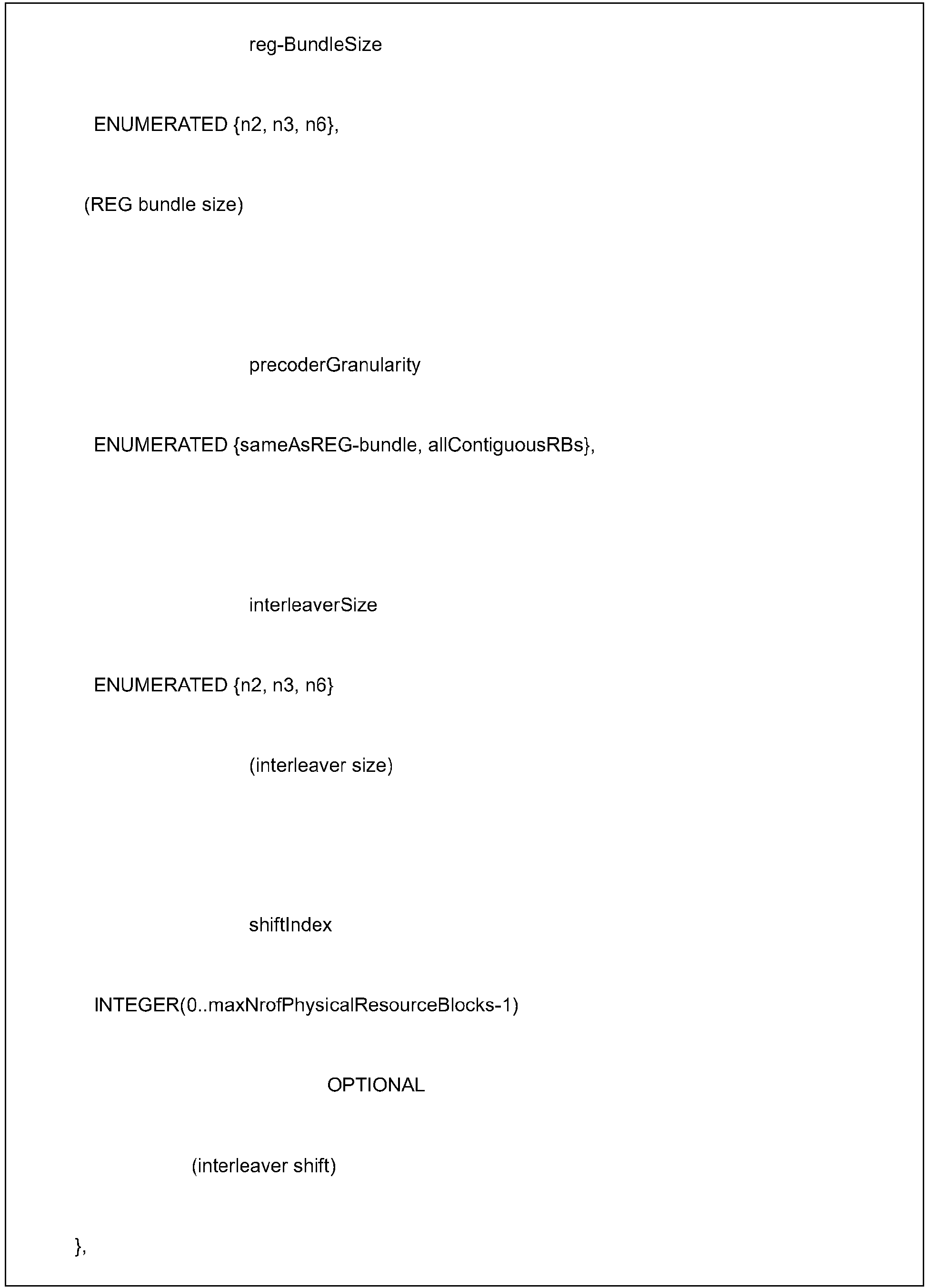

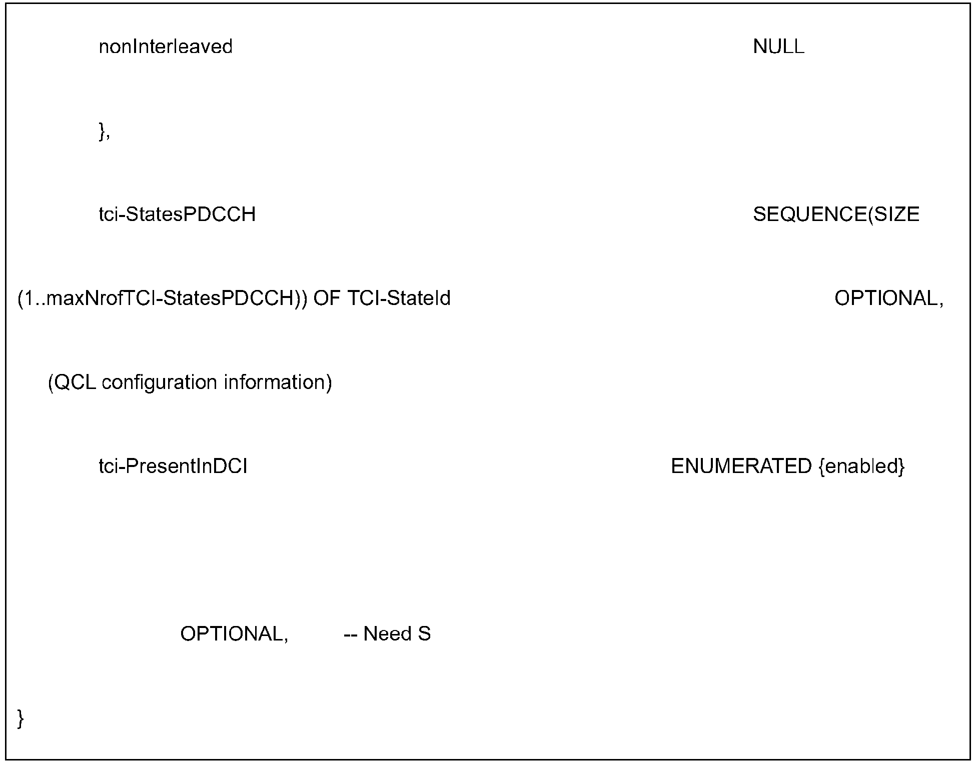

In Table 8, tci-StatesPDCCH (briefly named as transmission configuration indication (TCI) state) configuration information may include information of one or a plurality of synchronization signal (SS)/physical broadcast channel (PBCH) block indices or channel state information reference signal (CSI-RS) indices in a quasi co-located (QCL) relationship with DMRS transmitted in a corresponding control resource set.

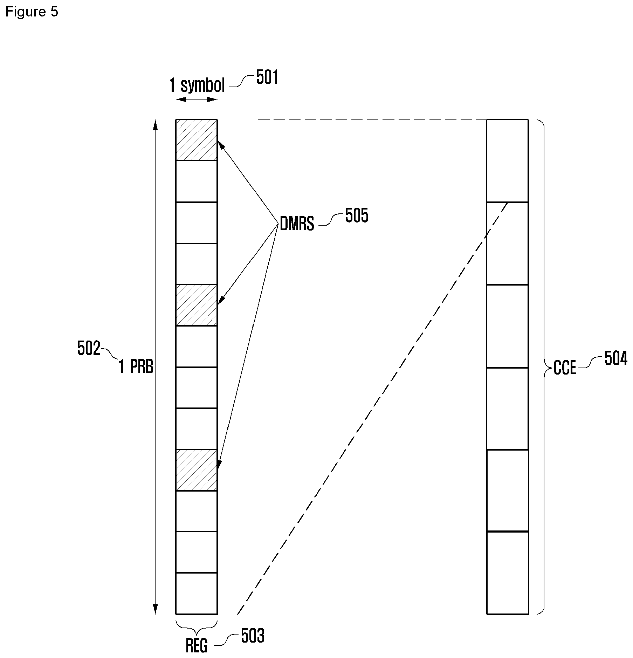

FIG. 5 is a diagram showing an example of basic units of time and frequency resources configuring a downlink control channel in a wireless communication system according to an embodiment of the present disclosure.

With reference to FIG. 5, a basic unit of time and frequency resources configuring a control channel may be called a resource element group (REG) 503, and the REG 503 may be defined as one OFDM symbol 501 on a time axis and one physical resource block (PRB) 502, that is, 12 subcarriers, on a frequency axis. The base station may configure a downlink control channel allocation unit by concatenating the REGs 503.

As illustrated in FIG. 5, in a case where a basic unit to which a downlink control channel is allocated in 5G is called a control channel element (CCE) 504, one CCE 504 may be configured with a plurality of REGs 503. Explaining the REG 503 illustrated in FIG. 5 as an example, the REG 503 may be configured with 12 REs, and if one CCE 504 is configured with 6 REGs 503, one CCE 504 may be configured with 72 REs. If a downlink control resource set is configured, the corresponding area may be configured with a plurality of CCEs 504, and a specific downlink control channel may be mapped to one or a plurality of CCEs 504 according to an aggregation level (AL) within the control resource set and transmitted. The CCEs 504 within the control resource set are distinguished by numbers, and in this case, the numbers of the CCEs 504 may be given according to a logical mapping scheme.

In the basic unit of the downlink control channel illustrated in FIG. 5, that is, the REG 503, both REs to which DCI is mapped and an area to which DMRS 505, which is a reference signal for decoding it, is mapped may be included. As in FIG. 5, three DMRSs 505 may be transmitted within one REG 503. A number of CCEs required to transmit PDCCH may be 1, 2, 4, 8, or 16 according to an aggregation level (AL), and different numbers of CCEs may be used to implement link adaptation of a downlink control channel. For example, in a case where AL = L, one downlink control channel may be transmitted through L CCEs. A UE should detect a signal in a state of not knowing information for a downlink control channel, and for blind decoding, a search space representing a set of CCEs was defined. The search space is a set of downlink control channel candidates consisting of CCEs for which the UE should attempt decoding on a given aggregation level, and since there are various aggregation levels making one bundle with 1, 2, 4, 8, or 16 CCEs, the UE may have a plurality of search spaces. A search space set may be defined as a set of search spaces in all configured aggregation levels.

Search spaces may be classified into a common search space and a UE-specific search space. UEs of a certain group or all UEs may examine the common search space of PDCCH to receive cell-common control information such as paging messages or dynamic scheduling for system information. For example, PDSCH scheduling allocation information for transmission of SIB including operator information of a cell, and the like, may be received by examining the common search space of PDCCH. In a case of the common search space, since the UEs of the certain group or all UEs should receive PDCCH, the common search space may be defined as a pre-agreed set of CCEs. Scheduling allocation information for UE-specific PDSCH or PUSCH may be received by examining the UE-specific search space of PDCCH. The UE-specific search space may be UE-specifically defined as a function of an identity of the UE and various system parameters.

In 5G, parameters for a search space for PDCCH may be configured from a base station to a UE with higher layer signaling (for example, SIB, MIB, or RRC signaling). For example, the base station may configure a number of PDCCH candidates at each aggregation level L, a monitoring periodicity for a search space, a monitoring occasion in symbol units within a slot for the search space, a search space type (common search space or UE-specific search space), a combination of DCI format and RNTI to be monitored in the corresponding search space, a control resource set index to monitor the search space, and the like, for the UE. For example, the information of Table 9 may be included.

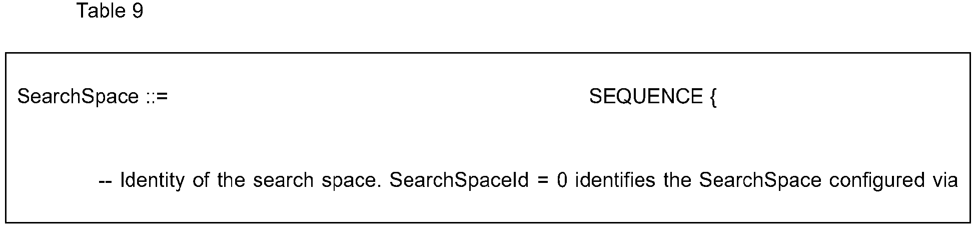

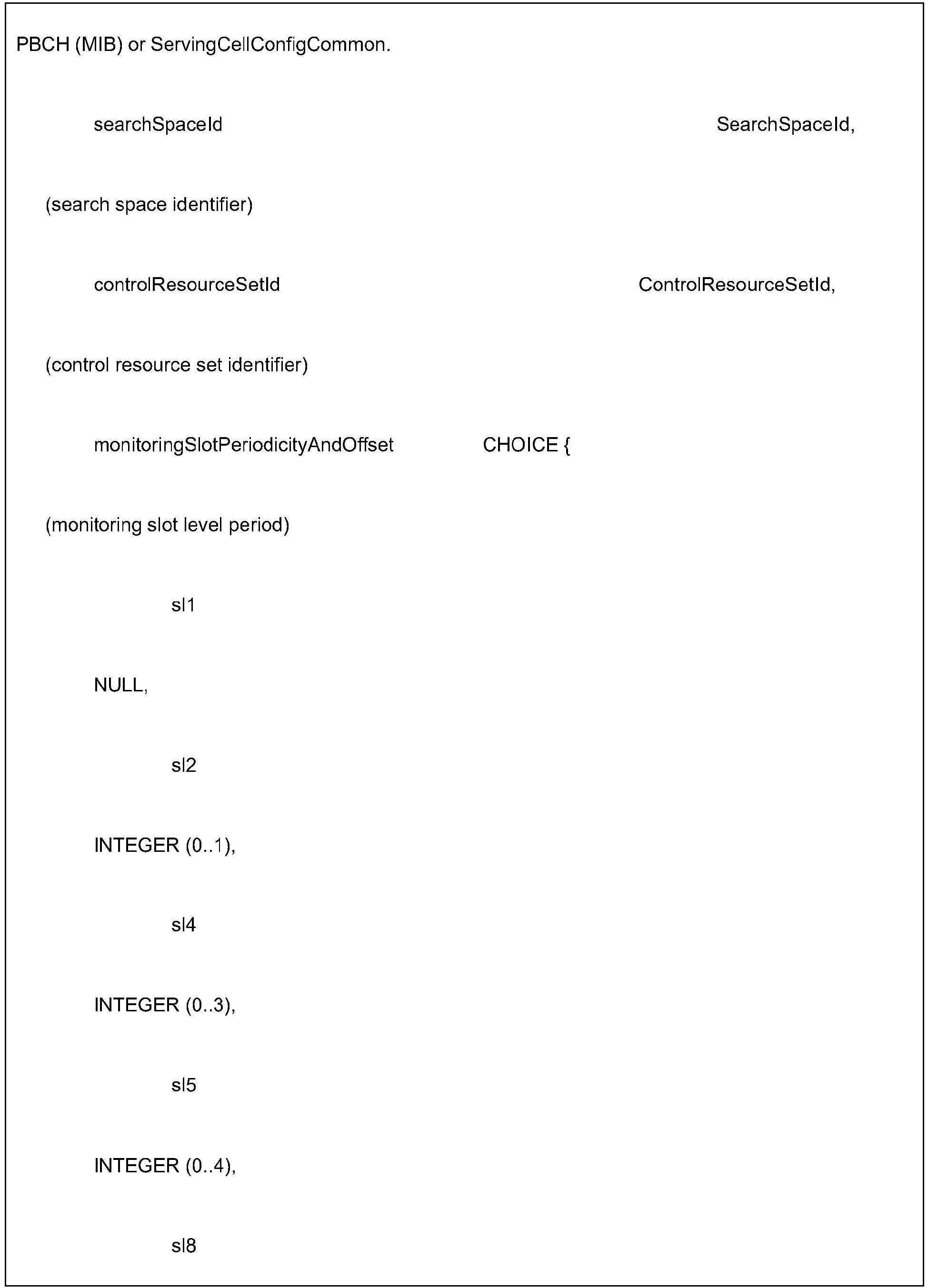

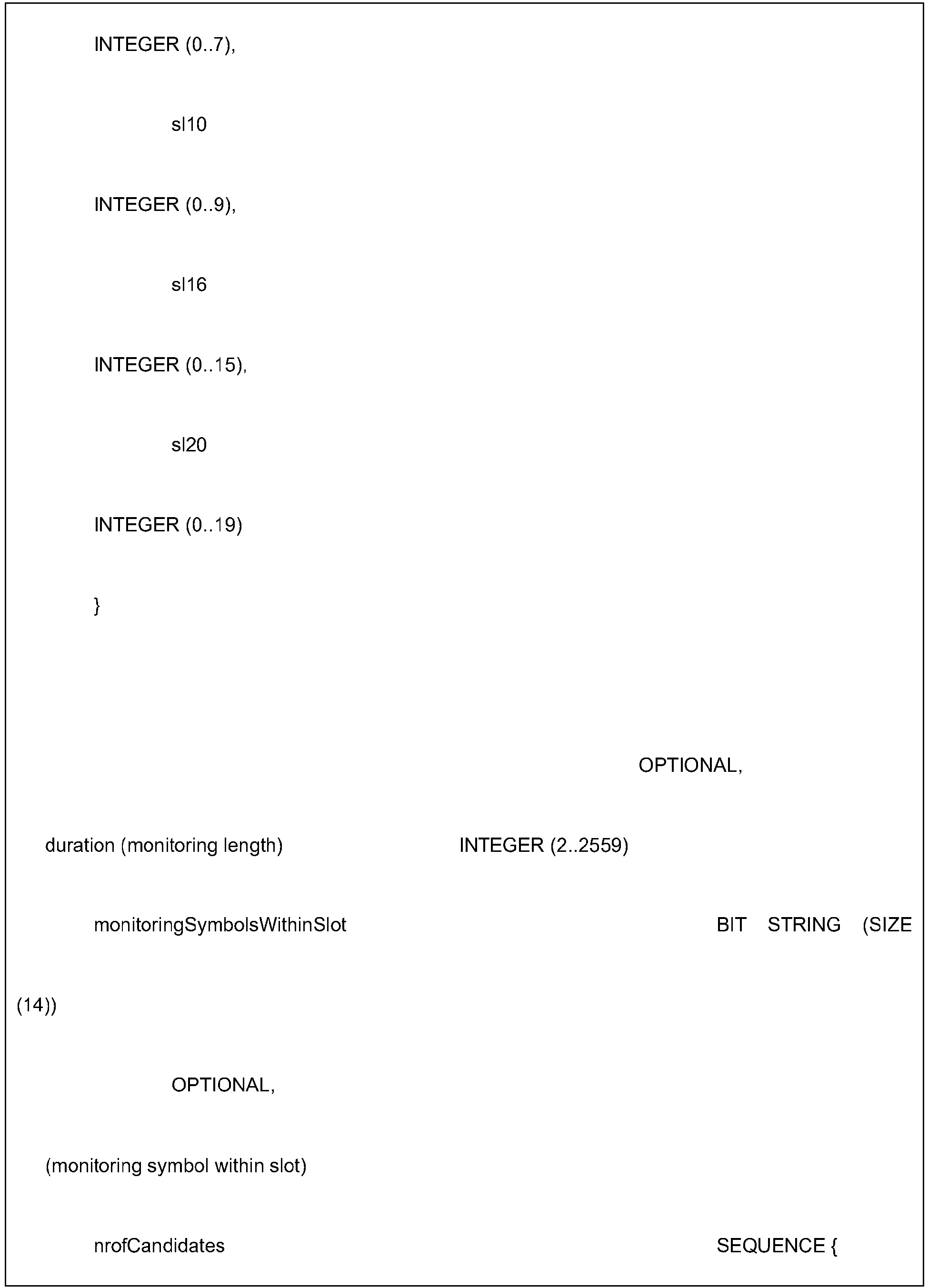

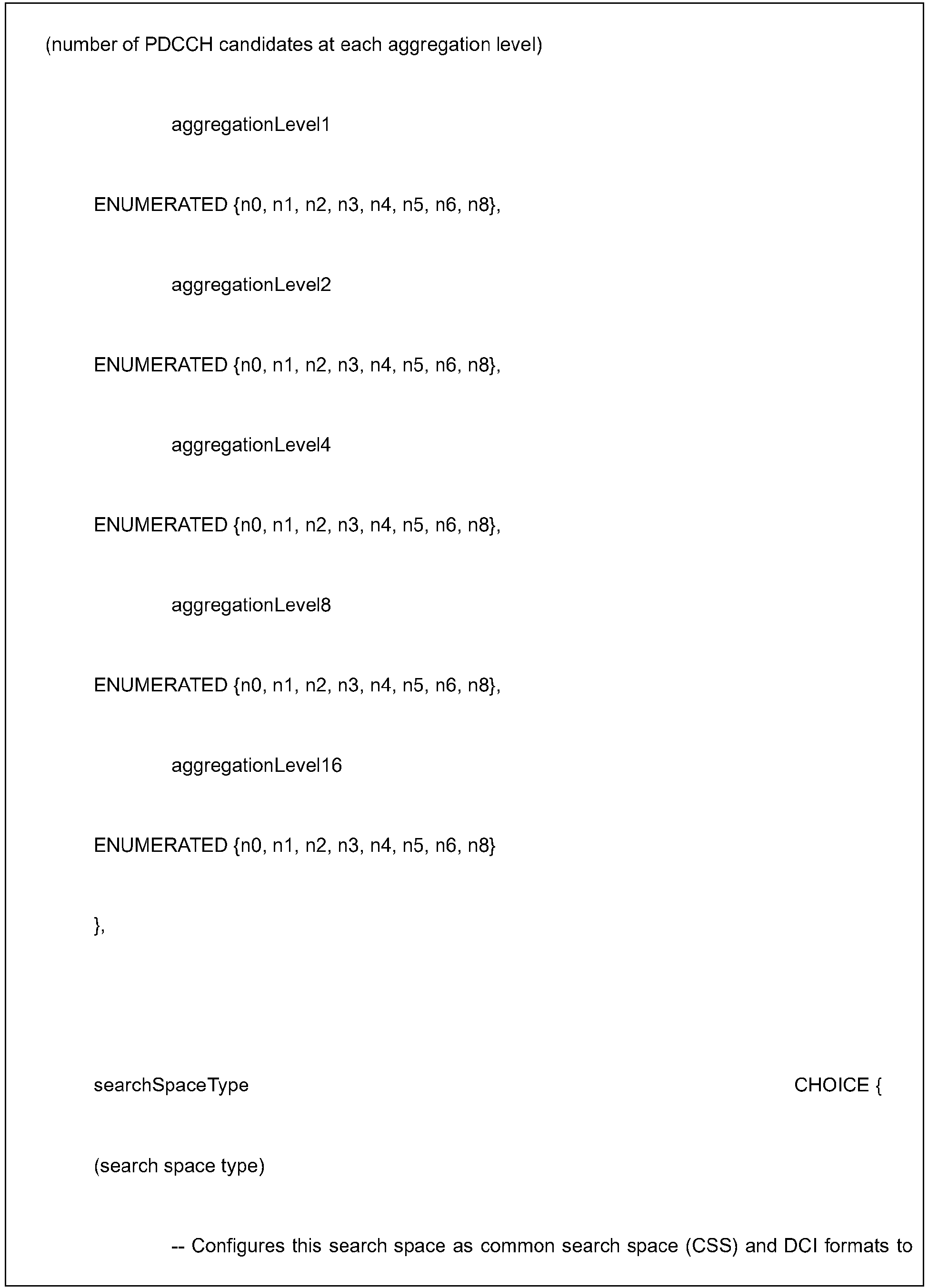

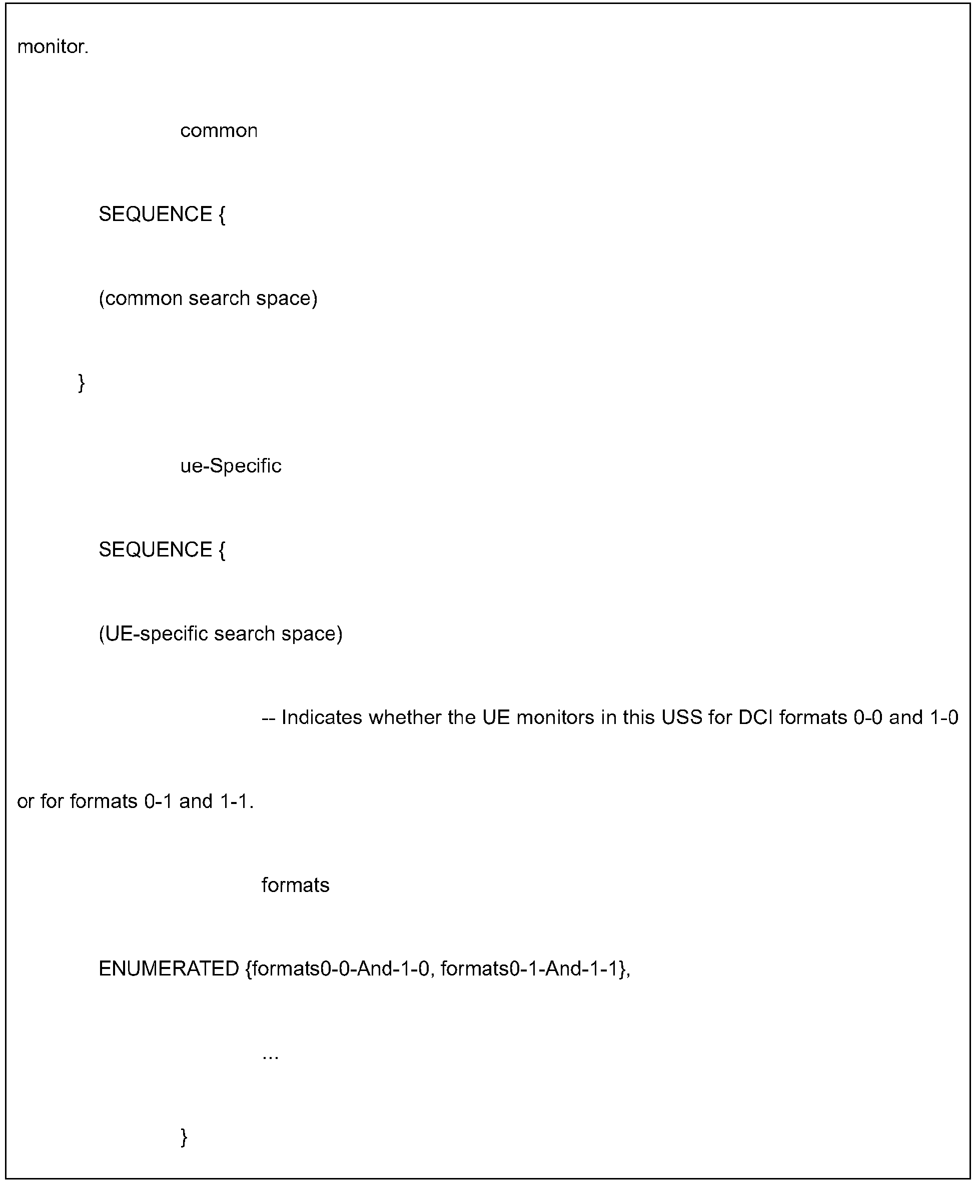

According to the configuration information, the base station may configure one or a plurality of search space sets for the UE. According to some embodiments, the base station may configure search space set 1 and search space set 2 for the UE, and may configure DCI format A scrambled with X-RNTI to be monitored in a common search space in the search space set 1, and may configure DCI format B scrambled with Y-RNTI to be monitored in a UE-specific search space in the search space set 2.

According to the configuration information, one or a plurality of search space sets may exist in the common search space or the UE-specific search space. For example, search space set #1 and search space set #2 may be configured as common search spaces, and search space set #3 and search space set #4 may be configured as UE-specific search spaces.

In the common search space, the following combinations of DCI format and RNTI may be monitored. Of course, the present disclosure is not limited to the following examples.
- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of DCI format and RNTI may be monitored. Of course, the present disclosure is not limited to the following examples.
- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Specified RNTIs may follow the following definitions and purposes.
C-RNTI (Cell RNTI): A usage of UE-specific PDSCH scheduling
TC-RNTI (Temporary Cell RNTI): A usage of UE-specific PDSCH scheduling
CS-RNTI(Configured Scheduling RNTI): A usage of semi-statically configured UE-specific PDSCH scheduling
RA-RNTI (Random Access RNTI): A usage of PDSCH scheduling in a random access stage
P-RNTI (Paging RNTI): A usage of PDSCH scheduling where paging is transmitted
SI-RNTI (System Information RNTI): A usage of PDSCH scheduling where system information is transmitted
INT-RNTI (Interruption RNTI): A usage for notifying whether puncturing is performed for PDSCH
TPC-PUSCH-RNTI (Transmit Power Control for PUSCH RNTI): A usage for indicating a power adjustment command for PUSCH
TPC-PUCCH-RNTI (Transmit Power Control for PUCCH RNTI): A usage for indicating a power adjustment command for PUCCH
TPC-SRS-RNTI (Transmit Power Control for SRS RNTI): A usage for indicating a power adjustment command for SRS

The aforementioned specified DCI formats may follow definitions like the example of Table 10.

**Table 10**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, a search space of aggregation level L in search space set s, control resource set p, may be expressed as Equation 1 below. [Equation 1] $L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊{N}_{CCE , p}/L\right⌋\right\} + i$
- L: aggregation level
- *n_{CI}:* carrier index
- *N_{CCE,p}*: total number of CCEs existing within control resource set p
- ${n}_{s , f}^{μ}$: slot index
- ${M}_{s , max}^{\left(L\right)}$: number of PDCCH candidates of aggregation level L
- ${m}_{s , {n}_{CI}} = 0 , … , {M}_{s , max}^{\left(L\right)} - 1$: index of PDCCH candidates of aggregation level L
- i=0,...,L-1
- ${Y}_{p , {n}_{s , f}^{μ}} = \left({A}_{p}⋅{Y}_{p , {n}_{s , f}^{μ} - 1}\right) modD$, *Y*_{*p,*-1} = *n*_{RNTI} ≠ 0, *Aₚ* = 39827 for *pmod*3 = 0, *Aₚ* = 39829 for *pmod*3 = 1 *Aₚ* = 39839 for *pmod*3 = 2 , D=65537.
- *n_{RNTI}* : UE identifier
${Y}_{p , {n}_{s , f}^{μ}}$ value may correspond to 0 in a case of a common search space.${Y}_{p , {n}_{s , f}^{μ}}$ value may correspond to a value that changes according to an identity of a UE (C-RNTI or an ID configured by a base station to the UE) and a time index in a case of a UE-specific search space.

In 5G, as a plurality of search space sets may be configured with different parameters (for example, the parameters of Table 9), a set of search space sets monitored by a UE at each time point may change. For example, in a case where search space set #1 is configured with an X-slot periodicity, search space set #2 is configured with a Y-slot periodicity, and X and Y are different, the UE may monitor both search space set #1 and search space set #2 in a specific slot, and may monitor one of search space set #1 and search space set #2 in a specific slot.

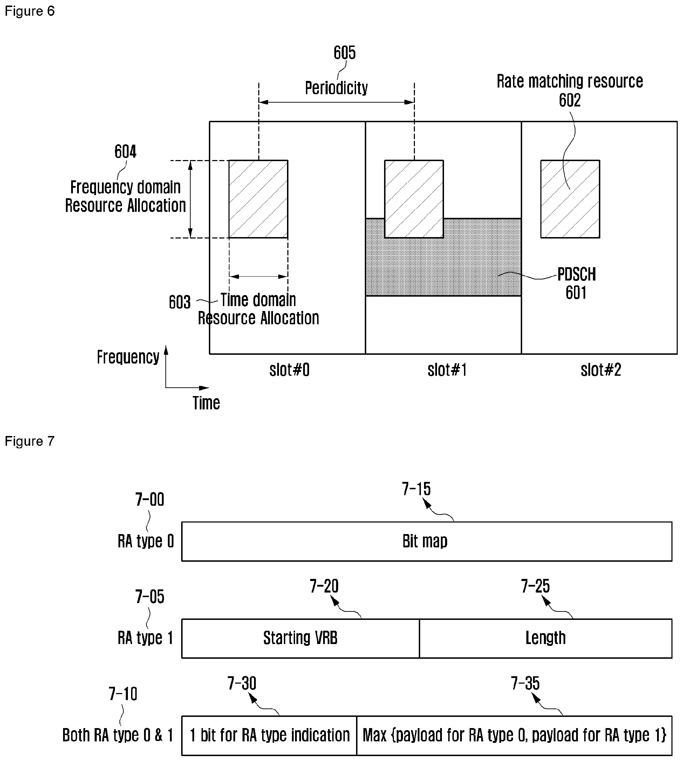

FIG. 6 is a diagram for explaining a method in which a base station and a UE transmit and receive data considering a downlink data channel and rate matching resources in a wireless communication system according to an embodiment of the present disclosure.

In FIG. 6, a downlink data channel (PDSCH 601) and rate matching resource 602 are illustrated. The base station may configure one or a plurality of rate matching resources 602 for the UE through higher layer signaling (for example, RRC signaling). In rate matching resource 602 configuration information, time domain resource allocation information 603, frequency domain resource allocation information 604, and periodicity information 605 may be included. Hereinafter, a bitmap corresponding to the frequency domain resource allocation information 604 is named as "a first bitmap", a bitmap corresponding to the time domain resource allocation information 603 is named as "a second bitmap", and a bitmap corresponding to the periodicity information 605 is named as "a third bitmap". If all or a part of time and frequency resources of a scheduled data channel 601 overlap with configured rate matching resources 602, the base station may transmit the data channel 601 by rate matching in a part of the rate matching resources 602, and the UE may perform reception and decoding after assuming that the data channel 601 was rate matched in the part of the rate matching resources 602.

The base station may dynamically notify the UE through DCI whether to rate match a data channel in the configured rate matching resources part through additional configuration (this corresponds to "a rate matching indicator" within the aforementioned DCI format). Specifically, the base station may select a part among the configured rate matching resources to group into a rate matching resource group, and may indicate to the UE whether a data channel for each rate matching resource group is rate matched using a bitmap method through DCI. For example, in a case where four rate matching resources, RMR #1, RMR #2, RMR #3, and RMR #4, are configured, the base station may configure RMG #1 = {RMR #1, RMR #2} and RMG #2 = {RMR #3, RMR #4} as rate matching groups, and may indicate to the UE whether rate matching is performed in each of RMG #1 and RMG #2 as a bitmap using 2 bits within a DCI field. For example, "1" is indicated in a case where rate matching should be performed and "0" is indicated in a case where rate matching should not be performed.

In 5G, as a method for configuring the aforementioned rate matching resources in the UE, granularity of "RB symbol level" and "RE level" is supported. More specifically, the following configuration method is followed.

### RB Symbol Level

A UE may be configured with a maximum of four RateMatchPatterns for each bandwidth part through higher layer signaling, and one RateMatchPattern may include the following contents.
- As reserved resources within a bandwidth part, resources in which time and frequency resource areas of the corresponding reserved resources are configured by a combination of a bitmap of an RB level and a bitmap of a symbol level on a frequency axis may be included. The reserved resources may be spanned over one or two slots. A time domain pattern (periodicityAndPattern) in which time and frequency domains consisting of each RB level and symbol level bitmap pair are repeated may be additionally configured.
- Resource areas corresponding to time and frequency domain resource areas configured as a control resource set within a bandwidth part and a time domain pattern configured as search space configuration in which the corresponding resource areas are repeated may be included.

### RE Level

A UE may be configured with the following contents through higher layer signaling.
- As configuration information (lte-CRS-ToMatchAround) for REs corresponding to an LTE CRS (cell-specific reference signal or common reference signal) pattern, a number of ports of LTE CRS (nrofCRS-Ports) and an LTE-CRS-vshift(s) value (v-shift), center subcarrier location information (carrierFreqDL) of an LTE carrier from a reference frequency point (for example, reference point A), bandwidth size (carrierBandwidthDL) information of the LTE carrier, subframe configuration information (mbsfn-SubframConfigList) corresponding to MBSFN (multicast-broadcast single-frequency network), and the like may be included. The UE may determine a location of the CRS within an NR slot corresponding to an LTE subframe based on the aforementioned information.
- Configuration information for a resource set corresponding to one or a plurality of ZP (zero power) CSI-RSs within a bandwidth part may be included.

### [PDSCH: Frequency Resource Allocation Related]

FIG. 7 is a diagram illustrating an example of frequency domain resource allocation of physical downlink shared channel (PDSCH) in a wireless communication system according to an embodiment of the present disclosure.

FIG. 7 is a diagram illustrating three frequency domain resource allocation methods of type 0 7-00, type 1 7-05, and dynamic switch 7-10 that are configurable through a higher layer in an NR wireless communication system.

With reference to FIG. 7, in a case where a UE is configured to use only resource type 0 through higher layer signaling 7-00, some downlink control information (DCI) allocating PDSCH to the corresponding UE includes a bitmap consisting of NRBG bits. Conditions for this will be described again later. In this case, NRBG means a number of resource block groups (RBGs) determined as [Table 11] below according to a BWP size allocated by a BWP indicator and a higher layer parameter rbg-Size, and data is transmitted to an RBG indicated as 1 by the bitmap.

**Table 11**

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

If a UE is configured to use only resource type 1 through higher layer signaling 7-05, some DCI allocating PDSCH to the corresponding UE includes frequency domain resource allocation information consisting of $\left⌈{log}_{2}\left({N}_{RB}^{DL , BWP}\left({N}_{RB}^{DL , BWP}+1\right)/2\right)\right⌉$ bits. Conditions for this will be described again later. A base station may configure a starting VRB 7-20 and a length 7-25 of frequency domain resources consecutively allocated therefrom through this.

If a UE is configured to use both resource type 0 and resource type 1 through higher layer signaling 7-10, some DCI allocating PDSCH to the corresponding UE includes frequency domain resource allocation information consisting of bits of a larger value 7-35 between a payload 7-15 for configuring resource type 0 and payloads 7-20 and 7-25 for configuring resource type 1. Conditions for this will be described again later. In this case, one bit may be added to a foremost part (MSB) of the frequency domain resource allocation information within the DCI, and in a case where the corresponding bit is a value of '0', it may be indicated that resource type 0 is used, and in a case where it is a value of '1', it may be indicated that resource type 1 is used.

### [PDSCH/PUSCH: Time Resource Allocation Related]

Below, a time domain resource allocation method for a data channel in a next-generation mobile communication system (5G or NR system) is described.

A base station may configure a table for time domain resource allocation information for a physical downlink shared channel (PDSCH) and a physical uplink shared channel (PUSCH) for a UE through higher layer signaling (for example, RRC signaling). For the PDSCH, a table consisting of a maximum of maxNrofDL-Allocations = 16 entries may be configured, and for the PUSCH, a table consisting of a maximum of maxNrofUL-Allocations = 16 entries may be configured. In an embodiment, the time domain resource allocation information may include PDCCH-to-PDSCH slot timing (corresponding to a time interval in slot units between a time point when PDCCH is received and a time point when PDSCH scheduled by the received PDCCH is transmitted, denoted as K0), PDCCH-to-PUSCH slot timing (corresponding to a time interval in slot units between a time point when PDCCH is received and a time point when PUSCH scheduled by the received PDCCH is transmitted, denoted as K2), information for a location and a length of a start symbol where the PDSCH or the PUSCH is scheduled within a slot, a mapping type of the PDSCH or the PUSCH, and the like. For example, information such as [Table 12] or [Table 13] below may be transmitted from the base station to the UE.

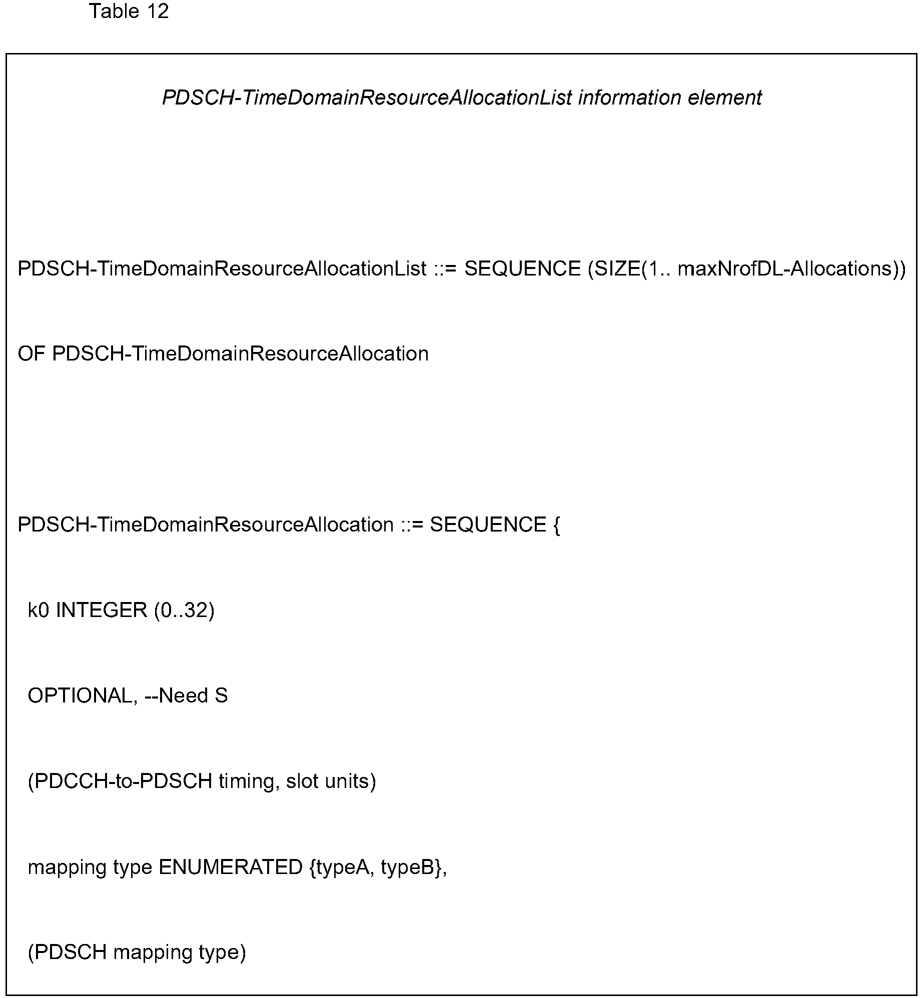

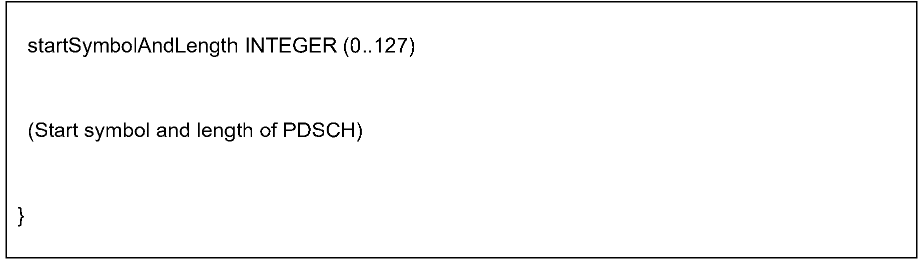

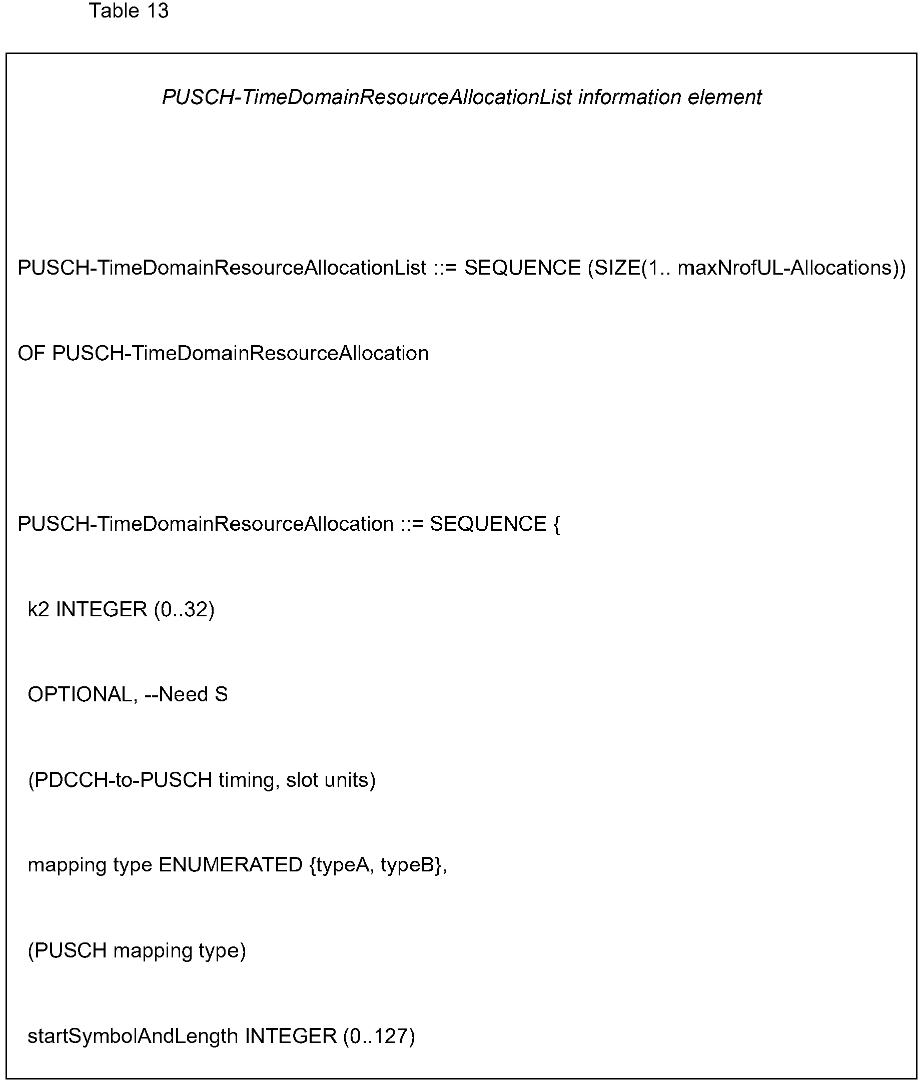

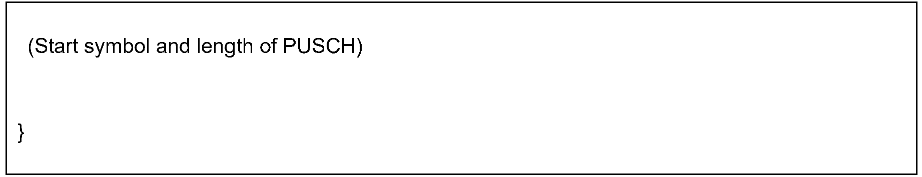

The base station may notify the UE of one of entries of the table for the aforementioned time domain resource allocation information through L1 signaling (for example, DCI) (for example, may be indicated by a 'time domain resource allocation' field within the DCI). The UE may acquire the time domain resource allocation information for the PDSCH or the PUSCH based on the DCI received from the base station.

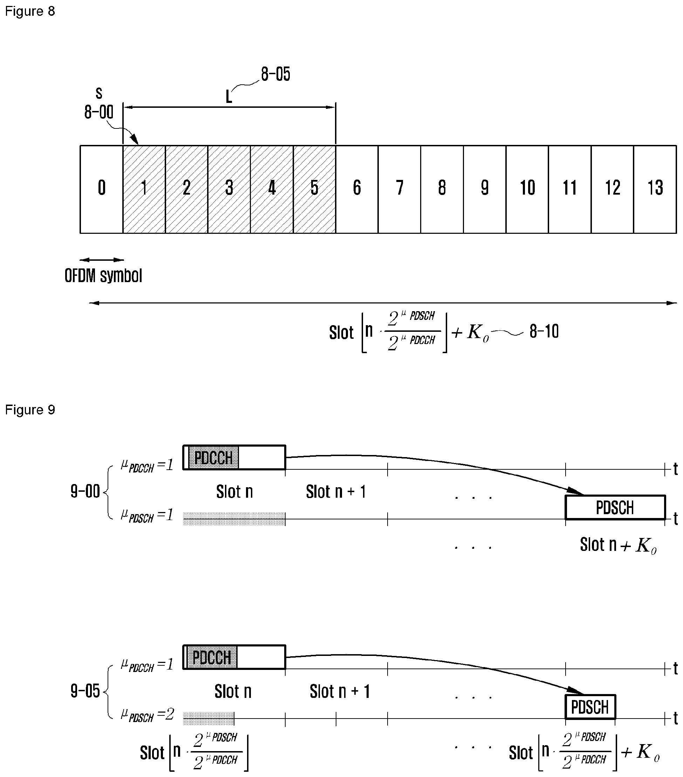

FIG. 8 is a diagram illustrating an example of time domain resource allocation of PDSCH in a wireless communication system according to an embodiment of the present disclosure.

With reference to FIG. 8, a base station may indicate a time domain location of PDSCH resources according to subcarrier spacing (SCS) (*µ*_{PDSCH}, *µ*_{PDCCH}) of a data channel and a control channel configured using a higher layer, a scheduling offset (K0) value, and an OFDM symbol start location 8-00 and a length 8-05 within one slot 8-10 dynamically indicated through DCI.

FIG. 9 is a diagram illustrating an example of time domain resource allocation according to subcarrier spacing of a data channel and a control channel in a wireless communication system according to an embodiment of the present disclosure.

With reference to FIG. 9, in a case where subcarrier spacing of the data channel and the control channel is the same 9-00 (*µ*_{PDSCH} *= µ*_{PDCCH}), as slot numbers for data and control are the same, the base station and the UE may generate a scheduling offset according to a pre-determined slot offset K0. On the other hand, in a case where subcarrier spacing of the data channel and the control channel is different 9-05 (*µ*_{PDSCH} ≠ *µ*_{PDCCH}), as slot numbers for data and control are different, the base station and the UE may generate a scheduling offset according to a pre-determined slot offset K0 based on the subcarrier spacing of the PDCCH.

### [PUSCH: Transmission Method Related]

Next, a scheduling method of PUSCH transmission is described. PUSCH transmission may be dynamically scheduled by a UL grant within DCI, or may operate by configured grant type 1 or type 2. A dynamic scheduling indication for the PUSCH transmission is possible with DCI format 0_0 or 0_1.

Configured grant type 1 PUSCH transmission may be semi-statically configured through reception of configuredGrantConfig including rrc-ConfiguredUplinkGrant of [Table 14] through higher layer signaling without receiving the UL grant within the DCI. Configured grant type 2 PUSCH transmission may be semi-persistently scheduled by the UL grant within the DCI after reception of configuredGrantConfig not including rrc-ConfiguredUplinkGrant of [Table 14] through higher layer signaling. In a case where the PUSCH transmission operates by the configured grant, parameters applied to the PUSCH transmission are applied through the configuredGrantConfig, which is the higher layer signaling of [Table 14], except for dataScramblingIdentityPUSCH, txConfig, codebookSubset, maxRank, and scaling of UCI-OnPUSCH provided as pusch-Config of [Table 15], which is the higher layer signaling. If the UE is provided with transformPrecoder within the configuredGrantConfig, which is the higher layer signaling of [Table 14], the UE applies tp-pi2BPSK within the pusch-Config of [Table 15] for the PUSCH transmission operating by the configured grant.

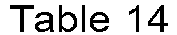

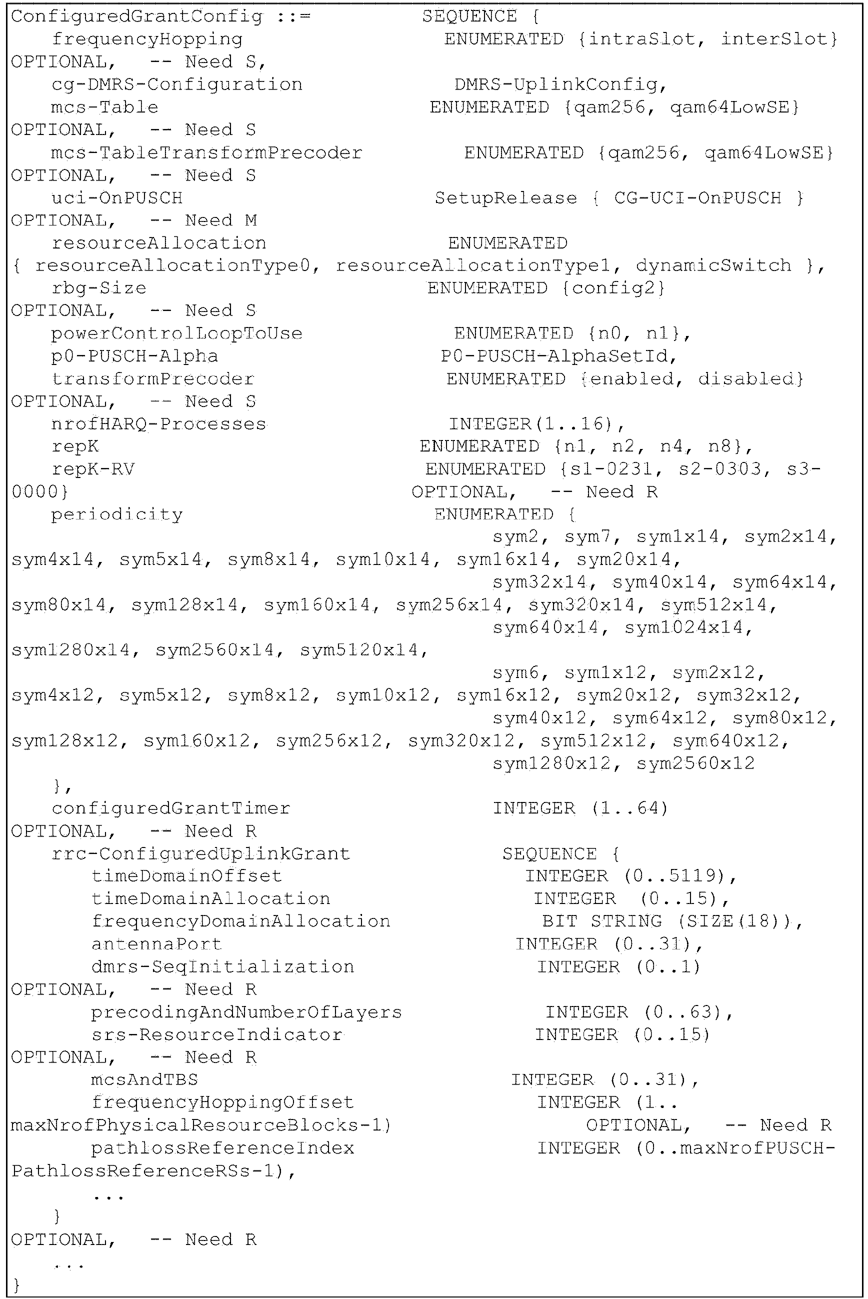

Next, a PUSCH transmission method is described. A DMRS antenna port for PUSCH transmission is the same as an antenna port for SRS transmission. The PUSCH transmission may follow a codebook-based transmission method and a non-codebook based transmission method, respectively, according to whether a value of txConfig within pusch-Config of [Table 15], which is higher layer signaling, is 'codebook' or 'nonCodebook'.

As described above, the PUSCH transmission may be dynamically scheduled through DCI format 0_0 or 0_1, and may be semi-statically configured by a configured grant. If the UE is instructed with scheduling for the PUSCH transmission through DCI format 0_0, the UE performs beam configuration for the PUSCH transmission using pucch-spatialRelationInfoID corresponding to a UE-specific PUCCH resource corresponding to a minimum ID within an activated uplink BWP in a serving cell, and in this case, the PUSCH transmission is based on a single antenna port. The UE does not expect scheduling for the PUSCH transmission through DCI format 0_0 within a BWP where a PUCCH resource including pucch-spatialRelationInfo is not configured. If the UE is not configured with txConfig within the pusch-Config of [Table 15], the UE does not expect to be scheduled with DCI format 0_1.

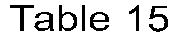

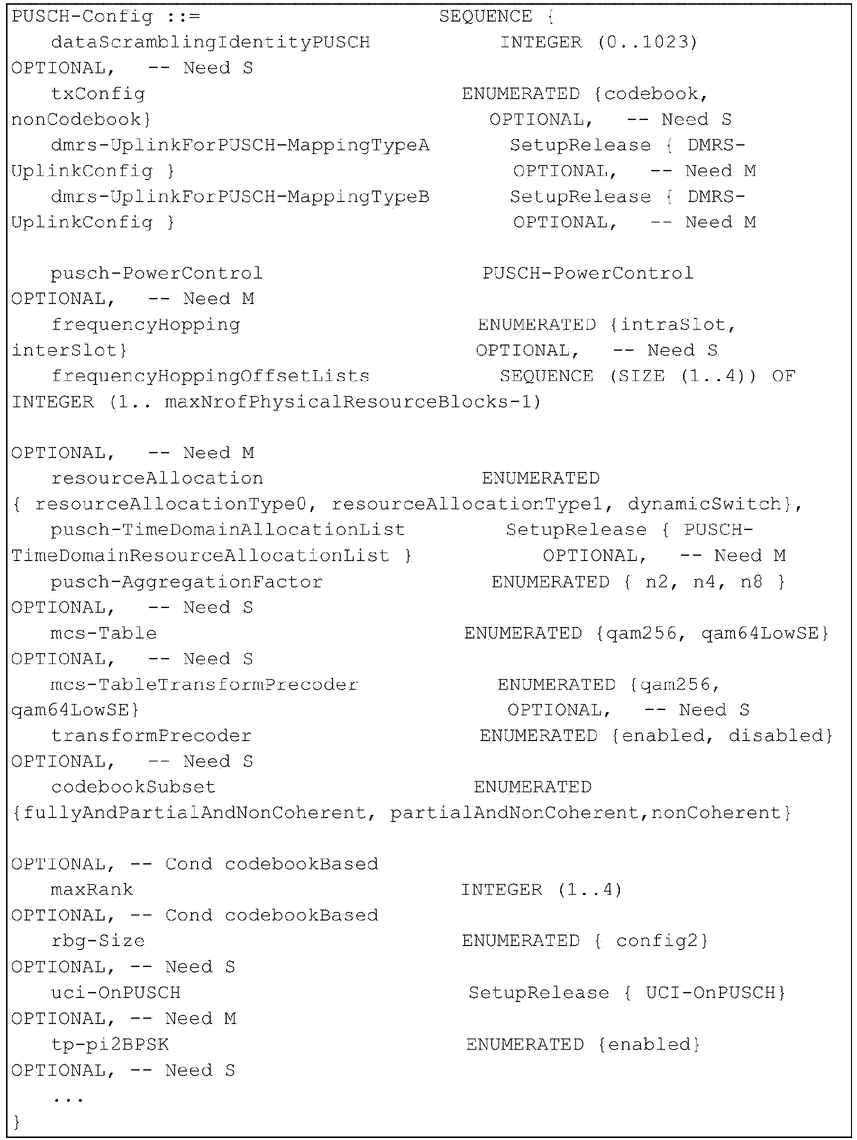

Next, codebook-based PUSCH transmission is described. Codebook-based PUSCH transmission may be dynamically scheduled through DCI format 0_0 or 0_1, and may semi-statically operate by a configured grant. If codebook-based PUSCH is dynamically scheduled by DCI format 0_1 or is semi-statically configured by a configured grant, the UE determines a precoder for the PUSCH transmission based on an SRS resource indicator (SRI), a transmission precoding matrix indicator (TPMI), and a transmission rank (a number of PUSCH transmission layers).

In this case, the SRI may be given through a field SRS resource indicator within DCI or may be configured through higher layer signaling srs-ResourceIndicator. The UE is configured with at least one SRS resource upon the codebook-based PUSCH transmission, and may be configured with up to two. In a case where the UE is provided with the SRI through the DCI, an SRS resource indicated by the corresponding SRI means an SRS resource corresponding to the SRI among SRS resources transmitted before PDCCH including the corresponding SRI. In addition, the TPMI and the transmission rank may be given through a field precoding information and number of layers within the DCI or may be configured through higher layer signaling precodingAndNumberOfLayers. The TPMI is used to indicate a precoder applied to the PUSCH transmission. If the UE is configured with one SRS resource, the TPMI is used to indicate a precoder to be applied in the configured one SRS resource. If the UE is configured with a plurality of SRS resources, the TPMI is used to indicate a precoder to be applied in an SRS resource indicated through the SRI.

A precoder to be used for the PUSCH transmission is selected from an uplink codebook having a same number of antenna ports as an nrofSRS-Ports value within higher layer signaling SRS-Config. In the codebook-based PUSCH transmission, the UE determines a codebook subset based on the TPMI and codebookSubset within higher layer signaling pusch-Config. The codebookSubset within the higher layer signaling pusch-Config may be configured as one of 'fullyAndPartialAndNonCoherent', 'partialAndNonCoherent', or 'nonCoherent' based on UE capability reported by the UE to a base station. If the UE reported 'partialAndNonCoherent' as the UE capability, the UE does not expect a value of the higher layer signaling codebookSubset to be configured as 'fullyAndPartialAndNonCoherent'. In addition, if the UE reported 'nonCoherent' as the UE capability, the UE does not expect the value of the higher layer signaling codebookSubset to be configured as 'fullyAndPartialAndNonCoherent' or 'partialAndNonCoherent'. In a case where nrofSRS-Ports within higher layer signaling SRS-ResourceSet points to two SRS antenna ports, the UE does not expect the value of the higher layer signaling codebookSubset to be configured as 'partialAndNonCoherent'.

The UE may be configured with one SRS resource set in which a value of usage within higher layer signaling SRS-ResourceSet is configured as 'codebook', and one SRS resource may be indicated through the SRI within the corresponding SRS resource set. If a plurality of SRS resources are configured within an SRS resource set in which a usage value within higher layer signaling SRS-ResourceSet is configured as 'codebook', the UE expects that a value of nrofSRS-Ports within higher layer signaling SRS-Resource is configured as a same value for all SRS resources.

The UE transmits one or a plurality of SRS resources included within an SRS resource set in which a value of usage is configured as 'codebook' to the base station according to higher layer signaling, and the base station selects one among the SRS resources transmitted by the UE and instructs the UE to perform PUSCH transmission using transmission beam information of the corresponding SRS resource. In this case, in the codebook-based PUSCH transmission, the SRI is used as information for selecting an index of one SRS resource and is included within DCI. Additionally, the base station includes information indicating TPMI and rank to be used by the UE for the PUSCH transmission in the DCI. The UE performs the PUSCH transmission by applying the indicated rank and a precoder indicated by the TPMI based on a transmission beam of a corresponding SRS resource using the SRS resource indicated by the SRI.

Next, non-codebook based PUSCH transmission is described. Non-codebook based PUSCH transmission may be dynamically scheduled through DCI format 0_0 or 0_1, and may semi-statically operate by a configured grant. In a case where at least one SRS resource is configured within an SRS resource set in which a value of usage within higher layer signaling SRS-ResourceSet is configured as 'nonCodebook', the UE may be scheduled with non-codebook based PUSCH transmission through DCI format 0_1.

For an SRS resource set in which a value of usage within higher layer signaling SRS-ResourceSet is configured as 'nonCodebook', the UE may be configured with one associated NZP CSI-RS resource (non-zero power CSI-RS). The UE may perform calculation for a precoder for SRS transmission through measurement for the NZP CSI-RS resource associated with the SRS resource set. If a difference between a last reception symbol of an aperiodic NZP CSI-RS resource associated with the SRS resource set and a first symbol of aperiodic SRS transmission in the UE is less than 42 symbols, the UE does not expect that information for the precoder for the SRS transmission is updated.

If a value of resourceType within higher layer signaling SRS-ResourceSet is configured as 'aperiodic', the associated NZP CSI-RS is indicated by an SRS request, which is a field within DCI format 0_1 or 1_1. In this case, if the associated NZP CSI-RS resource is an aperiodic NZP CSI-RS resource, the existence of the associated NZP CSI-RS is indicated for a case where a value of the SRS request field within the DCI format 0_1 or 1_1 is not '00'. In this case, the corresponding DCI should not indicate cross carrier or cross BWP scheduling. In addition, if the value of the SRS request indicates existence of the NZP CSI-RS, the corresponding NZP CSI-RS is located in a slot where PDCCH including the SRS request field is transmitted. In this case, TCI states configured in a scheduled subcarrier are not configured as QCL-TypeD.

If a periodic or semi-persistent SRS resource set is configured, the associated NZP CSI-RS may be indicated through associatedCSI-RS within higher layer signaling SRS-ResourceSet. For non-codebook based transmission, the UE does not expect that spatialRelationInfo, which is higher layer signaling for an SRS resource, and associatedCSI-RS within higher layer signaling SRS-ResourceSet are configured together.

In a case where the UE is configured with a plurality of SRS resources, the UE may determine a precoder and a transmission rank to be applied to PUSCH transmission based on the SRI indicated by the base station. In this case, the SRI is indicated through a field SRS resource indicator within DCI or is configured through higher layer signaling srs-ResourceIndicator. Similar to the aforementioned codebook-based PUSCH transmission, in a case where the UE is provided with the SRI through the DCI, an SRS resource indicated by the corresponding SRI means an SRS resource corresponding to the SRI among SRS resources transmitted before PDCCH including the corresponding SRI. The UE may use one or a plurality of SRS resources for SRS transmission, and a maximum number of SRS resources and a maximum number of SRS resources that can be simultaneously transmitted in a same symbol within one SRS resource set are determined by UE capability reported by the UE to the base station. In this case, SRS resources simultaneously transmitted by the UE occupy a same RB. The UE configures one SRS port for each SRS resource. Only one SRS resource set in which a value of usage within higher layer signaling SRS-ResourceSet is configured as 'nonCodebook' can be configured, and a maximum of four SRS resources for non-codebook based PUSCH transmission can be configured.

The base station transmits one NZP-CSI-RS associated with the SRS resource set to the UE, and the UE calculates a precoder to be used when transmitting one or a plurality of SRS resources within the corresponding SRS resource set based on a result measured upon reception of the corresponding NZP-CSI-RS. The UE applies the calculated precoder when transmitting one or a plurality of SRS resources within the SRS resource set in which usage is configured as 'nonCodebook' to the base station, and the base station selects one or a plurality of SRS resources among the received one or plurality of SRS resources. In this case, in non-codebook based PUSCH transmission, the SRI represents an index capable of expressing a combination of one or a plurality of SRS resources, and the SRI is included within DCI. In this case, a number of SRS resources indicated by the SRI transmitted by the base station may be a number of transmission layers of the PUSCH, and the UE transmits the PUSCH by applying the precoder applied to the SRS resource transmission to each layer.

### [CA/DC Related]

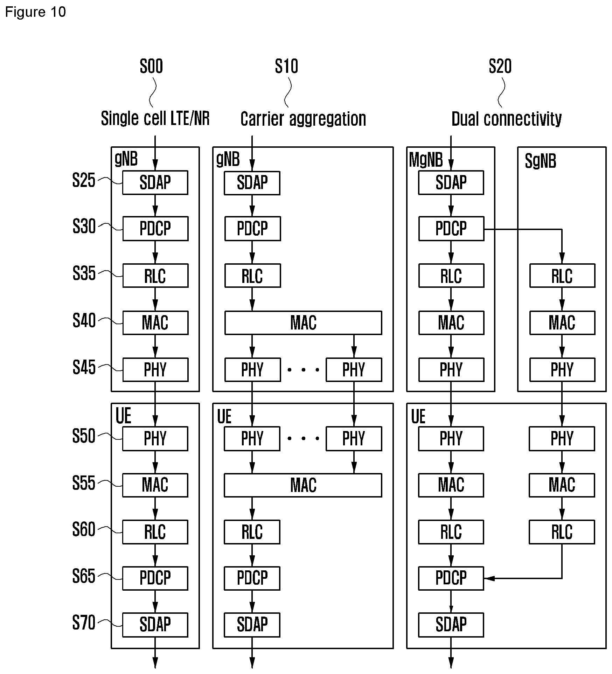

FIG. 10 is a diagram illustrating radio protocol structures of a gNB and a UE in single cell, carrier aggregation, and dual connectivity situations according to an embodiment of the present disclosure.

With reference to FIG. 10, radio protocols of a next-generation mobile communication system consist of NR service data adaptation protocol (SDAP) S25 and S70, NR packet data convergence protocol (PDCP) S30 and S65, NR radio link control (RLC) S35 and S60, and NR medium access control (MAC) S40 and S55 in the UE and an NR gNB, respectively.

Main functions of the NR SDAP S25, S70 may include some of the following functions.
- Transfer function of user plane data (transfer of user plane data)
- Mapping function between a QoS flow and a data bearer for both uplink and downlink (mapping between a QoS flow and a DRB for both DL and UL)
- Marking function of QoS flow ID in both uplink and downlink (marking QoS flow ID in both DL and UL packets)
- Function of mapping reflective QoS flow to data bearer for the uplink SDAP PDUs (reflective QoS flow to DRB mapping for the UL SDAP PDUs).

For the SDAP layer entity, the UE may be configured, via an RRC message, with whether to use a header of the SDAP layer entity or whether to use functions of the SDAP layer entity for each PDCP layer entity, for each bearer, or for each logical channel, and in a case where the SDAP header is configured, a NAS reflective QoS configuration 1-bit indicator and an AS reflective QoS configuration 1-bit indicator of the SDAP header may instruct the UE to update or reconfigure mapping information for a QoS flow and a data bearer of uplink and downlink. The SDAP header may include QoS flow ID information representing QoS. The QoS information may be used as data processing priority, scheduling information, and the like for supporting smooth services.

Main functions of NR PDCP S30, S65 may include some of the following functions.
- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink).

In the above, the reordering function of the NR PDCP entity refers to a function of reordering PDCP PDUs received from a lower layer in order based on a PDCP sequence number (SN), and may include a function of delivering data to an upper layer in the reordered order. Alternatively, the reordering function of the NR PDCP entity may include a function of delivering immediately without considering order, may include a function of recording lost PDCP PDUs by reordering the order, may include a function of making a status report for the lost PDCP PDUs to a transmitting side, and may include a function of requesting retransmission for the lost PDCP PDUs.

Main functions of the NR RLC S35, S60 may include some of the following functions.
- Data transfer function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error Correction through ARQ)
- Concatenation, segmentation, reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

In the above, the in-sequence delivery function of the NR RLC entity means a function of delivering RLC SDUs received from a lower layer to an upper layer in order. The in-sequence delivery function of the NR RLC entity may include a function of reassembling and delivering, in a case where one original RLC SDU is received by being segmented into several RLC SDUs, may include a function of reordering received RLC PDUs based on an RLC sequence number (SN) or a PDCP sequence number (SN), may include a function of recording lost RLC PDUs by reordering the order, may include a function of making a status report for the lost RLC PDUs to a transmitting side, and may include a function of requesting retransmission for the lost RLC PDUs. The in-sequence delivery function of the NR RLC entity may include a function of delivering only RLC SDUs up to the lost RLC SDU to the upper layer in order in a case where there is a lost RLC SDU, or may include a function of delivering all RLC SDUs received before a timer started to the upper layer in order if a predetermined timer expired even if there is a lost RLC SDU. Alternatively, the in-sequence delivery function of the NR RLC entity may include a function of delivering all RLC SDUs received until now to the upper layer in order if a predetermined timer expired even if there is a lost RLC SDU. In addition, in the above, RLC PDUs may be processed in a received order (regardless of an order of sequence numbers, in an arriving order) and delivered to the PDCP entity regardless of order (out-of sequence delivery), and in a case of a segment, segments stored in a buffer or to be received later may be received and reconstructed into one complete RLC PDU, then processed and delivered to the PDCP entity. The NR RLC layer may not include a concatenation function, and the corresponding function may be performed in the NR MAC layer or replaced by a multiplexing function of the NR MAC layer.

In the above, the out-of-sequence delivery function of the NR RLC entity refers to a function of delivering RLC SDUs received from a lower layer to an upper layer immediately regardless of order, and may include a function of reassembling and delivering, in a case where one original RLC SDU is received by being segmented into several RLC SDUs, and may include a function of storing RLC SNs or PDCP SNs of received RLC PDUs and recording lost RLC PDUs by aligning the order.

NR MAC S40, S55 may be connected with several NR RLC layer entities configured in one UE, and main functions of the NR MAC may include some of the following functions.
- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Function for priority handling between logical channels (Priority handling between logical channels of one UE)
- Function for priority handling between UEs (Priority handling between UEs by means of dynamic scheduling)
- MBMS service identification function (MBMS service identification)
- Transport format selection function (Transport format selection)
- Padding function (Padding)

NR PHY layer S45, S50 may perform an operation of channel-coding and modulating upper layer data, making the upper layer data into OFDM symbols and transmitting the OFDM symbols to a radio channel, or demodulating and channel-decoding OFDM symbols received through a radio channel and delivering the same to an upper layer.

The radio protocol structure may be variously changed in detailed structure according to a carrier (or cell) operation scheme. For example, in a case where a gNB transmits data to a UE based on a single carrier (or cell), the gNB and the UE use a protocol structure having a single structure for each layer as in S00. On the other hand, in a case where a gNB transmits data to a UE based on carrier aggregation (CA) using multiple carriers in a single TRP, the gNB and the UE use a protocol structure having a single structure up to RLC but multiplexing a PHY layer through a MAC layer as in S10. As another example, in a case where a gNB transmits data to a UE based on dual connectivity (DC) using multiple carriers in multiple TRPs, the gNB and the UE use a protocol structure having a single structure up to RLC but multiplexing a PHY layer through a MAC layer as in S20.

With reference to the aforementioned descriptions related to PDCCH and beam configuration, in current Rel-15 and Rel-16 NR, PDCCH repetition transmission is not supported, so it is difficult to achieve required reliability in scenarios requiring high reliability such as URLLC. In the present invention, a PDCCH repetition transmission method through a plurality of transmission points (TRP) is provided to improve PDCCH reception reliability of a UE. A specific method is described specifically in the following embodiments.

Hereinafter, embodiments of the present disclosure are described in detail together with the accompanying drawings. Contents in the present disclosure are applicable in FDD and TDD systems. Hereinafter, in the present disclosure, higher layer signaling (or higher-layer signaling) is a signal delivery method delivered from a gNB to a UE using a downlink data channel of a physical layer, or from a UE to a gNB using an uplink data channel of a physical layer, and may also be mentioned as RRC signaling, or PDCP signaling, or medium access control (MAC) control element (MAC CE).

In describing the present disclosure hereinafter, higher layer signaling may be signaling corresponding to at least one or a combination of one or more among the following signaling.
- MIB (Master Information Block)
- SIB (System Information Block) or SIB X (X=1, 2, ...)
- RRC (Radio Resource Control)
- MAC (Medium Access Control) CE (Control Element)

In addition, L1 signaling may be a signaling corresponding at least one or a combination of one or more among signaling methods using the following physical layer channels or signaling.
- PDCCH (Physical Downlink Control Channel)
- DCI (Downlink Control Information)
- UE-specific DCI
- Group common DCI
- Common DCI
- Scheduling DCI (for example, DCI used for a purpose of scheduling downlink or uplink data)
- Non-scheduling DCI (for example, DCI not for a purpose of scheduling downlink or uplink data)
- PUCCH (Physical Uplink Control Channel)
- UCI (Uplink Control Information)

Hereinafter, in the present disclosure, determining priority between A and B may be variously mentioned, such as performing an operation corresponding to selecting one having a higher priority according to a pre-determined priority rule, or omitting (omit or drop) an operation for one having a lower priority.

In the present disclosure hereinafter, the aforementioned examples are described through a plurality of embodiments, but these are not independent, and it is possible that one or more embodiments are applied simultaneously or complexly.

### [Random Access procedure in SBFD]

Meanwhile, in 3GPP, subband non- overlapping full duplex (SBFD) was introduced as a new duplex scheme based on NR. SBFD is a technology capable of expanding uplink coverage of a UE by a gNB receiving uplink transmission from the UE by as much as increased uplink resources by utilizing a part of downlink resources as uplink resources in a TDD band (spectrum) of a frequency below 6GHz or a frequency of 6GHz or higher, and reducing feedback delay by receiving feedback for downlink transmission from the UE in the expanded uplink resources. In the present disclosure, a UE capable of receiving information on whether SBFD is supported from a gNB and performing uplink transmission in a part of downlink resources may be referred to as an SBFD UE (SBFD-capable UE) for convenience. In order to define the SBFD scheme in standards and for the SBFD UE to determine that the SBFD is supported in a specific cell (or frequency, frequency band), the following schemes may be considered.

First Scheme. Besides a frame structure type of existing unpaired spectrum (or TDD) or paired spectrum (or FDD), another frame structure type (for example, frame structure type 2) may be introduced to define the aforementioned SBFD. The aforementioned frame structure type 2 may be defined to be supported in the specific frequency or frequency band, or the gNB may indicate whether SBFD is supported to the UE as system information. The SBFD UE may determine whether SBFD is supported in the specific cell (or frequency, frequency band) by receiving the system information including whether SBFD is supported.

Second Scheme. Whether the SBFD is additionally supported in a specific frequency or frequency band of existing unpaired spectrum (or TDD) may be indicated to the UE without definition for a new frame structure type. In the second scheme, it may be defined whether the SBFD is additionally supported in the specific frequency or frequency band of the existing unpaired spectrum, or the gNB may indicate whether SBFD is supported to the UE as system information. The SBFD UE may determine whether SBFD is supported in the specific cell (or frequency, frequency band) by receiving the system information including whether SBFD is supported.

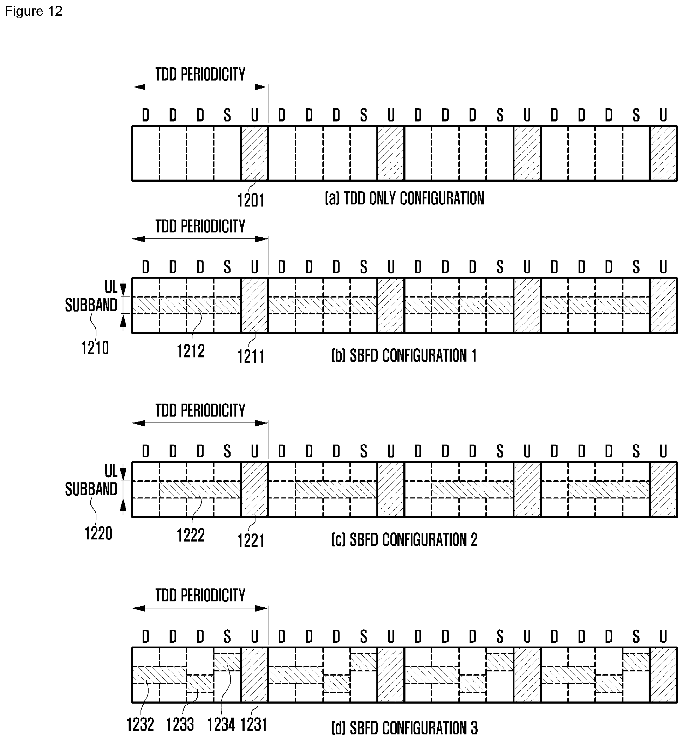

In the first scheme and the second scheme, information on whether SBFD is supported may be information indirectly representing whether SBFD is supported by additionally configuring a part of downlink resources as uplink resources (for example, SBFD resource configuration information in FIG. 12 to be described later) besides configuration for TDD UL (uplink)-DL (downlink) resource configuration information indicating downlink slot (or symbol) resources and uplink slot (or symbol) resources of TDD, or may be information directly indicating whether SBFD is supported.

In the present disclosure, the SBFD UE may acquire cell synchronization by receiving a synchronization signal block in initial cell access for accessing a cell (or gNB). A process of acquiring the cell synchronization may be the same for the SBFD UE and an existing TDD UE. Thereafter, the SBFD UE may determine whether the cell supports SBFD through MIB acquisition, SIB acquisition, or a random access process.

System information for transmitting the information on whether SBFD is supported may be system information transmitted separately by being distinguished from system information for a UE supporting a different version of standards (for example, an existing TDD UE) within a cell. The SBFD UE may determine whether SBFD is supported by acquiring all or a part of the system information for the existing TDD UE and the system information transmitted separately. In a case where the SBFD UE acquires only the system information for the existing TDD UE, or acquires system information for non-support of SBFD, the SBFD UE may determine that the cell (or gNB) supports only TDD.

In a case where the information on whether SBFD is supported is included within system information for a UE supporting a different version of standards (for example, an existing TDD UE), the information on whether SBFD is supported may be inserted at a last so as not to affect system information acquisition of the existing TDD UE. In a case where the SBFD UE fails to acquire the information on whether SBFD is supported inserted at the last, or acquires information that SBFD is not supported, the SBFD UE may determine that the cell (or gNB) supports only TDD.

Alternatively, in a case where the information on whether SBFD is supported is included within system information for a UE supporting a different version of standards (for example, an existing TDD UE), the information on whether SBFD is supported may be transmitted by a separate PDSCH so as not to affect system information acquisition of the existing TDD UE. That is, an SBFD non-support UE may receive a first SIB (or SIB1) including existing TDD-related system information in a first PDSCH. An SBFD support UE may receive a first SIB (or SIB1) including existing TDD-related system information in a first PDSCH, and may receive a second SIB including SBFD-related system information in a second PDSCH. Here, the first PDSCH and the second PDSCH may be scheduled by a first PDCCH and a second PDCCH, and cyclic redundancy code (CRC) of the first PDCCH and the second PDCCH may be scrambled with a same RNTI (for example, SI-RNTI). A search space for monitoring the second PDCCH may be acquired from system information of the first PDSCH, and if it is not acquired (that is, if the system information of the first PDSCH does not include information for a search space), the UE may receive the second PDCCH in a same search space as the search space of the first PDCCH.

As described above, in a case where the SBFD UE determines that the cell (or gNB) supports only TDD, the SBFD UE may perform a random access procedure and transmission and reception of data/control signals identically to the existing TDD UE.

The gNB configures separate random access resources for each of the existing TDD UE or the SBFD UE (for example, an SBFD UE supporting full-duplex communication and an SBFD UE supporting half-duplex communication), and may transmit configuration information for the random access resources (control information or configuration information representing time-frequency resources that can be used for PRACH) to the SBFD UE through system information. System information for transmitting the information for the random access resources may be system information transmitted separately, which is distinguished from system information for a UE supporting a different version of standards (for example, an existing TDD UE) within a cell.

The gNB configures random access resources for the TDD UE, and may additionally configure separate random access resources for the SBFD UE. Here, the SBFD UE may use the random access resources for the TDD UE, and the SBFD UE may not be able to use the random access resources for the TDD UE. In the latter case, the SBFD UE may always use only the separate random access resources for the SBFD UE.

The SBFD UE may be instructed from the gNB whether the random access resources for the TDD UE can be used. This may be indicated by being included in an SIB. That is, in the SIB, separate random access resources for the SBFD UE may be configured, and along with the configuration, usability of the random access resources for the TDD UE may be indicated. This may be indicated by 1 bit. If the 1 bit is '0' (or FALSE), the SBFD UE cannot use the random access resources for the TDD UE. If the 1 bit is '1' (or TRUE), the SBFD UE can use the random access resources for the TDD UE.

The gNB may determine a type of a UE attempting to access a cell based on random access resources used by the UE. For example, the SBFD UE may transmit PRACH through separate random access resources for the SBFD UE, and the gNB, upon receiving the PRACH, may determine that the SBFD UE is attempting cell access. For example, the TDD UE may transmit PRACH through random access resources for the TDD UE, and the gNB, upon receiving the PRACH, may determine that the TDD UE is attempting cell access. For reference, in a case where it is allowed for the SBFD UE to transmit PRACH through the random access resources of the TDD UE, the gNB may be ambiguous whether a type of the UE that transmitted the PRACH is the TDD UE or the SBFD UE. In this case, the gNB may always assume the type of the UE to be the TDD UE.

In a case where the gNB determines the UE as the SBFD UE, when scheduling message 2 (Msg2), message 3 (Msg3), message 4 (Msg4), and the like for the UE, the gNB may schedule based on uplink subband configuration. That is, when the gNB schedules reception of Msg2 and Msg4 for the UE, the gNB may schedule so that the Msg2 and Msg4 are not received in an uplink subband (the UE, upon receiving PDSCH including the Msg2 and Msg4, performs PDSCH reception in frequency resources except for the uplink subband). When the gNB schedules Msg3 PUSCH for the UE, the gNB may schedule so that the Msg3 PUSCH is transmitted within the uplink subband.

In a case where the gNB determines the UE as the TDD UE, when scheduling Msg2, Msg3, and Msg4 for the UE, the gNB cannot use uplink subband configuration. That is, even if an uplink subband is configured in downlink symbols or flexible symbols, the gNB may assume that the UE cannot acquire the uplink subband configuration information. When the gNB schedules Msg3 PUSCH for the UE, the Msg3 PUSCH may be scheduled in flexible symbols or uplink symbols. In other words, the Msg3 PUSCH cannot be scheduled in the uplink subband.

Alternatively, the gNB may configure common random access resources for all UEs within a cell without configuring separate random access resources for the SBFD UE. In this case, configuration information for the random access resources may be transmitted to all UEs within the cell through system information, and the SBFD UE that received the system information may perform random access in the aforementioned random access resources. Thereafter, the SBFD UE may complete a random access process and proceed to an RRC connected mode for transmitting and receiving data with the cell. After the RRC connected mode, the aforementioned SBFD UE may receive a higher layer signal or a physical signal from the gNB from which the UE can determine that some frequency resources of the downlink time resources are configured as uplink resources, and perform an SBFD operation, for example, transmitting an uplink signal in the uplink resources.

In a case where the SBFD UE determines that the cell supports SBFD, by transmitting capability information including at least one or more of whether the UE supports SBFD, whether full-duplex communication or half-duplex communication is supported, a number of transmission or reception antennas equipped (or supported), and the like to the gNB, the UE may notify the gNB that the UE attempting to access is an SBFD UE. Alternatively, in a case where half-duplex communication support is an essential implementation for the SBFD UE, whether the half-duplex communication is supported may be omitted in the capability information. Reporting of the SBFD UE for the capability information may be reported to the gNB through a random access process, or may be reported to the gNB after completing the random access process, or may be reported to the gNB after proceeding to an RRC connected mode for transmitting and receiving data with the cell.

The SBFD UE may support half-duplex communication performing only uplink transmission or downlink reception at one moment like an existing TDD UE, or may support full-duplex communication performing both uplink transmission and downlink reception at one moment. Therefore, whether the half-duplex communication or the full-duplex communication is supported may be reported by the SBFD UE to the gNB through capability reporting, and after the reporting, the gNB may configure for the SBFD UE whether the SBFD UE will transmit and receive using the half-duplex communication or transmit and receive using the full-duplex communication. In a case where the SBFD UE reports capability for the half-duplex communication to the gNB, since a duplexer generally does not exist, a switching gap for changing RF between transmission and reception may be required in a case of operating in FDD or TDD.

Generally, a UE may form a radio link with a network through a random access procedure based on synchronization with the network and system information acquired in a cell search process of a cell. Random access may use a contention-based or a contention-free scheme. In an initial access stage of a cell, in a case where the UE performs cell selection and reselection, for example, for a purpose of moving from an RRC_IDLE state to an RRC_CONNECTED state, or the like, the contention-based random access scheme may be used. Contention-free random access may be used to reconfigure uplink synchronization in a case where downlink data has arrived, in a case of handover, or in a case of location measurement.

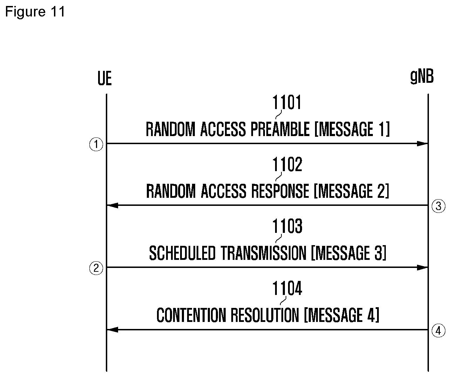

FIG. 11 illustrates a random access procedure in a wireless communication system according to an embodiment of the present disclosure.

With reference to FIG. 11, a contention-based random access procedure is illustrated as an example. In addition, although not illustrated in FIG. 11, a gNB may transmit a synchronization signal block as described in the aforementioned embodiments. In this case, the gNB may periodically transmit the synchronization signal block using beam sweeping. For example, the gNB may transmit a synchronization signal block including PSS/SSS (synchronization signal) and PBCH (broadcast channel) signals using a maximum of 64 different beams during 5ms, and a plurality of synchronization signal blocks may be transmitted using different beams. A UE detects (selects) a synchronization signal block having an optimal beam direction (for example, a beam direction where received signal strength is strongest or greater than a predetermined threshold), and may transmit a preamble using physical random access channel (PRACH) resources related to the detected synchronization signal block. For example, as a first step 1101 of the random access procedure, the UE may transmit a random access preamble (or message 1) to the gNB. The gNB that received the random access preamble may measure a transmission delay value between the UE and the gNB, and align uplink synchronization. Specifically, the UE may transmit a random access preamble randomly selected within a random access preamble set given by system information in advance. Further, initial transmission power of the random access preamble may be determined according to pathloss between the gNB and the UE measured by the UE. In addition, the UE may determine a transmission beam direction (or transmission beam or beam) of the random access preamble based on the synchronization signal block received from the gNB and transmit the random access preamble by applying the determined transmission beam direction.

In a second step 1102, the gNB may transmit a response (random access response (RAR), or message 2 (Msg2)) to the detected random access attempt to the UE. The gNB may transmit an uplink transmission timing control command to the UE from the transmission delay value measured from the random access preamble received in the first step 1101. In addition, the gNB may transmit uplink resources and a power control command to be used by the UE as scheduling information. In the scheduling information, control information for an uplink transmission beam of the UE may be included. RAR is transmitted through PDSCH and may include at least one of the following information:
- a random access preamble sequence index detected by a network (or gNB),
- TC-RNTI (temporary cell radio network temporary identifier),
- uplink scheduling grant, or
- Timing advance value.

If the UE does not receive RAR, which is scheduling information for message 3 (Msg3), from the gNB for a predetermined time in the second step 1102, the UE may proceed with the first step 1101 again. If the first step is proceeded with again, the UE increases transmission power of the random access preamble by a predetermined step and transmits the random access preamble (this is called power ramping), thereby increasing a random access preamble reception probability of the gNB.

In a third step 1103, the UE may transmit uplink information (scheduled transmission, or message 3) including its UE identifier (which may be called UE contention resolution identity) (or if the UE already has a valid UE identifier (C-RNTI) within a cell before initiation of the random access procedure, the valid UE identifier) through an uplink data channel (physical uplink shared channel (PUSCH)) using uplink resources allocated in the second step 1102. The PUSCH may be called message 3 PUSCH (Msg3 PUSCH). Transmission timing of the uplink data channel for transmitting the message 3 may follow the uplink transmission timing control command received from the gNB in the second step 1102. In addition, transmission power of the uplink data channel for transmitting the message 3 may be determined by considering the power control command received from the gNB in the second step 1102 and a power ramping value of the random access preamble. The uplink data channel for transmitting the message 3 may be a first uplink data signal that the UE transmits to the gNB after the random access preamble transmission of the UE.

In a fourth step 1104, if the gNB determines that the UE performed random access without collision with other UEs, the gNB may transmit a message (contention resolution message (CR message), or message 4) including an identifier of the UE that transmitted uplink data in the third step 1103 to the corresponding UE. In this regard, in a case where a plurality of UEs receive a same TC-RNTI in the second step 1102, the plurality of UEs that received the same TC-RNTI each include their respective UE identifiers (UE contention resolution identity) in message 3 and transmit the message 3 to the gNB in the third step 1103, and the gNB may transmit message 4 (CR message) including one UE identifier among identifiers of the plurality of UEs for contention resolution. When the UE receives message 4 (CR message) including its UE identifier from the gNB in the fourth step 1104 (or when the UE transmits message 3 including a UE identifier (C-RNTI) in the third step 1103 and receives UE-specific control information including a CRC based on the UE identifier (C-RNTI) through PDCCH in the fourth step 1104), the UE may determine that the random access was successful. Therefore, a UE that confirmed that its UE identifier is included in message 4 (CR message) among the plurality of UEs that received the same TC-RNTI from the gNB may confirm that the UE succeeded in contention. Further, the UE may transmit HARQ-ACK/NACK representing whether successful reception for the message 4 is performed to the gNB through an uplink control channel (PUCCH).

If the gNB fails in data signal reception from the UE because data transmitted by the UE in the third step 1103 and data of another UE collide with each other, the gNB may not perform data transmission any further to the UE . Accordingly, if the UE does not perform data reception transmitted from the gNB in the fourth step 1104 for a predetermined time interval, the UE determines that random access procedure has failed, and may start again from the first step 1101.

As described above, in a first step 1101 of a random access process, the UE may transmit a random access preamble on PRACH. There are 64 available preamble sequences in each cell, and four long preamble formats and nine short preamble formats may be used according to a transmission type. The UE generates 64 preamble sequences using a root sequence index and a cyclic shift value signaled as system information, and may use one sequence randomly selected as a preamble.

The gNB may notify the UE of configuration information for random access resources, for example, control information (or configuration information) representing time-frequency resources that can be used for PRACH, using at least one of SIB, higher layer signaling (radio resource control (RRC) information), or downlink control information (DCI). Frequency resources for PRACH transmission may indicate a starting RB point of transmission to the UE , and a number of RBs used may be determined according to a preamble format transmitted through the PRACH and applied subcarrier spacing. Time resources for PRACH transmission may notify a pre-determined PRACH configuration periodicity, a subframe index and a start symbol including a PRACH occasion (which may be used interchangeably with a transmission time point), and a number of PRACH occasions within a slot, and the like, through a PRACH configuration index (0 to 255) as in Table 16 below. The UE determines validity for PRACH occasions indicated in the PRACH configuration index, and may determine only valid PRACH occasions as a PRACH occasion through which a random access preamble can be transmitted. Through the PRACH configuration index, random access configuration information included in SIB, and an index of SSB selected by the UE, the UE confirms time and frequency resources to transmit the random access preamble, and may transmit the selected sequence as the preamble to the gNB.

**Table 16**

| **PRACH Configuration Index** | **Preamble format** | ***n*_{f} mod x = *y*** | | **Subframe number** | **Starting symbol** | **Number of PRACH slots within a subframe** | ${N}_{t}^{RA , slot}$ **, number of time-domain PRACH occasions within a PRACH slot** | ${N}_{dur}^{RA}$ **, PRACH duration** |
|---|---|---|---|---|---|---|---|---|
| | | *x* | *y* | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| ... | ... | ... | ... | ... | ... | ... | ... | ... |
| 104 | A1 | 1 | 0 | 1,4,7 | 0 | 2 | 6 | 2 |
| ... | ... | ... | ... | ... | .... | ... | ... | ... |
| 251 | C2 | 1 | 0 | 2,7 | 0 | 2 | 2 | 6 |
| 252 | C2 | 1 | 0 | 1,4,7 | 0 | 2 | 2 | 6 |
| 253 | C2 | 1 | 0 | 0,2,4,6,8 | 0 | 2 | 2 | 6 |
| 254 | C2 | 1 | 0 | 0,1,2,3,4,5,6,7,8,9 | 0 | 2 | 2 | 6 |
| 255 | C2 | 1 | 0 | 1,3,5,7,9 | 0 | 2 | 2 | 6 |

Meanwhile, according to an embodiment of the present disclosure, a scheme in which an SBFD UE determines validity of a PRACH occasion through a PRACH configuration index and SBFD configuration for performing PRACH transmission and performs PRACH transmission through the PRACH occasion determined to be valid as described above, and a procedure of the SBFD UE when the valid PRACH occasion and downlink reception overlap are required.

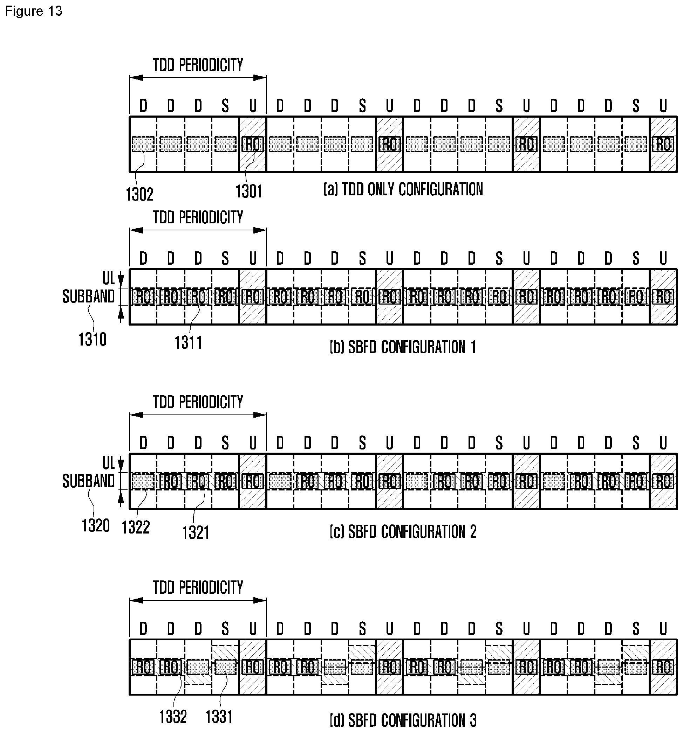

Therefore, a method in which the SBFD UE determines validity of a PRACH occasion and an operation of the SBFD UE in a case where it is configured or scheduled so that a valid PRACH occasion and downlink reception occur simultaneously will be described using FIG. 12 and FIG. 13.

FIG. 12 is a diagram illustrating an example in which SBFD is operated in a TDD band of a wireless communication system according to an embodiment of the present disclosure.

In (a) of FIG. 12, a case where TDD is operated in a specific frequency band is illustrated. In a cell operating the TDD, a base station may transmit and receive a signal including data/control information in a downlink slot (or symbol), an uplink slot (or symbol) 1201, and a flexible slot (or symbol) based on configuration for TDD UL-DL resource configuration information indicating downlink slot (or symbol) resources and uplink slot (or symbol) resources of TDD with an existing TDD UE or an SBFD UE.

In FIG. 12, it may be assumed that a DDDSU slot format is configured according to the TDD UL-DL resource configuration information. Here, 'D' is a slot configured with only downlink symbols, 'U' is a slot configured with only uplink symbols, and 'S' is a slot that is neither 'D' nor 'U', that is, a slot including downlink symbols through uplink symbols or including flexible symbols. Here, for convenience, it may be assumed that S is configured with 12 downlink symbols and 2 flexible symbols. Further, the DDDSU slot format may be repeated according to the TDD UL-DL resource configuration information. That is, a repetition periodicity of TDD configuration is assumed as 5 slots (5ms in a case of 15kHz SCS, 2.5ms in a case of 30kHz SCS, and the like).

Next, in (b) to (d) of FIG. 12, cases where SBFD is operated together with TDD in a specific frequency band are illustrated.

With reference to (b) of FIG. 12, a UE may be configured with some band among frequencies of a cell as a frequency band 1210 where uplink transmission is possible. This band may be called an uplink subband (UL subband). Further, the uplink subband (UL subband) may be applied to all symbols of all slots. The UE may transmit an uplink channel or a signal scheduled in an uplink slot (or symbol) 1211 and all symbols 1212 within the subband (UL subband). However, the UE cannot transmit an uplink channel or a signal in a band other than the subband (UL subband) in a downlink slot (or symbol) and a flexible slot (or symbol).

With reference to (c) of FIG. 12, the UE is configured with some band among frequencies of a cell as a frequency band 1220 where uplink transmission is possible, and may be configured with a time domain where the frequency band is activated. Here, this frequency band may be called an uplink subband (UL subband). In (c) of FIG. 12, the uplink subband (UL subband) is deactivated in a first slot, and the uplink subband (UL subband) may be activated in remaining slots. Therefore, the UE may transmit an uplink channel or a signal in an uplink slot (or symbol) 1221 and the uplink subband (UL subband) 1222 of the remaining slots. Thus, although the uplink subband (UL subband) was activated in slot units here, whether to activate such may be configured in symbol units.

With reference to (d) of FIG. 12, the UE may be configured with time-frequency resources where uplink transmission is possible. The UE may be configured with one or more time-frequency resources as time-frequency resources where uplink transmission is possible. For example, some frequency band 1232 of a first slot and a second slot may be configured as time-frequency resources where uplink transmission is possible. In addition, some frequency band 1233 of a third slot and some frequency band 1234 of a fourth slot may be configured as time-frequency resources where uplink transmission is possible. The UE may transmit an uplink channel or a signal in an uplink slot (or symbol) 1231, some frequency band 1232 of the first slot and the second slot, some frequency band 1233 of the third slot, and some frequency band 1234 of the fourth slot.

In following descriptions, time-frequency resources where uplink transmission is possible in a downlink symbol or a flexible symbol may be called SBFD resources/UL subband.

FIG. 13 is a diagram illustrating valid RACH occasions in TDD configuration and SBFD configuration according to an embodiment of the present disclosure.

Meanwhile, a base station may transmit PRACH configuration to a UE as system information, and RACH occasions may be configured according to the PRACH configuration. The UE may determine all or some RACH occasions among the RACH occasions to be valid. As one method of the present disclosure, the UE may determine valid RACH occasions as follows.

First valid RACH occasions may be determined according to first PRACH configuration (PRACH configuration for a TDD UE).

In an FDD cell, it may be defined that all first RACH occasions according to the configured first PRACH configuration are valid.

In a TDD cell, it may be said that only a second RACH occasion satisfying the following condition among the configured second PRACH configuration is valid.
- In a case where the UE did not receive TDD DL/UL configuration information in the system information, if an RACH occasion in a PRACH slot does not precede SS/PBCH and starts after N_{gap} symbols from a last reception symbol of the SS/PBCH, the UE may determine that the RACH occasion is valid.
- In a case where the UE received TDD DL/UL configuration information in the system information, if an RACH occasion within a UL symbol or an RACH occasion in a PRACH slot does not precede SS/PBCH, starts after N_{gap} symbols from a last reception symbol of the SS/PBCH, and starts after a last DL symbol, the UE may determine that the RACH occasion is valid.

The above method is one example, and the first valid RACH occasions may be determined by other methods.

With reference to (a) of FIG. 13, it is assumed that the UE received DDDSU as TDD DL/UL configuration information, and a first RACH occasion is configured for every slot according to the first PRACH configuration. The UE may determine that first PRACH configuration overlapping with a UL symbol is a first valid RACH occasion. In this case, a fifth slot (a last slot of a TDD periodicity configured with DDDSU) is an uplink slot and a first RACH occasion 1301 may be valid. However, first RACH occasions of first, second, third, and fourth slots (preceding four slots of the TDD periodicity configured with DDDSU) 1302 may not be valid since they do not start after the last downlink symbol. Therefore, the UE determines that the first RACH occasion of four uplink slots (fifth, tenth, fifteenth, and twentieth) within 20 slots is valid, and may determine that the first RACH occasion of the remaining 16 slots is not valid.

In a case where the SBFD UE is configured with time-frequency resources for uplink transmission, SBFD uplink resources, second valid RACH occasions may be determined according to second PRACH configuration (PRACH configuration for the SBFD UE). The UE may determine validity of a second RACH occasion as follows.
- In a case where the UE did not receive TDD DL/UL configuration information in the system information, if a second RACH occasion in a PRACH slot does not precede SS/PBCH and starts after N_{gap} symbols from a last reception symbol of the SS/PBCH, the UE may determine that the second RACH occasion is valid.
- In a case where the UE received TDD DL/UL configuration information in the system information, if a second RACH occasion within a UL symbol or an RACH occasion in a PRACH slot does not precede SS/PBCH, starts after N_{gap} symbols from a last reception symbol of the SS/PBCH, and the second RACH occasion is located within the SBFD uplink resources, it may be determined to be valid.

That is, when compared with the first valid RACH occasions, in a case where TDD DL/UL configuration information was received in the system information, RACH occasions included in an SBFD uplink resource area within a DL symbol may be second valid RACH occasions. Therefore, the UE may acquire more RACH occasions through the method.

The second RACH occasion may not be valid according to a location of SS/PBCH. In addition, in a case where the second RACH occasion is configured in SBFD uplink resources (resources where uplink transmission is possible), a problem in which the second RACH occasion is limited in resources may occur.

As one method of the present disclosure, in a case where the SBFD UE is configured with time-frequency resources for uplink transmission, SBFD uplink resources, the UE may determine validity of a second RACH occasion as follows.
- In a case where the UE did not receive TDD DL/UL configuration information in the system information, if a second RACH occasion in a PRACH slot does not precede SS/PBCH and starts after N_{gap} symbols from a last reception symbol of the SS/PBCH, the UE may determine that the second RACH occasion is valid.
- In a case where the UE received TDD DL/UL configuration information in the system information, if a second RACH occasion is within a UL symbol or the RACH occasion is located within the SBFD resources, it may be determined to be valid.

The above method is one example, and the second valid RACH occasions may be determined by other methods.

With reference to (b) to (d) of FIG. 13, the UE may determine whether a second RACH occasion is valid based on TDD UL-DL resource configuration information and SBFD uplink resource information.

With reference to (b) of FIG. 13, the UE may be configured with an uplink subband (UL subband) 1310, and resources of the uplink subband of the downlink symbol may be determined as SBFD uplink resources. Since a second RACH occasion 1311 is included in the SBFD uplink resources of the preceding 4 slots of the TDD periodicity, the UE may determine that the second RACH occasion is valid.

For reference, in (b) of FIG. 13, if the uplink subband (UL subband) 1310 is configured, uplink transmission is possible in resources of the uplink subband (UL subband) in all symbols. Therefore, the preceding methods may be briefly described as follows.

As one method of the present disclosure, in a case where the SBFD UE is configured with time-frequency resources for uplink transmission, SBFD resources, the UE may determine validity of a second RACH occasion as follows.
- If a frequency band of an RACH occasion configured according to PRACH configuration is included in an uplink subband (UL subband), if a second RACH occasion in a PRACH slot does not precede SS/PBCH and starts after N_{gap} symbols from a last reception symbol of the SS/PBCH, the second RACH occasion may be determined to be valid.

As one method of the present disclosure, in a case where the SBFD UE is configured with time-frequency resources for uplink transmission, SBFD resources, the UE may determine validity of an RACH occasion as follows.
- If a frequency band of a second RACH occasion configured according to PRACH configuration is included in an uplink subband (UL subband), all RACH occasions may be valid.

The above method is one example, and the second valid RACH occasions may be determined by other methods.

With reference to (c) of FIG. 13, the UE may be configured with an uplink subband (UL subband) 1320 and a time domain where the uplink subband is activated, and resources of the uplink subband of a downlink symbol of the activated time domain may be determined as SBFD uplink resources. Since a second RACH occasion 1321 is included in the SBFD uplink resources of the second, third, and fourth slots of the TDD periodicity, the UE may determine that the second RACH occasion 1321 is valid. For reference, a second RACH occasion 1322 of the first slot of the TDD periodicity may be determined to be not valid since the second RACH occasion 1322 is not included in the SBFD uplink resources.

With reference to (d) of FIG. 13, the UE may be configured with a time-frequency area of SBFD uplink resources, and may determine that a second RACH occasion overlapping with the SBFD uplink resources is valid. That is, a second RACH occasion 1332 of the first and second slots of the TDD periodicity may be said to be valid since the second RACH occasion 1332 is included in the SBFD uplink resources. However, a second RACH occasion 1331 of the third and fourth slots may not be valid since the second RACH occasion 1331 is not included in the SBFD uplink resources.

In (b) to (d) of FIG. 13, although there was no separate mention, a second RACH occasion overlapping with a UL symbol may always be valid. However, the UE may be configured with SBFD downlink resources where DL transmission is possible within the UL symbol. In this case, if the SBFD downlink resources and the second RACH occasion overlap, the RACH occasion may not be valid. As another method, the second RACH occasion may be valid even if the SBFD downlink resources and an RACH occasion overlap. That is, the SBFD downlink resources configured in the uplink symbol may be ignored when determining a valid second RACH occasion.

The preceding methods may be used in a case where one PRACH configuration is configured for a TDD UE (a UE that is not an SBFD UE) and an SBFD UE. That is, according to one PRACH resource configuration, the TDD UE determines a first valid RACH occasion ((a) of FIG. 13) according to a method of a TDD cell, and the SBFD UE may determine a second valid RACH occasion ((b) to (d) of FIG. 13) according to the preceding first to second methods.

### [Reference RB indexing for Msg3 PUSCH transmission on SBFD UL subband]

A UE may receive scheduling information for Msg3 PUSCH from a base station. Msg3 PUSCH scheduling information may be included in a RAR UL grant.

The RAR UL grant may include following information:
- Frequency hopping flag - 1 bit,
- PUSCH frequency resource allocation - 14 bits,
- PUSCH time resource allocation - 4 bits,
- MCS (modulation and coding scheme) - 4 bits,
- TPC command for PUSCH - 3 bits, and/or
- CSI (channel state information) request - 1 bit.

The UE may acquire time domain scheduling information (scheduled slots and symbols within the slots) for the Msg3 PUSCH through a PUSCH time resource allocation field. The PUSCH time resource allocation field may indicate one row among 16 rows of a pre-defined table with 4 bits. In the table, a slot offset, a start symbol index and a number of consecutive symbols within a slot, and a PUSCH mapping type may be included.

The UE may acquire frequency domain scheduling information (an index of a starting RB and a number of consecutive RBs) for the Msg 3 PUSCH through a PUSCH frequency resource allocation field. More specifically, the frequency domain scheduling information may be acquired as in Table 17.

**Table 17**

| |
|---|
| The UE may determine a reference UL BWP. The reference UL BWP may be a BWP used when interpreting the PUSCH frequency resource allocation field. The reference UL BWP may be determined as follows based on initial UL BWP configuration and active UL BWP configuration. |
| - If the initial UL BWP and the active UL BWP have a same subcarrier spacing and a same cyclic prefix (CP) length, and the active UL BWP includes all RBs of the initial UL BWP, or in a case where the active UL BWP is the initial UL BWP, the initial UL BWP may be used as the reference UL BWP. |
| - If the above condition is not satisfied, RB numbering starts from a starting RB of the active UL BWP, and a maximum number of RBs of the reference UL BWP may be the same as a number of RBs of the initial UL BWP. That is, the reference UL BWP may include RB 0, RB 1, ..., RB N-1 of the active UL BWP. Here, N is a number of RBs included in the initial UL BWP. |

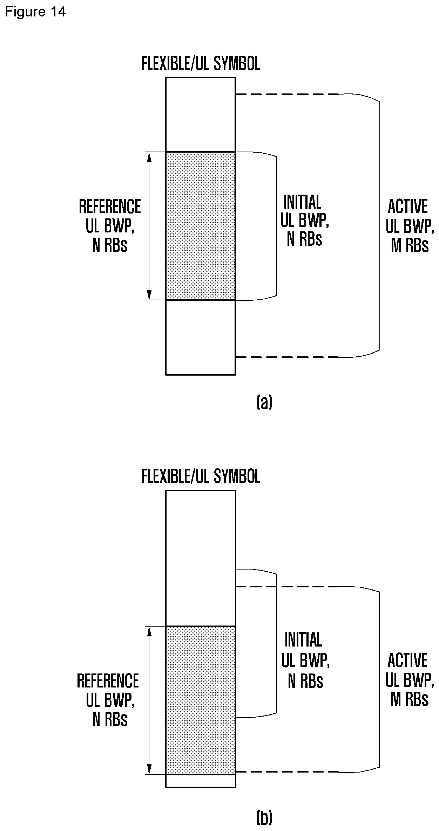

FIG. 14 is a diagram illustrating a reference UL BWP according to an embodiment of the present disclosure. With reference to FIG. 14 and Table 17, a method for determining a reference UL BWP is described. For convenience, it is assumed that subcarrier spacing and CP length of an initial UL BWP and an active UL BWP are the same.

With reference to (a) of FIG. 14, the initial UL BWP may include N RBs, and the active UL BWP may include M RBs (N and M are natural numbers). All N RBs included in the initial UL BWP may be included in the active UL BWP. In this case, the UE may assume the reference UL BWP to be the same as the initial UL BWP. That is, the reference UL BWP may include N RBs included in the initial UL BWP.

With reference to (b) of FIG. 14, the initial UL BWP includes N RBs, and the active UL BWP may include M RBs. Some RBs among the N RBs included in the initial UL BWP may not be included in the active UL BWP (that is, the initial UL BWP and the active UL BWP may partially overlap). In this case, the M RBs of the active UL BWP may be indexed as RB 0, RB 1, ..., RB M-1 in ascending order from 0 based on an RB at a lowest location on a frequency axis, and the UE may assume the reference UL BWP to be the same as RB 0, RB 1, ..., RB N-1 of the active UL BWP. That is, the reference UL BWP may include lowest N RBs on the frequency axis among the M RBs included in the active UL BWP.

The PUSCH frequency resource allocation field may indicate scheduled RBs among the N RBs of the reference UL BWP. The PUSCH frequency resource allocation may include 14 bits. The UE may interpret the PUSCH frequency resource allocation field as follows.
- If N (a number of RBs included in the initial UL BWP) is less than or equal to 180, the UE may interpret frequency domain information in which PUSCH is scheduled using only ceil(log2(N*(N+1)/2)) LSBs (least significant bits) among the 14 bits.
- Otherwise (if N (a number of RBs included in the initial UL BWP) is greater than 180), the UE may add ceil(log2(N*(N+1)/2))-14 bits having a value of 0 to the 14 bits. Here, ceil(log2(N*(N+1)/2))-14 MSBs having a value of 0 after N_{UL,hop} bits may be added to the frequency domain resource assignment field. The UE may interpret ceil(log2(N*(N+1)/2)) bits as the frequency domain information in which the PUSCH is scheduled. If Frequency hopping flag of the RAR UL grant is '0', N_{UL,hop}= 0 bits, and if Frequency hopping flag of the RAR UL grant is '1', N_{UL,hop} may be determined according to Table 18.

**Table 18**

| Number of PRBs in initial UL BWP | Value of N_{UL,hop} Hopping bits | Frequency offset for 2^{nd} hop |
|---|---|---|
| N < 50 | 0 | [*N*/2] |
| | 1 | [*N*/4] |
| N ≥ 50 | 00 | [*N*/2] |
| | 01 | [*N*/4] |
| | 10 | -[*N*/2] |
| | 11 | Reserved |

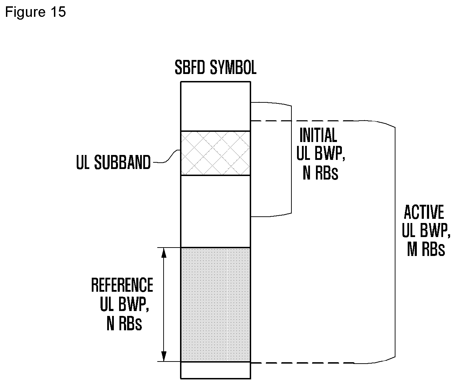

FIG. 15 illustrates a case where SBFD resources or a UL subband are not included in a reference UL BWP according to an embodiment of the present disclosure.

With reference to FIG. 15, an initial UL BWP configured for a UE includes N RBs, and an active UL BWP may include M RBs. Some RBs among the N RBs included in the initial UL BWP may not be included in the active UL BWP (that is, the initial UL BWP and the active UL BWP may partially overlap). In this case, the M RBs of the active UL BWP may be indexed as RB 0, RB 1, ..., RB M-1 in ascending order from 0 based on an RB at a lowest location on a frequency axis, and the UE may assume the reference UL BWP to be the same as RB 0, RB 1, ..., RB N-1 of the active UL BWP. That is, the reference UL BWP may include lowest N RBs on the frequency axis among the M RBs included in the active UL BWP.

An SBFD UE may be configured with SBFD resources or a UL subband. A symbol configured with the SBFD resources or the UL subband may be a downlink symbol. The UE may transmit an uplink channel or a signal in the SBFD resources or the UL subband. The uplink channel may include Msg3 PUSCH.

The SBFD UE may select one RACH occasion among a first valid RACH occasion or a second valid RACH occasion and transmit a PRACH preamble to a base station. When the base station receives a PRACH preamble belonging to the first valid RACH occasion, the base station may consider the UE that accessed a cell as a TDD UE (a UE that does not support an SBFD operation). When the base station receives a PRACH preamble belonging to the second valid RACH occasion, the base station may consider the UE that accessed the cell as an SBFD UE. In a case where the base station determines the UE as the SBFD UE, the base station may schedule Msg3 PUSCH through a UL subband. When the UE transmits a PRACH preamble belonging to the second valid RACH occasion, the Msg3 PUSCH scheduled to the UE may be transmitted in the UL subband. In the present disclosure, unless otherwise specified, the SBFD resources or the UL subband may include only RBs included within an initial UL subband among SBFD resources or a UL subband configured from the base station. That is, according to configuration of the base station, RBs not included in the initial UL subband among RBs included in the SBFD resources or the UL subband may be excluded.

However, the SBFD resources or the UL subband may not be included in the reference UL BWP determined by the UE. Therefore, although the SBFD resources or the UL subband are included within the active UL BWP, the UE cannot be scheduled with the Msg3 PUSCH with the SBFD resources or the UL subband. Method 1-1 to Method 1-3 of the present disclosure provide methods for solving this. At least one of Method 1-1 and Method 1-3 of the present disclosure may be performed by being combined with at least one of Method 2-1 and Method 2-2 to be described later.

### Method 1-1

In a case where Msg3 PUSCH is scheduled in an SBFD symbol, the UE may select a lowest RB of SBFD resources or a UL subband as a starting RB of a reference UL BWP. The UE may select N RBs as a length of the reference UL BWP (i.e., a number of RBs included in the reference UL BWP). More specifically, a lowest RB index of the SBFD resources or the UL subband may be called P (P is an integer). The index may be an index of common resource block (CRB) or an index of an active UL BWP (an index of a lowest RB of the active UL BWP is 0 and ascending order on a frequency axis). Further, it may be said that K RBs (K is a natural number) are included in the SBFD resources or the UL subband. RB P, RB P+1, RB P+2, ..., RB P+K-1 may be included in the SBFD resources or the UL subband. The reference UL BWP may include RB P, RB P+1, RB P+2, ..., RB P+N-1. Here, N is a number of RBs included in the initial UL BWP. The UE may interpret scheduling information for the Msg 3 PUSCH based on the N RBs.

The UE may interpret the PUSCH frequency resource allocation field as follows.
- If N (a number of RBs included in the initial UL BWP) is less than or equal to 180, the UE may interpret frequency domain information in which PUSCH is scheduled using only ceil(log2(N *(N+1)/2)) LSBs (least significant bits) among the 14 bits.
- Otherwise (if N (a number of RBs included in the initial UL BWP) is greater than 180), the UE may add bits having a value of 0 of ceil(log2(N*(N+1)/2))-14 to the 14 bits. Here, ceil(log2(N*(N+1)/2))-14 MSBs having a value of 0 after N_{UL,hop} bits of the 14 bits may be added to the frequency domain resource assignment field. The UE may interpret ceil(log2(N*(N+1)/2)) bits as the frequency domain information in which the PUSCH is scheduled. If Frequency hopping flag of the RAR UL grant is '0', N_{UL,hop}= 0 bits, and if Frequency hopping flag of the RAR UL grant is '1', N_{UL,hop} may be determined according to Table 19 or Table 20.

**Table 19**

| Number of PRBs in UL subband (K) | Value of N_{UL,hop} Hopping bits | Frequency offset for 2^{nd} hop |
|---|---|---|
| K < 50 | 0 | $\left⌊K/2\right⌋$ |
| | 1 | $\left⌊K/4\right⌋$ |
| K ≥ 50 | 00 | $\left⌊K/2\right⌋$ |
| | 01 | $\left⌊K/4\right⌋$ |
| | 10 | $- \left⌊K/2\right⌋$ |
| | 11 | Reserved |

**Table 20**

| Number of PRBs in initial UL BWP (N) | Value of N_{UL,hop} Hopping bits | Frequency offset for 2^{nd} hop |
|---|---|---|
| N < 50 $\left⌊K/2\right⌋$ $\left⌊K/4\right⌋$ | 0 | |
| | 1 | |
| N ≥ 50 $\left⌊K/2\right⌋$ $\left⌊K/4\right⌋$ $- \left⌊K/2\right⌋$ | 00 | |
| | 01 | |
| | 10 | |
| | 11 | Reserved |

### Method 1-2

In a case where Msg3 PUSCH is scheduled in an SBFD symbol, a UE may select a lowest RB of SBFD resources or a UL subband as a starting RB of a reference UL BWP. The UE may select a number of RBs included in the UL subband as a length of the reference UL BWP (i.e., a number of RBs included in the reference UL BWP). More specifically, a lowest RB index of the SBFD resources or the UL subband may be called P. The index may be an index of common resource block (CRB) or an index of an active UL BWP (an index of a lowest RB of the active UL BWP is 0 and ascending order on a frequency axis). Further, it may be said that K RBs are included in the SBFD resources or the UL subband. RB P, RB P+1, RB P+2, ..., RB P+K-1 may be included in the SBFD resources or the UL subband. The UE may include RB P, RB P+1, RB P+2, ..., RB P+K-1 as the reference UL BWP. Here, K is a number of RBs included in the UL subband. The UE may interpret scheduling information for the Msg 3 PUSCH based on the K RBs.

The UE may interpret PUSCH frequency resource allocation as follows.
- If K (a number of RBs included in the UL subband) is less than or equal to 180, the UE may interpret frequency domain information in which PUSCH is scheduled using only ceil(log2(K*(K+1)/2)) LSBs (least significant bits) among the 14 bits.
- Otherwise (if K (a number of RBs included in the UL subband) is greater than 180), the UE may add ceil(log2(K*(K+1)/2))-14 bits having a value of 0 to the 14 bits. Here, ceil(log2(K*(K+1)/2))-14 MSBs having a value of 0 after N_{UL,hop} bits may be added to the frequency domain resource assignment field. The UE may interpret ceil(log2(K*(K+1)/2)) bits as the frequency domain information in which the PUSCH is scheduled. If Frequency hopping flag of the RAR UL grant is '0', N_{UL,hop}= 0 bits, and if Frequency hopping flag of the RAR UL grant is '1', N_{UL,hop} may be determined according to Table 19.

### Method 1-3

In a case where Msg3 PUSCH is scheduled in an SBFD symbol, the UE may select a highest RB of SBFD resources or a UL subband as a last RB of a reference UL BWP. The UE may select a number of RBs included in an initial UL BWP (i.e., N) as a length of the reference UL BWP (i.e., a number of RBs included in the reference UL BWP). More specifically, a lowest RB index of the SBFD resources or the UL subband may be called P. The index may be an index of common resource block (CRB) or an index of an active UL BWP (an index of a lowest RB of the active UL BWP is 0 and ascending order on a frequency axis). Further, it may be said that K RBs are included in the SBFD resources or the UL subband. RB P, RB P+1, RB P+2, ..., RB P+K-1 may be included in the SBFD resources or the UL subband. The UE may include RB P+K-N, RB P+K-N+1, ..., RB P+K-2, RB P+K-1 as the reference UL BWP. Here, K is a number of RBs included in the UL subband, and N is a number of RBs included in the initial UL BWP. The UE may interpret scheduling information for the Msg 3 PUSCH based on the N RBs.

A PUSCH frequency resource allocation field may be interpreted with reference to the description of Method 1-1 described above. In the present disclosure, an SBFD symbol may be a symbol in which SBFD resources or a UL subband are configured.

Alternatively, in the present disclosure, an SBFD symbol may be downlink symbols among symbols in which SBFD resources or a UL subband are configured.

### [RB allocation determination for Msg3 PUSCH transmission on SBFD UL subband]

As an embodiment of the present disclosure, a UE uses an initial UL BWP or a truncated active UL BWP as a reference UL BWP, and may move RB allocation (starting RB index and length of RBs) determined based on the reference UL BWP into a UL subband. This is applicable in a case where Msg3 PUSCH is scheduled in an SBFD symbol. Here, using the truncated active UL BWP may mean using as many as a number of initial UL BWPs from a starting RB of an active UL BWP.

For reference, the present embodiment may be used limitedly in the following situation.
- In a case where the determined reference UL BWP does not include RBs of the UL subband. For example, the determined reference UL BWP may correspond to a case where the determined reference UL BWP is N consecutive RBs (N = a number of RBs included in the initial UL BWP) from the starting RB of the active UL BWP.

For reference, in the present embodiment, it may be assumed that a reference UL BWP is determined according to Table 17. This is one method, and even if the reference UL BWP is determined by another method, disclosed methods may be applied.

At least one of Method 2-1 and 2-2 of the present disclosure may be performed by being combined with at least one of Method 1-1 and Method 1-3 described above.

### Method 2-1

In a case where the UE determines RB allocation based on the initial UL BWP, an index of a starting RB and a number of consecutive RBs may be represented as Sᵢₙᵢₜᵢₐₗ and Lᵢₙᵢₜᵢₐₗ, respectively. An RB where Sᵢₙᵢₜᵢₐₗ = 0 may be a same RB as the lowest RB on a frequency of the initial UL BWP. The UE may change/move the RB allocation into the UL subband based on configuration of the UL subband.

More specifically, an index of a starting RB of the UL subband is called S_{ULSB}, and a number of RBs included in the UL subband may be represented as L_{ULSB}. Here, an RB where S_{ULSB}=0 may be a same RB as the lowest RB on the frequency of the initial UL BWP. The UE may determine an index (S_{mod}) of a starting RB among the RB allocation within the UL subband using Equation 2 to Equation 5. Here, an RB where the index (S_{mod}) of the starting RB is 0 may be a same RB as the lowest RB on the frequency of the initial UL BWP. [Equation 2] ${S}_{mod} = \left({S}_{initial} mod {L}_{ULSB}\right) + {S}_{ULSB}$ [Equation 3] ${S}_{mod} = \left(\left({S}_{initial}-{S}_{ULSB}\right) mod {L}_{ULSB}\right) + {S}_{ULSB}$ [Equation 4] ${S}_{mod} = \left(\left({S}_{initial}+offset\right) mod {L}_{ULSB}\right) + {S}_{ULSB}$ [Equation 5] ${S}_{mod} = \left(\left({S}_{initial}+offset\right) mod {L}_{ULSB}\right) + {S}_{ULSB} + offset 2$

In Equation 4, offset may be a value configured or indicated by a base station to the UE. Equation 3 may be a case where offset = -S_{ULSB} in Equation 4, and Equation 2 may be a case where offset = 0 in Equation 4.

In Equation 5, offset2 may be a value configured or indicated by the base station to the UE. Here, offset2 may be a number greater than or equal to 0.

As an embodiment, a modular operation in Equation 2 to Equation 5 may be omitted. That is, Equation 2 and 3 may be represented as in Equation 6 and 7. [Equation 6] ${S}_{mod} = {S}_{initial} + {S}_{ULSB}$ [Equation 7] ${S}_{mod} = {S}_{initial}$

The UE may determine Lᵢₙᵢₜᵢₐₗ consecutive RBs from the determined starting RB index as scheduled RBs within the UL subband.

S_{mod} determined by the UE should be greater than or equal to S_{ULSB}, and S_{mod}+Lᵢₙᵢₜᵢₐₗ should be less than or equal to S_{ULSB}+L_{ULSB}. If this condition is not satisfied, the UE may ignore the RAR UL grant for scheduling the Msg3 PUSCH. That is, the UE may not transmit the Msg3 PUSCH.

For reference, Equation 2 to Equation 7 utilized RB numbering of the initial UL BWP. That is, an RB where S_{mod}=0 may be the same as the lowest RB on the frequency axis in the initial UL BWP. As one method of the present disclosure, Equation 2 to Equation 7 may utilize RB numbering of the UL subband. That is, an RB where S_{mod}=0 may be the same as the lowest RB on the frequency axis in the UL subband. For example, with reference to Equation 7, S_{mod}=Sᵢₙᵢₜᵢₐₗ may be possible, and an RB where S_{mod}=0 may be the same as the lowest RB on the frequency axis in the UL subband.

### Method 2-2

In a case where the UE determines RB allocation based on the truncated active UL BWP, an index of a starting RB and a number of consecutive RBs may be represented as S_{active} and L_{active}, respectively. An RB where S_{active} = 0 may be a same RB as the lowest RB on a frequency of the active UL BWP. The UE may change/move the RB allocation into the UL subband based on configuration of the UL subband.

More specifically, an index of a starting RB of the UL subband is called S_{ULSB}, and a number of RBs included in the UL subband may be represented as L_{ULSB}. Here, an RB where S_{ULSB}=0 may be a same RB as the lowest RB on the frequency of the active UL BWP. The UE may determine an index (S_{mod}) of a starting RB among the RB allocation within the UL subband using Equation 8 to Equation 11. Here, an RB where the index (S_{mod}) of the starting RB is 0 may be a same RB as the lowest RB on the frequency of the active UL BWP. [Equation 8] ${S}_{mod} = \left({S}_{active} mod {L}_{ULSB}\right) + {S}_{ULSB}$ [Equation 9] ${S}_{mod} = \left(\left({S}_{active}-{S}_{ULSB}\right) mod {L}_{ULSB}\right) + {S}_{ULSB}$ [Equation 10] ${S}_{mod} = \left(\left({S}_{active}+offset\right) mod {L}_{ULSB}\right) + {S}_{ULSB}$ [Equation 11] ${S}_{mod} = \left(\left({S}_{active}+offset\right) mod {L}_{ULSB}\right) + {S}_{ULSB} + offset 2$

In Equation 10, offset may be a value configured or indicated by a base station to the UE. Equation 9 may be a case where offset = -S_{ULSB} in Equation 10, and Equation 8 may be a case where offset = 0 in Equation 10.

In Equation 11, offset2 may be a value configured or indicated by the base station to the UE. Here, offset2 may be a number greater than or equal to 0.

As an embodiment, a modular operation in Equation 8 to Equation 11 may be omitted. That is, Equation 8 and 9 may be represented as in Equation 12 and 13. [Equation 12] ${S}_{mod} = {S}_{active} + {S}_{ULSB}$ [Equation 13] ${S}_{mod} = {S}_{active}$

The UE may determine L_{active} consecutive RBs from the determined starting RB index as scheduled RBs within the UL subband.

S_{mod} determined by the UE should be greater than or equal to S_{ULSB}, and S_{mod}+L_{active} should be less than or equal to S_{ULSB}+L_{ULSB}. If this condition is not satisfied, the UE may ignore the RAR UL grant for scheduling the Msg3 PUSCH. That is, the UE may not transmit the Msg3 PUSCH.

For reference, Equation 8 to Equation 13 utilized RB numbering of the truncated active UL BWP. That is, an RB where S_{mod}=0 may be the same as the lowest RB on the frequency axis in the active UL BWP. As one method of the present disclosure, Equation 8 to 13 may utilize RB numbering of the UL subband. That is, an RB where S_{mod}=0 may be the same as the lowest RB on the frequency axis in the UL subband. For example, with reference to Equation 13, S_{mod}= S_{active} may be possible, and an RB where S_{mod}=0 may be the same as the lowest RB on the frequency axis in the UL subband.

In the preceding Method 2-1 and Method 2-2, Sᵢₙᵢₜᵢₐₗ and S_{active} may be determined based on the PUSCH frequency resource allocation field of the RAR UL grant. If Frequency hopping flag of the RAR UL grant is '0' (disable), the scheduled Msg3 PUSCH may have one Sᵢₙᵢₜᵢₐₗ or one S_{active}. If Frequency hopping flag of the RAR UL grant is '1' (enable), the scheduled Msg3 PUSCH may have two Sᵢₙᵢₜᵢₐₗ or two S_{active}. Here, a first Sᵢₙᵢₜᵢₐₗ or S_{active} is an index of a starting RB of a first frequency hop, and a second Sᵢₙᵢₜᵢₐₗ or S_{active} is an index of a starting RB of a second frequency hop. For convenience, the first Sᵢₙᵢₜᵢₐₗ or S_{active} is represented as Sᵢₙᵢₜᵢₐₗ(1) or S_{active}(1), and the second Sᵢₙᵢₜᵢₐₗ or S_{active} is represented as Sᵢₙᵢₜᵢₐₗ(2) or S_{active}(2). Further, a starting RB index of the first frequency hop within the UL subband is represented as S_{mod}(1), and a starting RB index of the second frequency hop within the UL subband is represented as S_{mod}(2).

As an embodiment of the present disclosure, the aforementioned Method 2-1 or Method 2-2 may be separately applied to each frequency hop. That is, in Method 2-1 or Method 2-2, S_{mod}(1) may be determined based on Sᵢₙᵢₜᵢₐₗ(1) or S_{active}(1), and S_{mod}(2) may be determined based on Sᵢₙᵢₜᵢₐₗ(2) or S_{active}(2). Here, Sᵢₙᵢₜᵢₐₗ(1) or S_{active}(1) is an index of a starting RB determined based on the PUSCH frequency resource allocation field of the RAR UL grant, and Sᵢₙᵢₜᵢₐₗ(2) or S_{active}(2) may be an index of a starting RB determined as follows. [Equation 14] ${S}_{initial} \left(2\right) = \left({S}_{initial}\left(1\right)+Offset\right) mod {N}_{initial}$ [Equation 15] ${S}_{initial} \left(2\right) = \left({S}_{initial}\left(1\right)+Offset\right) mod {N}_{active}$ [Equation 16] ${S}_{active} \left(2\right) = \left({S}_{active}\left(1\right)+Offset\right) mod {N}_{active}$ [Equation 17] ${S}_{active} \left(2\right) = \left({S}_{active}\left(1\right)+Offset\right) mod {N}_{initial}$

Here, Nᵢₙᵢₜᵢₐₗ is a number of RBs included in the initial UL BWP, and N_{active} may be a number of RBs included in the active UL BWP. Here, Offset may be determined as in Table 18.

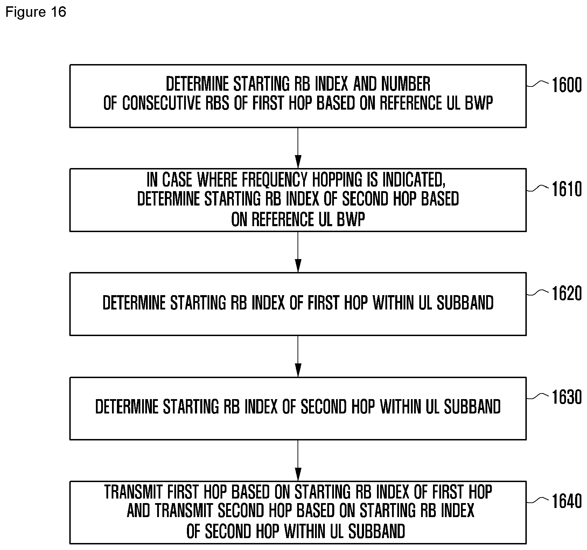

FIG. 16 is a diagram illustrating an operation flowchart of a UE according to an embodiment of the present disclosure.

An operation order of operations of FIG. 16 may be changed, and some operations may be omitted.

Although not illustrated in FIG. 16, a random access procedure of the UE may start from transmitting a random access preamble. The UE may receive a random access response (RAR) in response to the random access preamble. The RAR may include a UL grant for scheduling PUSCH transmission. After the UE receives the RAR UL grant, the procedure of FIG. 16 may be performed.

The UE may determine resources (e.g., frequency domain resource allocation and/or time domain resource allocation) for Msg3 PUSCH transmission based on the RAR UL grant. Specifically, with reference to FIG. 16, in step 1600, the UE may determine a starting RB index and a number of consecutive RBs of a first hop of Msg3 PUSCH transmission based on a reference UL BWP through the PUSCH frequency resource allocation field of the RAR UL grant. For example, the reference UL BWP may be a truncated active UL BWP, or may be an initial UL BWP. For example, the reference UL BWP may be determined according to Table 17.

For example, in a case where the Msg3 PUSCH transmission is scheduled within an SBFD symbol, that is, in a case where the Msg3 PUSCH transmission is scheduled in a UL frequency subband within downlink symbols, RB numbering may start from a first RB of the UL frequency subband. In addition, a maximum number of RBs for frequency domain resource allocation of the Msg3 PUSCH transmission may be determined based on a number of RBs within the initial UL BWP. As an example, the maximum number of RBs for the frequency domain resource allocation of the Msg3 PUSCH transmission may be the same as the number of RBs within the initial UL BWP. For example, the starting RB index of the first hop of the Msg3 PUSCH transmission may be confirmed based on the RB numbering.

In step 1610, the UE may determine whether frequency hopping is performed for the Msg3 PUSCH through a Frequency hopping flag field of the RAR UL grant. For example, in a case where frequency hopping is applied to the Msg3 PUSCH transmission, a frequency offset for a second hop of the frequency hopping may be determined based on a number of RBs within the UL frequency subband. For example, in a case where frequency hopping is indicated for the Msg3 PUSCH transmission, the UE may determine a starting RB index of the second hop based on the reference UL BWP. As an example, the UE may determine the starting RB index of the second hop using at least one method among Equation 14 to Equation 17.

In step 1620, based on the starting RB index of the first hop within the reference UL BWP, the UE may determine a starting RB index of the first hop within the UL subband. For example, the starting RB index of the first hop may be determined based on at least one method among Equation 2 to Equation 13.

In step 1630, based on the starting RB index of the second hop within the reference UL BWP, the UE may determine a starting RB index of the second hop within the UL subband. For example, the starting RB index of the second hop may be determined based on at least one method among Equation 2 to Equation 13.

In step 1640, the UE may transmit the first hop based on the starting RB index of the first hop decided in step 1620 and transmit the second hop based on the starting RB index of the second hop decided in step 1630 in the UL subband.

As an embodiment of the present disclosure, the aforementioned Method 2-1 or Method 2-2 may be applied only to the first frequency hop. That is, in Method 2-1 or Method 2-2, S_{mod}(1) may be determined based on Sᵢₙᵢₜᵢₐₗ(1) or S_{active}(1). Here, Sᵢₙᵢₜᵢₐₗ(1) or S_{active}(1) is an index of a starting RB determined based on the PUSCH frequency resource allocation field of the RAR UL grant. An index of a starting RB of the second hop may be determined based on S_{mod}(1) determined in Method 2-1 or Method 2-2. For example, Sᵢₙᵢₜᵢₐₗ(2) or S_{active}(2) is an index of a starting RB determined as follows. [Equation 18] ${S}_{mod} \left(2\right) = \left({S}_{mod}\left(1\right)+Offset\right) mod {N}_{ULSB}$ [Equation 19] ${S}_{mod} \left(2\right) = \left({S}_{mod}\left(1\right)+Offset-{S}_{ULSB}\right) mod {N}_{ULSB} + {S}_{ULSB}$

In Equation 18 and Equation 19, N_{ULSB} is a number of RBs included in the UL subband, and S_{ULSB} is an index of a starting RB of the UL subband. In a case of Method 2-1, an RB where S_{mod}(1)=0, S_{mod}(2)=0, and S_{ULSB}=0 is the lowest RB on the frequency axis in the initial UL BWP, and in a case of Method 2-2, an RB where S_{mod}(1)=0, S_{mod}(2)=0, and S_{ULSB}=0 may be the lowest RB on the frequency axis in the active UL BWP.

In Equation 18 and Equation 19, Offset may be determined by at least one method among Table 18 to Table 20.

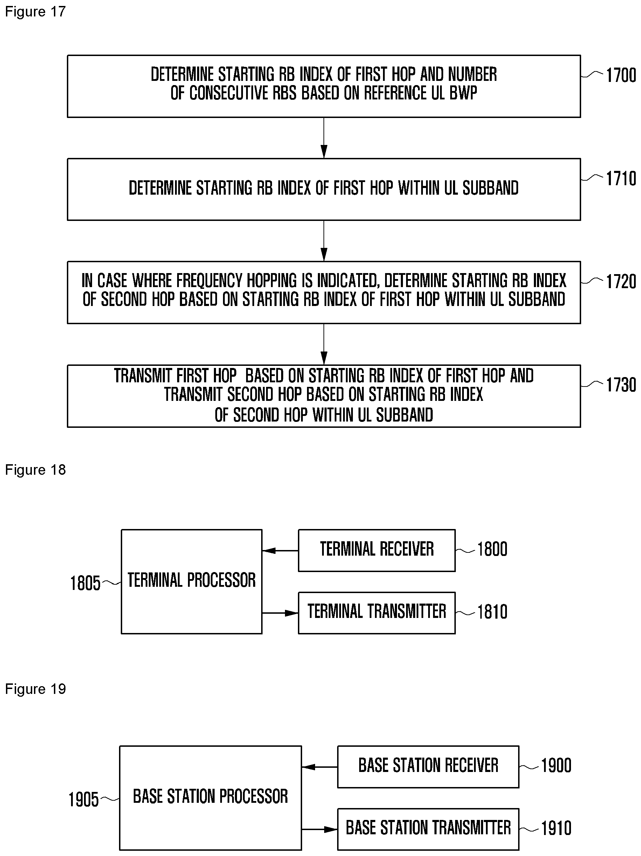

FIG. 17 is a diagram illustrating an operation flowchart of a UE according to an embodiment of the present disclosure. An operation order of operations of FIG. 17 may be changed, and some operations may be omitted.

With reference to FIG. 17, in step 1700, the UE may determine a starting RB index of a first hop and a number of consecutive RBs through the PUSCH frequency resource allocation field of the RAR UL grant. Here, a reference UL BWP may be a truncated active UL BWP, or an initial UL BWP. For example, the reference UL BWP may be determined according to Table 17.

In step 1710, based on the starting RB index of the first hop within the reference UL BWP, the UE may determine a starting RB index of the first hop within the UL subband. For example, the starting RB index of the first hop may be determined based on at least one method among Equation 2 to Equation 13.

In step 1720, the UE may determine whether frequency hopping is performed for the Msg3 PUSCH through a Frequency hopping flag field of the RAR UL grant. In case where frequency hopping is indicated for the Msg3 PUSCH transmission, the UE may determine a starting RB index of a second hop. The starting RB index of the second hop may be determined based on the starting RB index of the first hop determined in step 1710. For example, the starting RB index of the second hop may be determined according to Equation 18 to Equation 19.

In step 1730, the UE may transmit the first hop of the Msg3 PUSCH based on the starting RB index of the first hop decided in step 1710 and transmit the second hop of the Msg3 PUSCH based on the starting RB index of the second hop decided in step 1720 in the UL subband.

[RB allocation determination for PUCCH transmission on SBFD UL subband]

A UE may be configured with a PUCCH resource after RRC-connection. Configuration information for the PUCCH resource may include following parameters.
- PUCCH resource index (or ID): It may be used to indicate or identify a PUCCH resource as a unique index (or ID) of the PUCCH resource.
- StartingPRB: It may be a starting RB index of a first frequency hop of PUCCH.
- intraSlotFrequencyHopping: It may indicate whether PUCCH is transmitted in a frequency hopping scheme.
- SecondHopPRB: It may be a starting RB index of a second frequency hop of PUCCH.
- format: It may be a format of PUCCH. Here, the format of PUCCH may be one value among format0, format1, format2, format3, and format4.

As an embodiment of the present disclosure, the UE may use the PUCCH resource configuration in an uplink symbol and a UL subband. More specifically, the UE may determine starting RB indices of the first frequency hop and the second frequency hop for PUCCH transmission based on StartingPRB and SecondHopPRB. Here, a determination method is as follows.

As one method, in a case where PUCCH is scheduled in an uplink symbol and in a case where PUCCH is scheduled in an SBFD symbol (a symbol in which a UL subband is configured), the UE may determine StartingPRB and SecondHopPRB using RB numbering of an active UL BWP. That is, an RB where StartingPRB = 0 and an RB where SecondHopPRB = 0 may be the same RB as the lowest RB of the active UL BWP. That is, the UE may always determine the index of the starting RB of the PUCCH using the numbering of the active UL BWP regardless of a type of a symbol where the PUCCH is scheduled.

In a case where the UE is scheduled with the PUCCH in an SBFD symbol (a symbol in which the UL subband is configured), StartingPRB and SecondHopPRB may not be RBs included in the UL subband. In this case, the UE may convert StartingPRB and SecondHopPRB into RBs within the UL subband through a frequency hopping function. Here, the frequency hopping function may be as follows. [Equation 20] $\begin{matrix}Starting PRB of {1}^{st} frequency hop in UL subband = \\ \left(\left(StartingPRB-{S}_{ULSB}\right)mod {L}_{ULSB}\right) + {S}_{ULSB} \\ Starting PRB of {2}^{nd} frequency hop in UL subband = \\ \left(\left(SecondHopPRB-{S}_{ULSB}\right)mod {L}_{ULSB}\right) + {S}_{ULSB}\end{matrix}$

In Equation 20, S_{ULSB} is an index of an RB where the UL subband starts, which may follow the numbering of the active UL BWP. That is, an RB where S_{ULSB}=0 may be the lowest RB on the frequency axis of the active UL BWP. L_{ULSB} may be a number of RBs included in the UL subband.

For reference, Equation 20 may be applied limitedly in a case where StartingPRB and SecondHopPRB are not RBs included in the UL subband. As another method, Equation 20 may always be used. That is, even if StartingPRB and SecondHopPRB are RBs included in the UL subband, Equation 20 may be applied.

In a case where the UE is scheduled with the PUCCH in an SBFD symbol (a symbol in which the UL subband is configured), StartingPRB and SecondHopPRB may not be RBs included in the UL subband. In this case, the UE may expect that the PUCCH resource will not be scheduled in the UL subband. That is, in a case where the PUCCH resource is scheduled in the UL subband, the UE may not transmit PUCCH in the PUCCH resource.

As one method, in a case where PUCCH is scheduled in an uplink symbol to the UE, StartingPRB and SecondHopPRB may be determined using the RB numbering of the active UL BWP. That is, an RB where StartingPRB = 0 and an RB where SecondHopPRB = 0 may be the same RB as the lowest RB of the active UL BWP. In a case where the PUCCH is scheduled in an SBFD symbol (a symbol in which the UL subband is configured), StartingPRB and SecondHopPRB may be determined using RB numbering of the UL subband. That is, an RB where StartingPRB = 0 and an RB where SecondHopPRB = 0 may be the same RB as the lowest RB of the UL subband. That is, StartingPRB and SecondHopPRB are configured as higher layer signals, but interpretation of the StartingPRB and SecondHopPRB by the UE may be determined according to the type of the symbol where the PUCCH is scheduled.

As an embodiment of the present disclosure, the UE may be additionally configured with following parameters for the UL subband in the PUCCH resource.
- StartingPRBonSBFD: It may be a starting RB index of a first frequency hop of PUCCH in an SBFD symbol.
- SecondHopPRBonSBFD: It may be a starting RB index of a second frequency hop of PUCCH in an SBFD symbol.

For reference, other parameters of the PUCCH resource, PUCCH resource index (or ID), intraSlotFrequencyHopping, and format, may be used in common in a UL symbol and a UL subband.

The UE may determine the index of an RB where PUCCH is transmitted within the UL subband through StartingPRBonSBFD and SecondHopPRBonSBFD. More specifically, in a case where the UE is scheduled with the PUCCH in an SBFD symbol (a symbol in which the UL subband is configured), the index of the RB where the PUCCH is transmitted within the UL subband may be determined through StartingPRBonSBFD and SecondHopPRBonSBFD, and in a case where the UE is scheduled with the PUCCH in a UL symbol, an index of an RB where PUCCH is transmitted within the UL symbol may be determined through StartingPRB and SecondHopPRB.

When determining the index of the RB where the PUCCH is transmitted within the UL subband through StartingPRBonSBFD and SecondHopPRBonSBFD, the UE may use one method among following methods.

As one method, StartingPRBonSBFD and SecondHopPRBonSBFD may be determined using the RB numbering of the active UL BWP. That is, an RB where StartingPRB = 0 and an RB where SecondHopPRB = 0 may be the same RB as the lowest RB of the active UL BWP. That is, the UE may always determine the index of the starting RB of the PUCCH using the numbering of the active UL BWP regardless of a type of a symbol where the PUCCH is scheduled.

For the UE, StartingPRBonSBFD and SecondHopPRBonSBFD may not be RBs included in the UL subband. In this case, the UE may convert StartingPRBonSBFD and SecondHopPRBonSBFD into RBs within the UL subband through a frequency hopping function. Here, the frequency hopping function may be as follows. [Equation 21] $\begin{matrix}Starting PRB of {1}^{st} frequency hop in UL subband = \\ \left(\left(StartingPRBonSBFD-{S}_{ULSB}\right) mod {L}_{ULSB}\right) + {S}_{ULSB} \\ Starting PRB of {2}^{nd} frequency hop in UL subband = \\ \left(\left(SecondHopPRBonSBFD-{S}_{ULSB}\right) mod {L}_{ULSB}\right) + {S}_{ULSB}\end{matrix}$

In Equation 21, S_{ULSB} is an index of an RB where the UL subband starts, which may follow the numbering of the active UL BWP. That is, an RB where S_{ULSB}=0 may be the lowest RB on the frequency axis of the active UL BWP. L_{ULSB} may be a number of RBs included in the UL subband.

For reference, Equation 21 may be applied limitedly in a case where StartingPRBonSBFD and SecondHopPRBonSBFD are not RBs included in the UL subband. As another method, Equation 21 can always be used. That is, even if StartingPRBonSBFD and SecondHopPRBonSBFD are RBs included in the UL subband, Equation 21 may be applied.

In a case where the UE is scheduled with the PUCCH in an SBFD symbol (a symbol in which the UL subband is configured), StartingPRBonSBFD and SecondHopPRBonSBFD may not be RBs included in the UL subband. In this case, the UE may expect that the PUCCH resource will not be scheduled in the UL subband. That is, in a case where the PUCCH resource is scheduled in the UL subband, the UE may not transmit PUCCH in the PUCCH resource.

As one method, in a case where the UE is scheduled with the PUCCH in an SBFD symbol (a symbol in which the UL subband is configured), StartingPRBonSBFD and SecondHopPRBonSBFD may be determined using the RB numbering of the UL subband. That is, an RB where StartingPRBonSBFD = 0 and an RB where SecondHopPRBonSBFD = 0 may be the same RB as the lowest RB of the UL subband.

Aforementioned embodiments of the present disclosure may be performed by the terminal of FIG. 18 and the base station of FIG. 19.

FIG. 18 is a diagram illustrating a structure of a terminal in a wireless communication system according to an embodiment of the present disclosure.

With reference to FIG. 18, the terminal may include a transceiver referring to a terminal receiver 1800 and a terminal transmitter 1810, a memory (not illustrated), and a terminal processor 1805 (or a terminal controller or a processor). According to the aforementioned communication method of the terminal, the transceiver 1800 and 1810, the memory, and the terminal processor 1805 of the terminal may operate. The terminal processor 1805 (or a processor) may control an operation of the terminal according to a combination of at least one embodiment as well as each of the aforementioned embodiments. However, components of the terminal are not limited to the aforementioned example. For example, the terminal may include more components or include fewer components than the aforementioned components. In addition, the transceiver, the memory, and the processor may be implemented in a form of one chip.

The transceiver may transmit and receive a signal with a base station. Here, the signal may include control information and data. To this end, the transceiver may be configured with an RF transmitter that up-converts and amplifies a frequency of a transmitted signal, and an RF receiver that low-noise amplifies and down-converts a frequency of a received signal, and the like. However, this is only an embodiment of the transceiver, and components of the transceiver are not limited to the RF transmitter and the RF receiver.

In addition, the transceiver may receive a signal through a radio channel and output the same to the processor, and transmit a signal output from the processor through a radio channel.

The memory may store a program and data required for the operation of the terminal. In addition, the memory may store control information or data included in a signal transmitted and received by the terminal. The memory may be configured with a storage medium such as ROM, RAM, a hard disk, CD-ROM, and DVD, or a combination of storage media. In addition, there may be a plurality of memories.

In addition, the processor may control a series of processes so that the terminal can operate according to the aforementioned embodiments. For example, the processor may be configured to transmit a random access preamble and receive RAR in response to the random access preamble. In this case, the RAR may include a UL grant for scheduling PUSCH transmission. In addition, the processor may be configured to determine frequency domain resource allocation for the PUSCH transmission based on the UL grant, and transmit message 3 (Msg3) in a PUSCH based on the frequency domain resource allocation. In a case where the PUSCH transmission is scheduled in a UL frequency subband within downlink symbols, RB numbering starts from a first RB of the UL frequency subband, and a maximum number of RBs for the frequency domain resource allocation may be determined based on a number of RBs within an initial UL BWP. There may be a plurality of processors, and the processor may perform a component control operation of the terminal by executing a program stored in the memory.

FIG. 19 is a diagram illustrating a structure of a base station in a wireless communication system according to an embodiment of the present disclosure.

With reference to FIG. 19, the base station may include a transceiver referring to a base station receiver 1900 and a base station transmitter 1910, a memory (not illustrated), and a base station processor 1905 (or a base station controller or a processor). According to the aforementioned communication method of the base station, the transceiver 1900 and 1910, the memory, and the base station processor 1905 of the base station may operate. The base station processor 1905 (or a processor) may control an operation of the base station according to a combination of at least one embodiment as well as each of the aforementioned embodiments. However, components of the base station are not limited to the aforementioned example. For example, the base station may include more components or include fewer components than the aforementioned components. Furthermore, the transceiver, the memory, and the processor may be implemented in a form of one chip.

The transceiver may transmit and receive a signal with a terminal. Here, the signal may include control information and data. To this end, the transceiver may be configured with an RF transmitter that up-converts and amplifies a frequency of a transmitted signal, and an RF receiver that low-noise amplifies and down-converts a frequency of a received signal, and the like. However, this is only an embodiment of the transceiver, and components of the transceiver are not limited to the RF transmitter and the RF receiver.

In addition, the transceiver may receive a signal through a radio channel and output the same to the processor, and transmit a signal output from the processor through a radio channel.

The memory may store a program and data required for the operation of the base station. In addition, the memory may store control information or data included in a signal transmitted and received by the base station. The memory may be configured with a storage medium such as ROM, RAM, a hard disk, CD-ROM, and DVD, or a combination of storage media. In addition, there may be a plurality of memories.

The processor may control a series of processes so that the base station can operate according to the aforementioned embodiments of the present disclosure. For example, the processor may be configured to receive a random access preamble from a terminal, transmit RAR to the terminal in response to the random access preamble, and receive message 3 (Msg3) in a PUSCH from the terminal. In this case, the RAR includes a UL grant for scheduling PUSCH transmission, and frequency domain resource allocation for the PUSCH may be based on the UL grant. In a case where the PUSCH transmission is scheduled in a UL frequency subband within downlink symbols, RB numbering starts from a first RB of the UL frequency subband, and a maximum number of RBs for the frequency domain resource allocation may be determined based on a number of RBs within an initial UL BWP. There may be a plurality of processors, and the processor may perform a component control operation of the base station by executing a program stored in the memory.

Methods according to embodiments described in claims or specification of the present disclosure may be implemented in a form of hardware, software, or a combination of hardware and software.

In a case of being implemented as software, a computer-readable storage medium storing one or more programs (software modules) may be provided. One or more programs stored in the computer-readable storage medium are configured for execution by one or more processors in an electronic device. One or more programs include instructions causing an electronic device to execute methods according to embodiments described in claims or a specification of the present disclosure.

The programs (e.g., software modules or software) may be stored in random access memory, non-volatile memory including flash memory, read only memory (ROM), electrically erasable programmable read-only memory (EEPROM), a magnetic disc storage device, compact disc-ROM (CD-ROM), a digital versatile disc (DVD), another optical storage device, or a magnetic cassette. Alternatively, the programs may be stored in a memory including a combination of some or all of the above-described storage media. In addition, each of the memories may be provided in plural.

In addition, the programs may be stored in an attachable storage device accessible through any or a combination of communication networks such as the Internet, an intranet, a local area network (LAN), a wide LAN (WLAN), and a storage area network (SAN). Such a storage device may access, via an external port, a device that performs the embodiments of the present disclosure. Also, a separate storage device on a communication network may be connected to a device performing an embodiment of the present disclosure.

In the specific embodiments described above, a component or components included in the invention are expressed in a singular or plural form depending on the described embodiments. However, the singular or plural expression is appropriately selected for the situation proposed for the convenience of description, and the present disclosure is not limited by the singular or plural expression. Therefore, the components expressed with a plural term may be configured in a singular form, or the component expressed with a singular term may be configured in a plural form.

Meanwhile, the embodiments disclosed in the present specification and drawings are provided as specific examples merely for easily explaining the technical contents and helping understand the present disclosure, but not intended to limit the scope of the technology disclosed in the present disclosure. That is, it is obvious to those skilled in the art to which the present disclosure pertains that other modified embodiments may be carried out based on the technical spirit of the present disclosure. In addition, the above respective embodiments may be operated in combination with each other as necessary. For example, the base station and the UE may be operated in a manner that portions of an embodiment of the present disclosure are combined with portions of another embodiment of the present disclosure. For example, some parts of a first embodiment and a second embodiment of the present disclosure may be combined with each other to operate a base station and a terminal. In addition, although the embodiments were presented based on an FDD LTE system, other modifications based on the technical idea of the embodiments may be implementable in other systems such as a TDD LTE system, 5G, or NR system.

Meanwhile, in drawings explaining a method of the present invention, an order of description does not necessarily correspond to an order of execution, and a sequential relationship may be changed or such steps may be executed in parallel.

Alternatively, drawings explaining the method of the present invention may omit some components and include only some components within a range that does not harm the essence of the present invention.

In addition, the method of the present invention may be executed by some or all of the contents included in each embodiment being combined within the range that does not harm the essence of the invention.

## Claims

1. A method performed by a terminal in a wireless communication system, the method comprising:
transmitting a random access preamble;
receiving a random access response (RAR) in response to the random access preamble, wherein the RAR comprises an uplink (UL) grant for scheduling physical uplink shared channel (PUSCH) transmission;
determining frequency domain resource allocation for the PUSCH transmission based on the UL grant; and
transmitting a message 3 (Msg3) in a PUSCH based on the frequency domain resource allocation,
wherein, in case that the PUSCH transmission is scheduled in a UL frequency subband within downlink symbols, resource block (RB) numbering starts from a first RB of the UL frequency subband, and a maximum number of RBs for the frequency domain resource allocation is determined based on a number of RBs within an initial UL bandwidth part (BWP).

2. The method of claim 1, wherein the maximum number of RBs for the frequency domain resource allocation is the same as the number of RBs within the initial UL BWP.

3. The method of claim 1, further comprising:
identifying that frequency hopping is applied to the PUSCH transmission,
wherein a frequency offset for a second hop of the frequency hopping is determined based on a number of RBs within the UL frequency subband.

4. The method of claim 1, wherein hopping bits associated with the frequency hopping are determined based on the number of RBs within the initial UL BWP.

5. A method performed by a base station in a wireless communication system, the method comprising:
receiving, from a terminal, a random access preamble;
transmitting, to the terminal, a random access response (RAR) in response to the random access preamble, wherein the RAR comprises an uplink (UL) grant for scheduling physical uplink shared channel (PUSCH) transmission; and
receiving, from the terminal, a message 3 (Msg3) in a PUSCH,
wherein frequency domain resource allocation for the PUSCH is based on the UL grant, and
wherein, in case that the PUSCH transmission is scheduled in a UL frequency subband within downlink symbols, resource block (RB) numbering starts from a first RB of the UL frequency subband, and a maximum number of RBs for the frequency domain resource allocation is determined based on a number of RBs within an initial UL bandwidth part (BWP).

6. The method of claim 5, wherein the maximum number of RBs for the frequency domain resource allocation is the same as the number of RBs within the initial UL BWP.

7. The method of claim 5, further comprising:
configuring a value of a frequency hopping flag included in the UL grant to indicate that frequency hopping is applied to the PUSCH transmission,
wherein a frequency offset for a second hop of the frequency hopping is determined based on a number of RBs within the UL frequency subband.

8. The method of claim 5, wherein hopping bits associated with the frequency hopping are determined based on the number of RBs within the initial UL BWP.

9. A terminal in a wireless communication system, the terminal comprising:
a transceiver; and
a processor operatably connected to the transceiver,
wherein the processor is configured to:
transmit a random access preamble;
receive a random access response (RAR) in response to the random access preamble, wherein the RAR comprises an uplink (UL) grant for scheduling physical uplink shared channel (PUSCH) transmission;
determine frequency domain resource allocation for the PUSCH transmission based on the UL grant; and
transmit a message 3 (Msg3) in a PUSCH based on the frequency domain resource allocation,
wherein, in case that the PUSCH transmission is scheduled in a UL frequency subband within downlink symbols, resource block (RB) numbering starts from a first RB of the UL frequency subband, and a maximum number of RBs for the frequency domain resource allocation is determined based on a number of RBs within an initial UL bandwidth part (BWP).

10. The terminal of claim 9, wherein the maximum number of RBs for the frequency domain resource allocation is the same as the number of RBs within the initial UL BWP.

11. The terminal of claim 9, wherein the processor is further configured to identify that frequency hopping is applied to the PUSCH transmission, and
wherein a frequency offset for a second hop of the frequency hopping is determined based on a number of RBs within the UL frequency subband.

12. The terminal of claim 9, wherein hopping bits associated with the frequency hopping are determined based on the number of RBs within the initial UL BWP.

13. A base station in a wireless communication system, the base station comprising:
a transceiver; and
a processor operatably connected to the transceiver,
wherein the processor is configured to:
receive, from a terminal, a random access preamble;
transmit, to the terminal, a random access response (RAR) in response to the random access preamble, wherein the RAR comprises an uplink (UL) grant for scheduling physical uplink shared channel (PUSCH) transmission; and
receive, from the terminal, a message 3 (Msg3) in a PUSCH,
wherein frequency domain resource allocation for the PUSCH is based on the UL grant, and
wherein, in case that the PUSCH transmission is scheduled in a UL frequency subband within downlink symbols, resource block (RB) numbering starts from a first RB of the UL frequency subband, and a maximum number of RBs for the frequency domain resource allocation is determined based on a number of RBs within an initial UL bandwidth part (BWP).

14. The base station of claim 13, wherein the maximum number of RBs for the frequency domain resource allocation is the same as the number of RBs within the initial UL BWP.

15. The base station of claim 13, wherein the processor is further configured to configure a value of a frequency hopping flag included in the UL grant to indicate that frequency hopping is applied to the PUSCH transmission,
wherein a frequency offset for a second hop of the frequency hopping is determined based on a number of RBs within the UL frequency subband, and
wherein hopping bits associated with the frequency hopping are determined based on the number of RBs within the initial UL BWP.
